# EUROPEAN PATENT APPLICATION

(11) **EP 4 772 964 A1**
(43) Date of publication of application: **08.07.2026**
(21) Application number: 25750531.3
(22) Date of filing: 01.08.2025
(51) Int. Cl.: G06F 1/16, H05K 5/02, F16C 11/04, H04M 1/02

(54) **FOLDABLE DEVICE INCLUDING ASYMMETRIC HINGE STRUCTURE**

(30) Priority: 18.11.2024 KR 20240164403; 16.12.2024 KR 20240187745
(71) Applicant: SAMSUNG ELECTRONICS CO., LTD., Yeongtong-gu Suwon-si, Gyeonggi-do 16677 (KR)
(72) Inventor: SONG, Minsuk, Suwon-si, Gyeonggi-do 16677 (KR); SHIN, Wonho, Suwon-si, Gyeonggi-do 16677 (KR); KIM, Jihoon, Suwon-si, Gyeonggi-do 16677 (KR); JUNG, Soli, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); JUN, Jaeyoung, Suwon-si, Gyeonggi-do 16677 (KR); CHOI, Jinug, Suwon-si, Gyeonggi-do 16677 (KR)
(74) Representative: Nederlandsch Octrooibureau
(86) International application number: PCT/KR2025/011547
(87) International publication number: WO 2026/106030

(57) **Abstract**

An electronic device includes a first housing part, a second housing part thinner than the first housing part, an asymmetric hinge structure rotatably connecting the second housing part to the first housing part, and a display disposed on the first housing part, the asymmetric hinge structure, and the second housing part. In a folded state of the first housing part and the second housing part, a portion of the display has an asymmetrical droplet shape that is more convex in a direction of the first housing part than a direction of the second housing part.

## Description

### [Technical Field]

The present disclosure relates to foldable electronic devices. In particular, foldable devices including an asymmetric hinge structure.

### [Background Art]

A conventional foldable electronic device may include housing parts and a flexible display supported by the housing parts. The housing parts may be rotatably coupled to each other through a symmetric hinge structure and a flexible display supported by the housing parts. The housing parts may be folded or unfolded to each other through rotation of the hinge structure. The flexible display may be deformed according to a folded state of the housing parts.

The above-described information may be provided as a related art for the purpose of helping understanding of the present disclosure. No argument or decision is made as to whether any of the above description may be applied as a prior art related to the present disclosure.

### [Disclosure]

### [Technical Solution]

Symmetric hinge structures present limitations when attempting to reduce the overall thickness of foldable devices. In order to reduce a total thickness of an electronic device it may be necessary to reduce a thickness of each of the one or more housing parts. However, since each hinge structure of the symmetric hinge structure has a symmetrical structure, it may be difficult to reduce a size of a component such as gears essential for hinge linkage. These design constraints limit the miniaturization potential of foldable devices and may compromise the user experience by creating unnecessarily thick folded configurations.

The present disclosure addresses the limitations by providing a foldable electronic device with an asymmetric hinge structure that enables one housing part to be thinner than another while maintaining reliable folding functionality and optimal display performance.

An electronic device may comprise a first housing part, a second housing part having a thickness thinner than a thickness of the first housing part, and a display disposed on the first housing part and the second housing part. The hinge structure may include a bracket positioned at a center of the hinge structure, a first hinge part connected to a side of the bracket and the first housing part, and a second hinge part connected to another side of the bracket and the second housing part. The first hinge part and the second hinge part may have an asymmetrical structure with respect to each other, and a rotation radius of the first hinge part may be different than a rotation radius of the second hinge part. In a state in which the first housing part and the second housing part are folded, the display may have an asymmetrical shape in left and right sides with respect to the bracket.

Additionally, a foldable electronic device may comprise a first housing part, a second housing part having a thickness thinner than the first housing part, a second housing part having a thickness thinner than the first housing part, a hinge assembly mutually rotatably connecting the first housing part and the second housing part, a hinge housing configured to cover at least a portion of the hinge assembly, and a flexible display disposed on the first housing part and the second housing part. The hinge assembly may comprise a first base fixed to at least a portion of the hinge housing, a first rotating arm, an end portion of which is rotatably coupled to a first portion of the first base and another end portion of which is rotatably coupled to at least a portion of the first housing part, a second rotating arm, an end portion of which is rotatably coupled to a second portion of the first base and another end portion of which is fixedly coupled to at least a portion of the second housing part, a second base fixed to at least another portion of the hinge housing, a first spiral arm, an end portion of which is rotatably coupled to a third portion of the second base and another end portion of which is rotatably coupled to at least another portion of the first housing part, a second spiral arm, an end portion of which is rotatably coupled to a fourth portion of the second base and another end portion of which is fixedly connected to at least another portion of the second housing part, and a spiral slider, at least partially coupled to the first spiral arm and the second spiral arm, configured to move along a guide rail included in the second base while the foldable electronic device is unfolded.

The asymmetric design allows for reduced overall device thickness while providing enhanced structural integrity and improved display deformation characteristics during folding operations.

### [Description of the Drawings]

FIG. 1 illustrates an electronic device in an unfolded state.
FIG. 2 illustrates an electronic device in a state in which a first housing part and a second housing part are folded.
FIGS. 3A and 3B illustrate an electronic device in a folded state.
FIG. 3C illustrates an electronic device in a folded state.
FIG. 4A is a perspective view of an electronic device.
FIG. 4B is a plan view of an electronic device.
FIG. 4C is a diagram illustrating a first hinge structure.
FIG. 5A is a perspective view illustrating a hinge module.
FIG. 5B is an exploded view of an electronic device.
FIG. 6A illustrates a hinge module.
FIG. 6B illustrates rotation axes of a first rotating arm and a first link of a hinge module.
FIG. 6C illustrates rotation axes of a first spiral arm and a second link of a hinge module.
FIG. 6D illustrates rotation axes of a hinge module.
FIG. 6E is a conceptual diagram illustrating a multi-link mechanism for a first housing part of a hinge module.
FIG. 6F is a conceptual diagram illustrating a link mechanism for a second housing part of a hinge module.
FIGS. 7A, 7B, 7C, 7D, and 7E illustrate a first rotating arm of a hinge module.
FIGS. 8A, 8B, and 8C illustrate a first link of a hinge module.
FIGS. 9A, 9B, 9C, 9D, and 9E illustrate a first base of a hinge module.
FIGS. 10A, 10B, 10C, 10D, and 10E illustrate a first part of a first spiral arm of a hinge module.
FIGS. 11A, 11B, 11C, 11D, and 11E illustrate a first part of a first spiral arm of a hinge module.
FIGS. 12A, 12B, and 12C illustrate a second link of a hinge module.
FIGS. 13A, 13B, 13C, and 13D illustrate a second base and a bar of a hinge module.
FIGS. 14A, 14B, and 14C are diagrams illustrating an operation of a left hinge of a hinge module.
FIGS. 15A and 15B illustrate an operation of a hinge module.
FIGS. 16A, 16B, 16C, and 16D illustrate a second rotating arm of a hinge module.
FIGS. 17A, 17B, 17C, 17D, and 17E illustrate a first part of a first spiral arm of a hinge module.
FIGS. 18A, 18B, 18C, 18D, and 18E illustrate a first part of a first spiral arm of a hinge module.
FIGS. 19A, 19B, and 19C illustrate a hinge housing of a hinge module.
FIG. 20A illustrates an electronic device in an unfolded state.
FIGS. 20B and 20C illustrate an electronic device in a single folded state or a multi-folded state.
FIG. 21 is a diagram illustrating an asymmetric spiral linkage structure.
FIGS. 22A and 22B illustrate a spiral slider of a hinge module.
FIG. 22C illustrates a hinge module.
FIG. 23A illustrates a spiral slider accommodated in a hinge housing.
FIG. 23B is a cross-sectional view cut along line 23B-23B' of FIG. 23A.
FIGS. 24A, 24B, 24C, 24D, and 24E are diagrams illustrating an operation of a hinge module.
FIGS. 25A, 25B, 25C, 25D, and 25E illustrate states of an electronic device according to positions of a hinge module.
FIGS. 26A, 26B, 26C, 26D, and 26E are diagrams illustrating an operation of a hinge module.
FIG. 27A is a perspective view illustrating a hinge module.
FIGS. 27B, 27C, and 27D are cross-sectional views of a hinge module illustrating a first rotating arm and a second rotating arm.
FIGS. 27E, 27F, and 27G are cross-sectional views of a hinge module illustrating a first spiral arm and a second spiral arm.
FIGS. 28A and 28B illustrate a shape of a display according to a state of an electronic device.
FIG. 29 illustrates a hinge module.
FIGS. 30A and 30B illustrate a hinge housing of an electronic device.
FIGS. 31A and 31B illustrate a supporting structure and a foreign matter prevention structure of a housing of an electronic device.
FIG. 32 is a block diagram of an electronic device in a network environment according to various embodiments.

### [Mode for Invention]

In the drawings, the same reference numeral may be assigned to the same or similar configuration. A description of a configuration having the same reference numeral may be applied in the same or corresponding manner, unless otherwise specifically stated, even with reference to different drawings, and an overlapping description for configurations having the same reference numerals may not be repeated. In a description referring to a specific drawing below, a reference numeral of another drawing may be referenced.

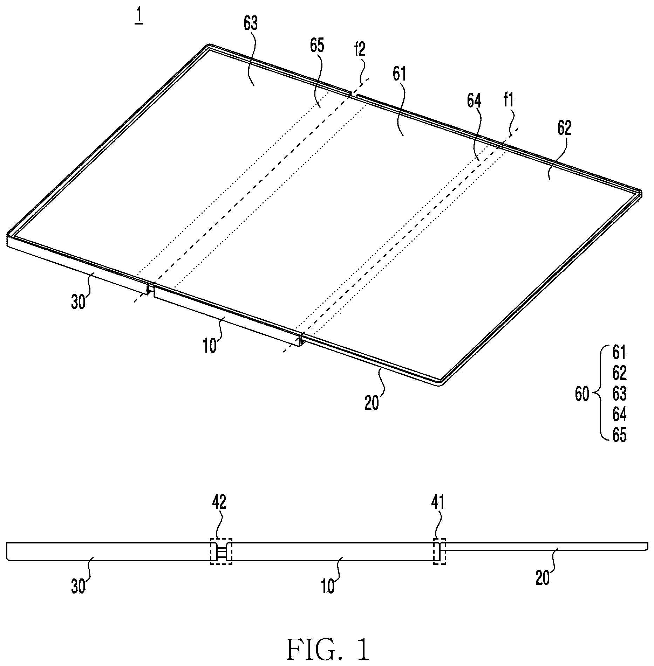

FIG. 1 illustrates an electronic device in an unfolded state.

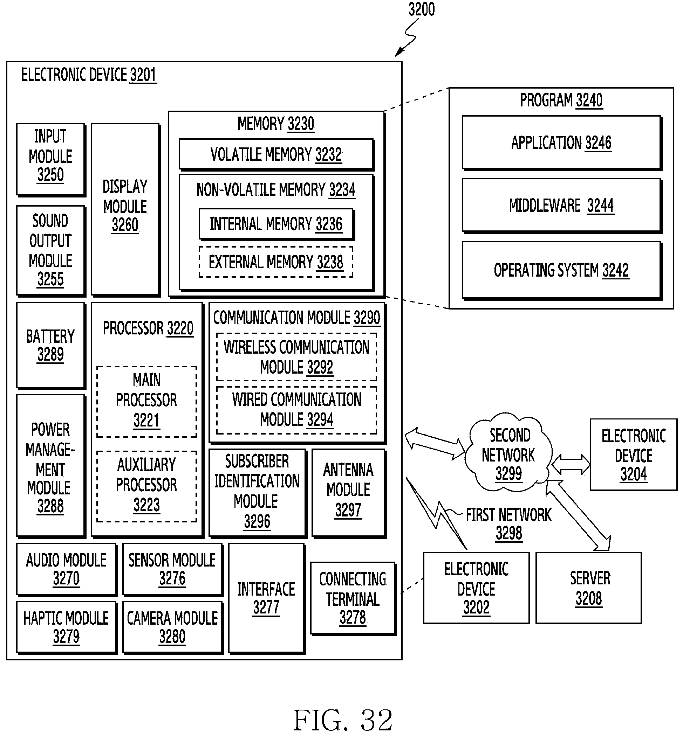

Referring to FIG. 1, an electronic device 1 (e.g., an electronic device 3201 of FIG. 32) may include a deformable housing. For example, the electronic device 1 may include a housing that may be folded or unfolded. For example, the housing of the electronic device 1 may include a first housing part 10 and a second housing part 20 that may be folded with respect to the first housing part 10. For example, the second housing part 20 may be folded with respect to the first housing part 10 centered on a first folding axis f1. For example, the housing of the electronic device 1 may further include a third housing part 30 that may be folded with respect to the first housing part 10. For example, the third housing part 30 may be folded with respect to the first housing part 10 centered on a second folding axis f2. The electronic device 1 may be referred to as a foldable electronic device or a multi-foldable electronic device.

In an embodiment, the electronic device 1 may include a display that is deformable into a shape corresponding to a shape of the housing. For example, the electronic device 1 may include a display 60. The display 60 may include, for example, a flexible display.

As illustrated in FIG. 1, the first housing part 10, the second housing part 20, and the third housing part 30 may be unfolded with respect to each other. For example, the first housing part 10, the second housing part 20, and the third housing part 30 may be substantially parallel to each other and may be placed on substantially the same plane. In a state in which the first housing part 10, the second housing part 20, and the third housing part 30 are unfolded, the first housing part 10, the second housing part 20, the third housing part 30, and the display 60 may define (and/or form) at least a portion of an exterior of the electronic device 1. A state of the electronic device 1 illustrated in FIG. 1 may be referred to as an unfolded state or a fully unfolded state of the electronic device 1.

The second housing part 20 may be rotatably coupled to the first housing part 10. For example, the second housing part 20 may be rotatably coupled to a first side portion of the first housing part 10. For example, a side portion of the second housing part 20 may be rotatably coupled to the first side portion of the first housing part 10. For example, the second housing part 20 may be rotatably coupled to the first housing part 10 through a first hinge structure 41. For example, the first housing part 10 and the second housing part 20 may be folded or unfolded centered on the first folding axis f1 through the first hinge structure 41.

The third housing part 30 may be rotatably coupled to the first housing part 10. For example, the third housing part 30 may be rotatably coupled to a second side portion (e.g., opposite to the first side portion of the first housing part 10) of the first housing part 10. For example, a side portion of the third housing part 30 may be rotatably coupled to the second side portion of the first housing part 10. For example, the third housing part 30 may be rotatably coupled to the first housing part 10 through a second hinge structure 42. For example, the first housing part 10 and the third housing part 30 may be folded or unfolded centered on a second folding axis f2 through the second hinge structure 42. The second folding axis f2 may be parallel to the first folding axis f1.

The display 60 may be disposed on the first housing part 10, the second housing part 20, and the third housing part 30. For example, the display 60 may be disposed across the first housing part 10, the second housing part 20, and the third housing part 30.

The display 60 may include a first portion 61, a second portion 62, a third portion 63, a fourth portion 64, and a fifth portion 65. The first portion 61 of the display 60 may be disposed on the first housing part 10. The first portion 61 of the display 60 may be at least partially supported by the first housing part 10. The second portion 62 of the display 60 may be disposed on the second housing part 20. The second portion 62 of the display 60 may be at least partially supported by the second housing part 20. The third portion 63 of the display 60 may be disposed on the third housing part 30. The third portion 63 of the display 60 may be at least partially supported by the third housing part 30.

The fourth portion 64 of the display 60 may be disposed between the first portion 61 and the second portion 62 of the display 60. For example, the fourth portion 64 of the display 60 may extend from a side of the first portion 61 of the display 60 to the second portion 62. For example, the fourth portion 64 of the display 60 may connect the first portion 61 and the second portion 62 of the display 60.

At least a portion of the fourth portion 64 of the display 60 may be supported by the first hinge structure 41 rotatably connecting the first housing part 10 and the second housing part 20 in an unfolded state of the first housing part 10 and the second housing part 20. For example, the fourth portion 64 of the display 60 may include a first area supported by the first hinge structure 41 in the unfolded state of the first housing part 10 and the second housing part 20. For example, in the unfolded state of the first housing part 10 and the second housing part 20, the fourth portion 64 of the display 60 may further include a second area disposed on the first housing part 10 and/or a third area disposed on the second housing part 20.

In the unfolded state of the first housing part 10 and the second housing part 20, the first portion 61, the fourth portion 64, and the second portion 62 of the display 60 may be substantially parallel to each other and may be placed on substantially the same plane. For example, in the unfolded state of the first housing part 10 and the second housing part 20, the first portion 61, the fourth portion 64, and the second portion 62 of the display 60 may form one area that is substantially flat.

The fifth portion 65 of the display 60 may be disposed between the first portion 61 and the third portion 63 of the display 60. For example, the fifth portion 65 of the display 60 may extend from another side of the first portion 61 (e.g., opposite to the side of the first portion 61) of the display 60 to the third portion 63. For example, the fifth portion 65 of the display 60 may connect the first portion 61 and the third portion 63 of the display 60.

At least a portion of the fifth portion 65 of the display 60 may be supported by the second hinge structure 42 rotatably connecting the first housing part 10 and the third housing part 30 in an unfolded state of the first housing part 10 and the third housing part 30. For example, the fifth portion 65 of the display 60 may include a first area supported by the second hinge structure 42 in the unfolded state of the first housing part 10 and the third housing part 30. For example, in the unfolded state of the first housing part 10 and the third housing part 30, the fifth portion 65 of the display 60 may further include a second area disposed on the first housing part 10 and/or a third area disposed on the third housing part 30.

In the unfolded state of the first housing part 10 and the third housing part 30, the first portion 61, the fifth portion 65, and the third portion 63 of the display 60 may be substantially parallel to each other and may be placed on substantially the same plane. For example, in the unfolded state of the first housing part 10 and the second housing part 20, the first portion 61, the fourth portion 64, and the second portion 62 of the display 60 may form one area that is substantially flat.

In an unfolded state of the first housing part 10, the second housing part 20, and the third housing part 30, the portions 61, 62, 63, 64 and 65 of the display 60 may be substantially parallel to each other and may be placed on substantially the same plane. In the unfolded state of the first housing part 10, the second housing part 20, and the third housing part 30, the portions 61, 62, 63, 64 and 65 of the display 60 may form one area that is substantially flat.

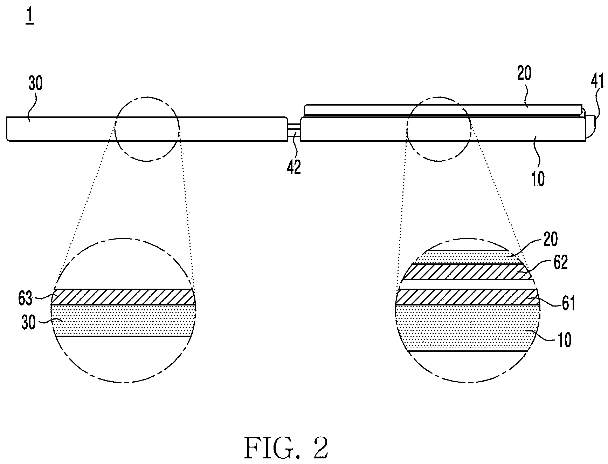

FIG. 2 illustrates an electronic device in a state in which a first housing part and a second housing part are folded.

Referring to FIG. 2, a second housing part 20 may be folded with respect to a first housing part 10, and a third housing part 30 may be unfolded with respect to the first housing part 10. A state of an electronic device 1 illustrated in FIG. 2 may be referred to as a single-folded state.

In a folded state (e.g., the single folded state and a multi-folded state to be described later) of the first housing part 10 and the second housing part 20, a first portion 61 and a second portion 62 of a display 60 may face each other. For example, in the folded state (e.g., the single folded state and the multi-folded state to be described later) of the first housing part 10 and the second housing part 20, the first portion 61 of the display 60 may face a direction of the second housing part 20, and the second portion 62 of the display 60 may face a direction of the first housing part 10. Although not illustrated, in the folded state (e.g., the single folded state and the multi-folded state to be described later) of the first housing part 10 and the second housing part 20, a fourth portion 64 connecting the first portion 61 and the second portion 62 of the display 60 may be bent. For example, the fourth portion 64 of the display 60 may be deformed by rotation of the second housing part 20 with respect to the first housing part 10. For example, when an unfolded state of the first housing part 10 and the second housing part 20 is switched to the folded state of the first housing part 10 and the second housing part 20, the fourth portion 64 of the display 60 may be deformed from a substantially flat shape to a bent shape.

The first portion 61 and the second portion 62 around the fourth portion 64 of the display 60 may be substantially flat. For example, the first portion 61 of the display 60 may be substantially flat regardless of rotation of the first housing part 10 with respect to the second housing part 20. For example, the second portion 62 of the display 60 may be substantially flat regardless of the rotation of the second housing part 20 with respect to the first housing part 10.

In an unfolded state (e.g., the unfolded state and the single folded state) of the first housing part 10 and the third housing part 30, the first portion 61 and a third portion 63 of the display 60 may face substantially the same direction. In the single folded state, the first portion 61 of the display 60 may not be exposed to the outside of the electronic device 1 by being covered by the second housing part 20, and the third portion 63 of the display 60 may be exposed to the outside of the electronic device 1.

Although not illustrated, a fifth portion 65 connecting the first portion 61 and the third portion 63 of the display 60 may be substantially flat in the unfolded state (e.g., the unfolded state and the single folded state) of the first housing part 10 and the third housing part 30.

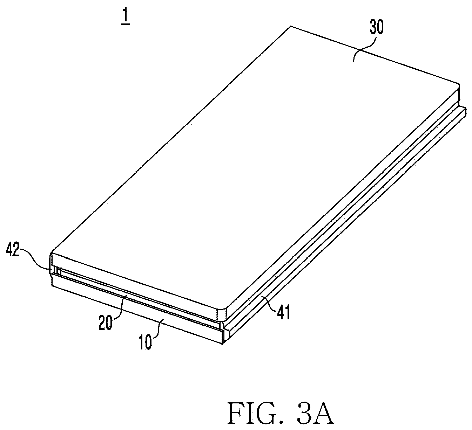

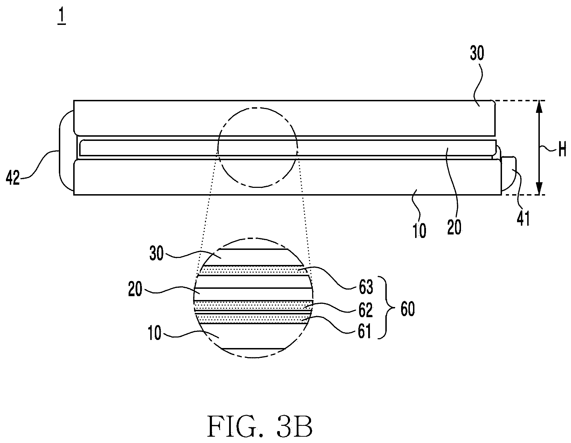

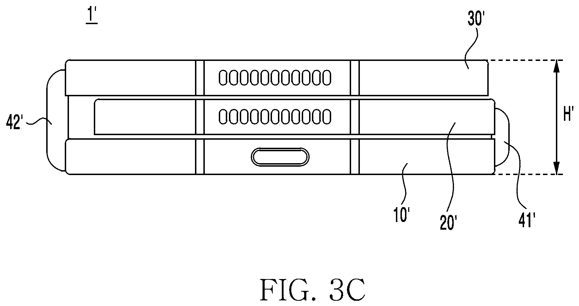

FIGS. 3A and 3B illustrate an electronic device in a folded state. FIG. 3C illustrates an electronic device in a folded state according to a comparative example.

Referring to FIGS. 3A and 3B, a second housing part 20 may be folded with respect to a first housing part 10, and a third housing part 30 may be folded with respect to the first housing part 10 so that the second housing part 20 is positioned between the first housing part 10 and the third housing part 30. A state of an electronic device 1 illustrated in FIG. 3 may be referred to as a folded state, a fully folded state, or a multi-folded state of the electronic device 1.

The first housing part 10 and the second housing part 20 in the multi-folded state may be the same as the first housing part 10 and the second housing part 20 in the single folded state.

Referring to FIG. 3B, in the multi-folded state, the third housing part 30 may be positioned on (and/or above) the second housing part 20. For example, in the multi-folded state, the third housing part 30 may be positioned on (and/or above) a rear surface (e.g., a surface of the second housing part 20 opposite to a surface on which a second portion 62 of a display 60 is disposed) of the second housing part 20. For example, in the multi-folded state, a third portion 63 of the display 60 disposed in the third housing part 30 may face the second housing part 20 (e.g., the rear surface of the second housing part 20).

Although not illustrated, in a folded state (e.g., the multi-folded state) of the first housing part 10 and the third housing part 30, a fifth portion 65 connecting a first portion 61 and a third portion 63 of the display 60 may be bent. For example, the fifth portion 65 of the display 60 may be deformed by rotation of the third housing part 30 with respect to the first housing part 10. For example, when an unfolded state (e.g., the unfolded state or the single folded state) of the first housing part 10 and the third housing part 30 is switched to the folded state (e.g., the multi-folded state) of the first housing part 10 and the third housing part 30, the fifth portion 65 of the display 60 may be deformed from a substantially flat shape to a bent shape. Although not illustrated, a degree to which the fifth portion 65 of the display 60 is bent in the multi-folded state may be less than a degree to which a fourth portion 64 of the display 60 is bent in the single folded state.

The first portion 61 and the third portion 63 around the fifth portion 65 of the display 60 may be substantially flat. For example, the first portion 61 of the display 60 may be substantially flat regardless of rotation of the first housing part 10 with respect to the third housing part 30. For example, the third portion 63 of the display 60 may be substantially flat regardless of the rotation of the third housing part 30 with respect to the first housing part 10.

Alternatively, the third housing part 30 may rotate with respect to the first housing part 10, so that the first housing part 10 is positioned between the second housing part 20 and the third housing part 30 in the multi-folded state. For example, the third housing part 30 may be configured to rotate clockwise with respect to the first housing part 10 to be positioned below the first housing part 10, as opposed to rotating counterclockwise with respect to the first housing part 10 so that the third housing part 30 is positioned on the second housing part 20 with respect to FIG. 3B.

In an embodiment, the second housing part 20 may be thinner than the first housing part 10. The second housing part 20 may be thinner than the third housing part 30. As a non-limiting example, a thickness of the first housing part 10 may be substantially the same as a thickness of the second housing part 20.

In a comparative example, referring to FIG. 3C, a thickness of a second housing part 20' and a thickness of a third housing part 30' of an electronic device 1' may be substantially the same as a thickness of a first housing part 10'. In order to reduce an total thickness H' of the electronic device 1', in a folded state of the first housing part 10', the second housing part 20', and the third housing part 30', it may be necessary to reduce a thickness of each of one or more housing parts among the housing parts 10', 20', and 30'. However, since each of a first hinge structure 41' and a second hinge structure 42' have a symmetrical structure, it may be difficult to reduce a size of a component such as gears for hinge linkage. Accordingly, it may be difficult to reduce the thicknesses of the first housing part 10' and the second housing part 20' connected to each other through the first hinge structure 41'. In addition, it may be difficult to reduce the thicknesses of the first housing part 10' and the third housing part 30' connected to each other through the second hinge structure 42'. Accordingly, it may also be difficult to reduce the total thickness H' of the electronic device 1'.

Referring to FIGS. 3A and 3B, the thickness of the second housing part 20 of the electronic device 1 according to an embodiment may be smaller than the thickness of the second housing part 20' of the electronic device 1' of the comparative example. Accordingly, in the multi-folded state, a thickness H of the electronic device 1 may be smaller than the thickness H' of the electronic device 1' without compromising functionality.

In order for the second housing part 20 to have a thickness thinner than the first housing part 10, a first hinge structure 41 that rotatably connects the first housing part 10 and the second housing part 20 may include a structure different from the hinge structure 41' that symmetrically connects the first housing part 10' and the second housing part 20' of the electronic device 1' of the comparative example.

Hereinafter, the first hinge structure 41 that rotatably connects the first housing part 10 and the second housing part 20 having the thickness thinner than the first housing part 10 will be described in detail.

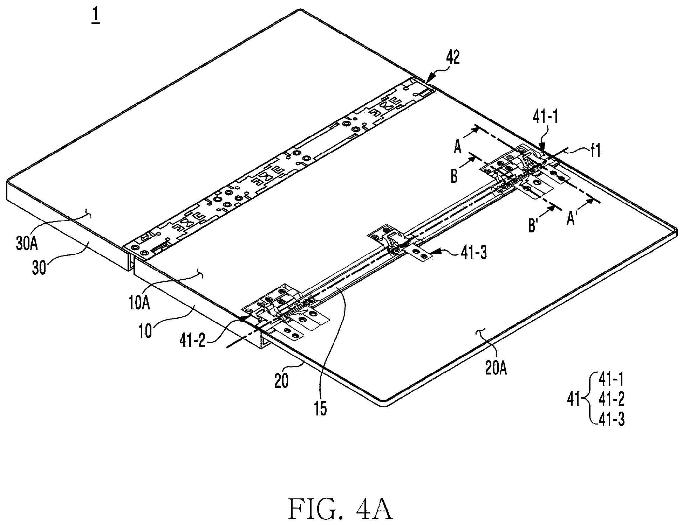

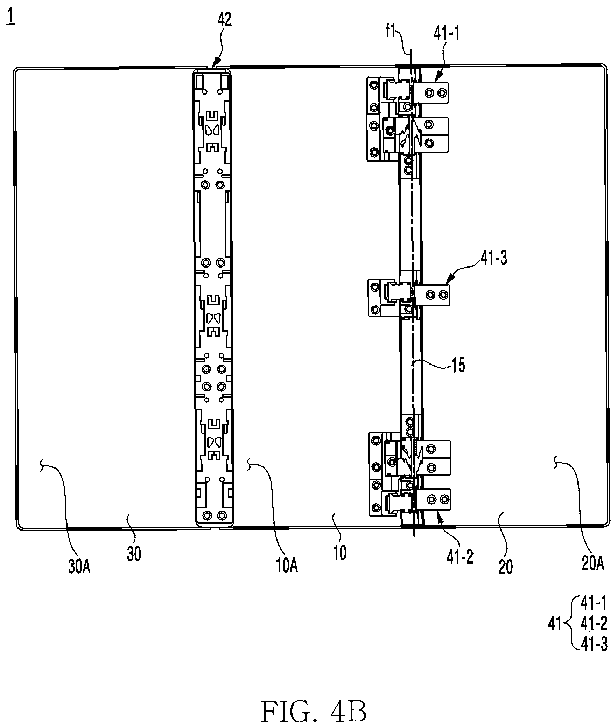

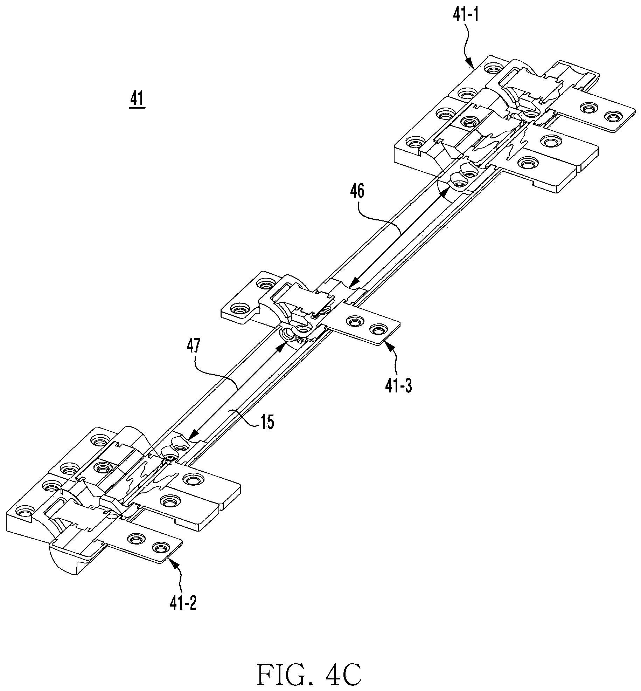

FIG. 4A is a perspective view of an electronic device. FIG. 4B is a plan view of an electronic device. FIG. 4C is a diagram illustrating a first hinge structure. FIGS. 4A and 4B may illustrate an electronic device 1 in the unfolded state in which a display 60 is omitted.

Referring to FIGS. 4A and 4B, a first hinge structure 41 of the electronic device 1 may include one or more hinge modules and a hinge housing 15 in which the one or more hinge modules are accommodated. For example, the first hinge structure 41 may include a first hinge module 41-1, a second hinge module 41-2, and a third hinge module 41-3, which are respectively accommodated in the hinge housing 15. Each of the first hinge module 41-1, the second hinge module 41-2, and the third hinge module 41-3 may rotatably connect a first housing part 10 and a second housing part 20. Each of the first hinge module 41-1, the second hinge module 41-2, and the third hinge module 41-3 may be referred to as a hinge structure or a hinge assembly.

In an embodiment, the hinge housing 15 may extend along a direction parallel to a first folding axis f1 between the first housing part 10 and the second housing part 20. The first hinge module 41-1, the second hinge module 41-2, and the third hinge module 41-3 may be aligned along the direction parallel to the first folding axis f1.

In an embodiment, according to a state of the electronic device 1, at least a portion of the hinge housing 15 may be exposed to the outside of the electronic device 1, or may not be exposed to the outside of the electronic device 1 by being covered by the first housing part 10 and the second housing part 20. For example, in the unfolded state, the at least a portion of the hinge housing 15 may not be exposed to the outside of the electronic device 1 by being covered by the first side portion of the first housing part 10 and the side portion of the second housing part 20. For example, in the single folded state or the multi-folded state, the at least a portion of the hinge housing 15 may be exposed to the outside of the electronic device 1. The hinge housing 15 may be understood to be included in the housing of the electronic device 1 in terms of the hinge housing 15 configuring a portion of an exterior of the electronic device 1 and/or included in the first hinge structure 41 in terms of the hinge housing 15 accommodating the hinge modules 41-1, 41-2, and 41-3.

The first housing part 10 may include a first seating surface 10A on which a first portion 61 of the display 60 is disposed. The second housing part 20 may include a second seating surface 20A on which a second portion 62 of the display 60 is disposed. The third housing part 30 may include a third seating surface 30A on which a third portion 63 of the display 60 is disposed.

Referring to FIG. 4C, in an embodiment, the third hinge module 41-3 may be positioned between the first hinge module 41-1 and the second hinge module 41-2. As a non-limiting example, the first hinge module 41-1 and the second hinge module 41-2 may be configured symmetrically centered on the third hinge module 41-3.

The first hinge module 41-1 may be spaced apart from the third hinge module 41-3, and accordingly, a space 46 between the first hinge module 41-1 and the third hinge module 41-3 may be defined. In the space 46, a component of the electronic device 1 may be at least partially disposed. For example, the electronic device 1 may include a first connection member for transmitting an electrical signal between the first housing part 10 and the second housing part 20, and the first connection member may include a portion positioned in the space 46 and crossing a portion of the hinge housing 15. As a non-limiting example, the first connection member may include a cable or a flexible printed circuit board.

The second hinge module 41-2 may be spaced apart from the third hinge module 41-3, and accordingly, a space 47 between the second hinge module 41-2 and the third hinge module 41-3 may be defined. In the space 47, another component of the electronic device 1 may be at least partially disposed. For example, the electronic device 1 may include a second connection member for transmitting an electrical signal between the first housing part 10 and the second housing part 20, and the second connection member may include a portion positioned in the space 47 and crossing another portion of the hinge housing 15. As a non-limiting example, the second connection member may include a cable or a flexible printed circuit board.

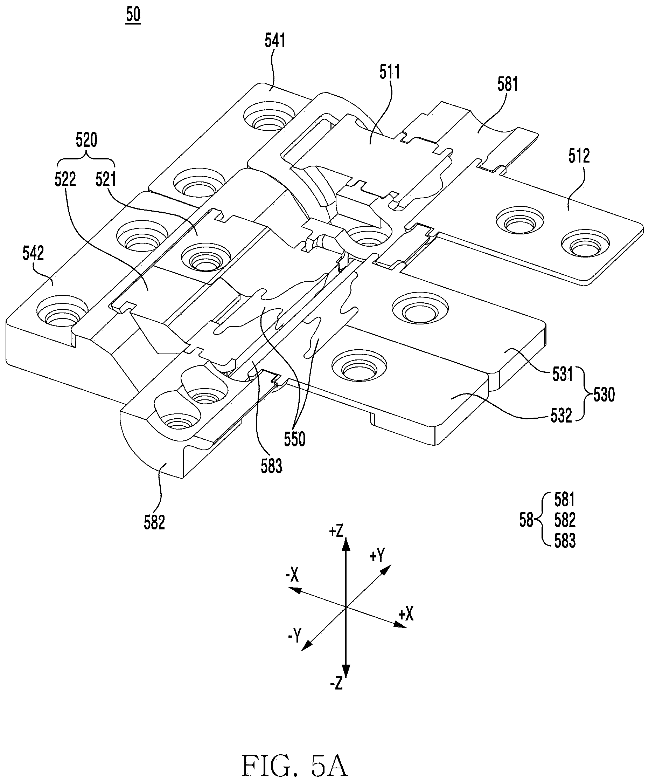

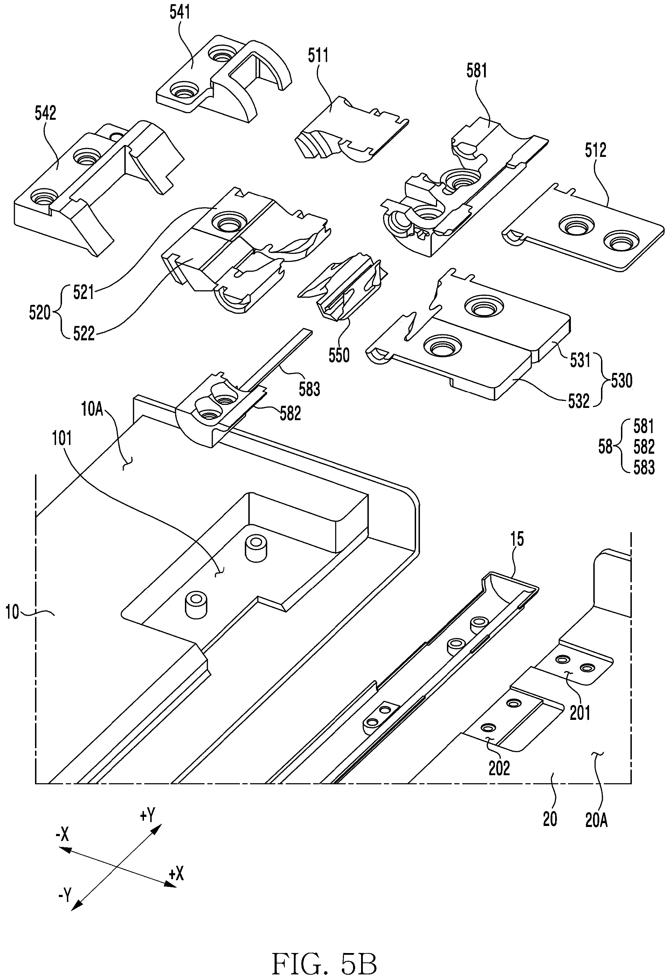

FIG. 5A is a perspective view illustrating a hinge module. FIG. 5B is an exploded view of an electronic device.

A hinge module 50 illustrated in FIGS. 5A and 5B may be an example of the first hinge module 41-1 or the second hinge module 41-2 of FIGS. 4A and 4B. A Y-axis illustrated in the drawings of the present disclosure may be parallel to the first folding axis f1 of FIGS. 4A and 4B. In the drawings of the present disclosure, an X-axis may be perpendicular to the first folding axis f1 of FIGS. 4A and 4B, and may be substantially parallel to a first portion 61, a second portion 62, and a fourth portion 64 of a display 60 in an unfolded state of a first housing part 10 and a second housing part 20. In the unfolded state of the first housing part 10 and the second housing part 20, the first housing part 10, the hinge module 50, and the second housing part 20 may be positioned in sequence along a +X direction. In the drawings of the present disclosure, a Z-axis may be substantially perpendicular to the first portion 61, the second portion 62, and the fourth portion 64 of the display 60 in the unfolded state of the first housing part 10 and the second housing part 20. In the unfolded state of the first housing part 10 and the second housing part 20, the hinge module 50 and the fourth portion 64 of the display 60 may be positioned in sequence along a +Z direction.

Referring to FIGS. 5A and 5B, the hinge module 50 may include a base assembly 58. The base assembly 58 may include a first base 581, a second base 582, and a bar 583 between the first base 581 and the second base 582. The bar 583 may extend parallel to the Y-axis. The bar 583 may connect the first base 581 to the second base 582. The bar 583 may be integrally formed with the first base 581 or the second base 582. In FIGS. 5A and 5B, an example in which the bar 583 is integrally formed with the second base 582 is illustrated. In this case, the bar 583 may extend from the second base 582 toward the first base 581 (e.g., in a +Y direction). An end portion of the bar 583 facing the first base 581 may be coupled to the first base 581. The base assembly 58 may be referred to as a bracket assembly. The first base 581 may be referred to as a first bracket, and the second base 582 may be referred to as a second bracket. The second base 582 including the bar 583 may be referred to as a base key.

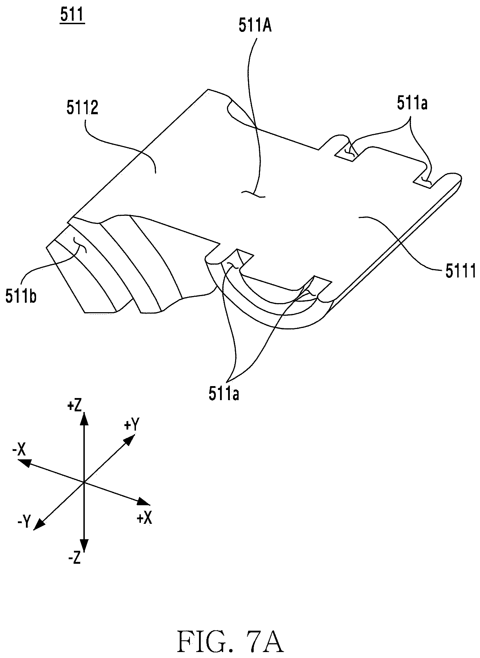

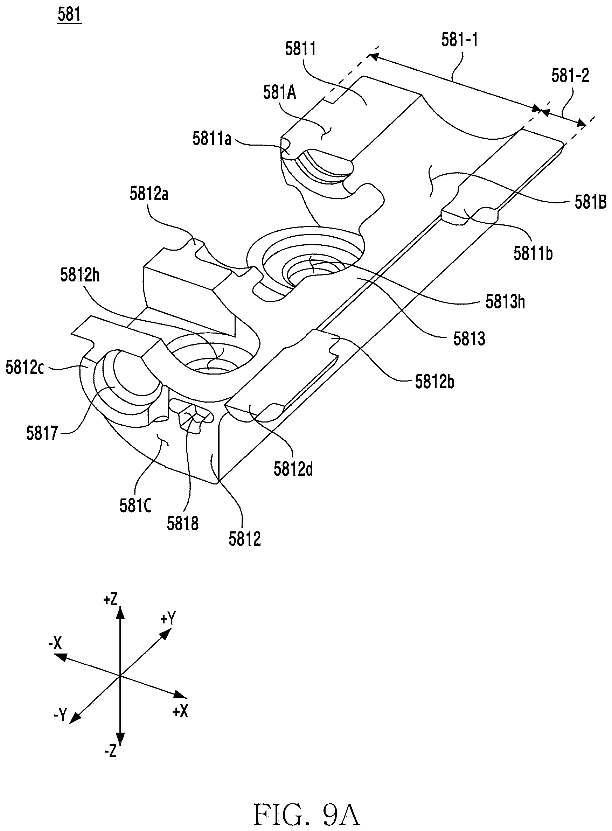

In an embodiment, the hinge module 50 may include a first rotating arm 511, a first link 541, and a second rotating arm 512. The first rotating arm 511 and the second rotating arm 512 may be rotatably coupled to both side portions of the base assembly 58, respectively. For example, a first end portion (e.g., a first end portion 5111 of FIG. 7A) of the first rotating arm 511 facing a direction (e.g., the +X direction) of the second rotating arm 512 may be rotatably coupled to a first side portion (e.g., a first side portion 581-1of FIG. 9A) of the first base 581, and a first end portion of the second rotating arm 512 facing a direction (e.g., a -X direction) of the first rotating arm 511 may be rotatably coupled to a second side portion (e.g., a second side portion 581-2 of FIG. 9A) of the first base 581 opposite to the first side portion of the first base 581. The first rotating arm 511 may be referred to as a wing plate. The first link 541 may be referred to as a wing rotate slider. The second rotating arm 512 may be referred to as a body rotate.

A second end portion (e.g., a second end portion 5112 of FIG. 7A) of the first rotating arm 511 opposite to the first end portion of the first rotating arm 511 may be rotatably coupled to the first link 541.

The hinge module 50 may include a first spiral arm 520, a second link 542, and a second spiral arm 530. Each of the first spiral arm 520 and the second spiral arm 530 may be rotatably coupled to both sides of the base assembly 58. The second link 542 may be referred to as a spiral arm slider.

In an embodiment, a first end portion of the first spiral arm 520 facing a direction (e.g., the +X direction) of the second spiral arm 530 may be rotatably coupled to the first side portion of the first base 581 and a first side portion of the second base 582. In an embodiment, the first spiral arm 520 may include a plurality of parts. For example, the first spiral arm 520 may include a first part 521 and a second part 522 assembled to the first part 521. Alternatively, the first part 521 and the second part 522 of the first spiral arm 520 may be integrally formed. For example, the first spiral arm 520 may include one part in which the first part 521 and the second part 522 are integrally formed.

The first end portion of the first spiral arm 520 described above may include first end portions of the first part 521 and the second part 522. For example, the first end portion of the first part 521 may be rotatably coupled to the first side portion of the first base 581, and the first end portion of the second part 522 may be rotatably coupled to the first side portion of the second base 582.

In an embodiment, a second end portion of the first spiral arm 520 opposite to the first end portion of the first spiral arm 520 may be rotatably coupled to the second link 542. For example, the second end portion of the first spiral arm 520 may include second end portions of the first part 521 and the second part 522. For example, the second end portion of the first part 521 may be rotatably coupled to a portion of the second link 542. For example, the second end portion of the second part 522 may be rotatably coupled to another portion of the second link 542.

In an embodiment, a first end portion of the second spiral arm 530 facing a direction (e.g., the -X direction) of the first spiral arm 520 may be rotatably coupled to the second side portion of the first base 581 and a second side portion of the second base 582. In an embodiment, the second spiral arm 530 may include a plurality of parts. For example, the second spiral arm 530 may include a first part 531 and a second part 532 assembled to the first part 531. The first end portion of the second spiral arm 530 described above may include first end portions of the first part 531 and the second part 532. For example, the first end portion of the first part 531 may be rotatably coupled to the second side portion of the first base 581, and the first end portion of the second part 532 may be rotatably coupled to the second side portion of the second base 582. The first part 531 and the second part 532 of the second spiral arm 530 may be referred to as a body rotate, respectively.

The hinge module 50 may include a spiral slider 550 slidably coupled to the bar 583. For example, the spiral slider 550 may be movable in the +Y direction and a -Y direction along the bar 583 or a guide rail formed on the bar 583.

The first end portion of the first spiral arm 520 and the first end portion of the second spiral arm 530 may be rotatably coupled to both sides of the spiral slider 550, respectively. As the first spiral arm 520 and the second spiral arm 530 rotate with respect to the spiral slider 550, the spiral slider 550 may slide along the bar 583. Accordingly, rotation of the first spiral arm 520 and rotation of the second spiral arm 530 may be linked. For example, the spiral slider 550 may move in a first direction (e.g., the +Y direction) by the rotation of the first spiral arm 520, and the second spiral arm 530 may rotate according to the movement of the spiral slider 550.

In an embodiment, the first rotating arm 511, the first spiral arm 520, the first link 541, and the second link 542 of the hinge module 50 may be referred to as a first hinge, a first hinge part, or a left hinge of the hinge module 50. In an embodiment, the second rotating arm 512 and the second spiral arm 530 of the hinge module 50 may be referred to as a second hinge, a second hinge part, or a right hinge of the hinge module 50.

Referring to FIG. 5B, the base assembly 58 of the hinge module 50 may be at least partially accommodated in the hinge housing 15 between the first housing part 10 and the second housing part 20. The base assembly 58 may be fixedly coupled to the hinge housing 15. For example, each of the first base 581 and the second base 582 may be fixedly coupled to the hinge housing 15.

In an embodiment, the first link 541 and the second link 542 may be accommodated in a recess 101 formed on a first seating surface 10A of the first housing part 10. The first link 541 and the second link 542 may be fixedly coupled to the first housing part 10.

A second end portion of the second rotating arm 512 and a second end portion of the second spiral arm 530 may be accommodated in one or more recesses formed on a second seating surface 20A of the second housing part 20.

For example, the second end portion of the second rotating arm 512 may be accommodated in a first recess 201 formed on the second seating surface 20A of the second housing part 20. The second end portion of the second rotating arm 512 accommodated in the first recess 201 may be fixedly coupled to the second housing part 20.

For example, the second end portion of the second spiral arm 530 may be accommodated in a second recess 202 formed on the second seating surface 20A of the second housing part 20. The second end portion of the second spiral arm 530 accommodated in the second recess 202 may be fixedly coupled to the second housing part 20. For example, the second end portion of the second spiral arm 530 may include second end portions of the first part 531 and the second part 532. The second end portions of the first part 531 and the second part 532 may be accommodated in the second recess 202 of the second housing part 20, and may be fixedly coupled to the second housing part 20, respectively.

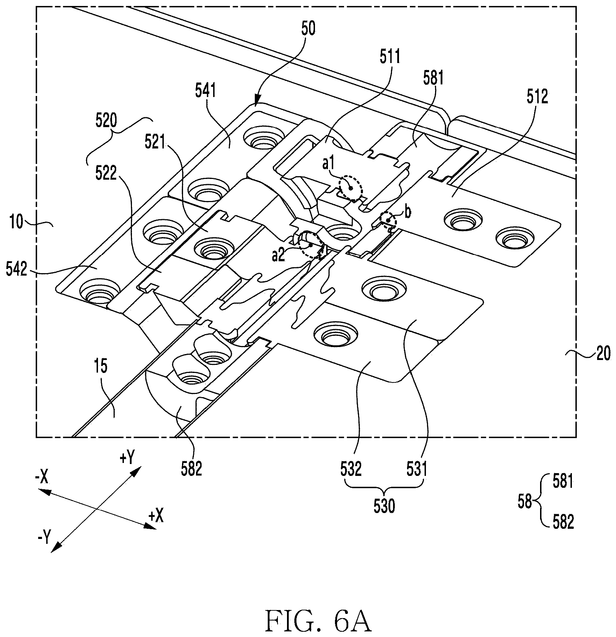

FIG. 6A illustrates a hinge module.

Referring to FIG. 6A, a first rotating arm 511 may rotate centered on a first axis a1 with respect to the first base 581. For example, the first rotating arm 511 may rotate centered on the first axis a1 with respect to the first side portion of the first base 581.

A first spiral arm 520 may rotate centered on a second axis a2 with respect to a base assembly 58. For example, the first spiral arm 520 may rotate centered on the second axis a2 with respect to the first base 581 and a second base 582. For example, a first part 521 of the first spiral arm 520 may rotate centered on the first axis a1 with respect to the first base 581, and a second part 522 may rotate centered on the first axis a1 with respect to the second base 582.

A second rotating arm 512 and a second spiral arm 530 may rotate centered on an axis b1 with respect to the base assembly 58. For example, the second rotating arm 512 may rotate centered on the axis b1 with respect to the first base 581. For example, a first part 531 of the second spiral arm 530 may rotate centered on the axis b1 with respect to the first base 581. For example, a second part 532 of the second spiral arm 530 may rotate centered on the axis b1 with respect to the second base 582.

In an embodiment, since the first base 581 and the second base 582 are fixedly coupled to a hinge housing 15, each of the axes a1, a2, and b1 provided by the first base 581 and the second base 582 may be a fixed axis. Each of the axes a1, a2, and b1 provided by the first base 581 and the second base 582 may be parallel to a Y-axis.

In an embodiment, a horizontal length of the second rotating arm 512 along an X-axis may be greater than a horizontal length of the first rotating arm 511 along the X-axis. A vertical length of the second rotating arm 512 along the Y-axis may be greater than a vertical length of the first rotating arm 511 along the Y-axis. As the horizontal length of the second rotating arm 512 fixedly coupled to the second housing part 20 increases (e.g., as a portion where the second rotating arm 512 is fixedly coupled to the second housing part 20 moves away from the first base 581), a force required to rotate the second housing part 20 may decrease.

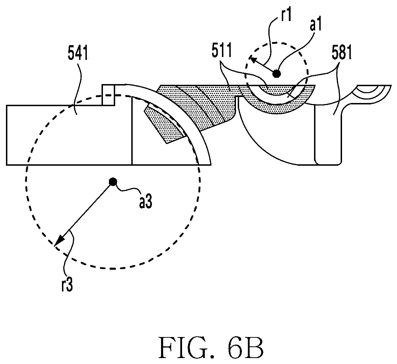

FIG. 6B illustrates rotation axes of a first rotating arm and a first link of a hinge module. FIG. 6B may correspond to, for example, line A-A' of FIG. 4A.

Referring to FIG. 6B, the first rotating arm 511 may rotate centered on the first axis a1 with respect to the first base 581. For example, the first rotating arm 511 may rotate with a first rotation radius r1 centered on the first axis a1 with respect to the first base 581. In addition, the first rotating arm 511 may rotate centered on a third axis a3 with respect to a first link 541. For example, the first rotating arm 511 may rotate with a third rotation radius r3 centered on the third axis a3 with respect to the first link 541. The first axis a1 between the first base 581 and the first rotating arm 511 may be, as a non-limiting example, positioned outside the first rotating arm 511. The third axis a3 between the first rotating arm 511 and the first link 541 may be, as a non-limiting example, positioned outside the first link 541. The third rotation radius r3 may be, as a non-limiting example, smaller than the first rotation radius r1.

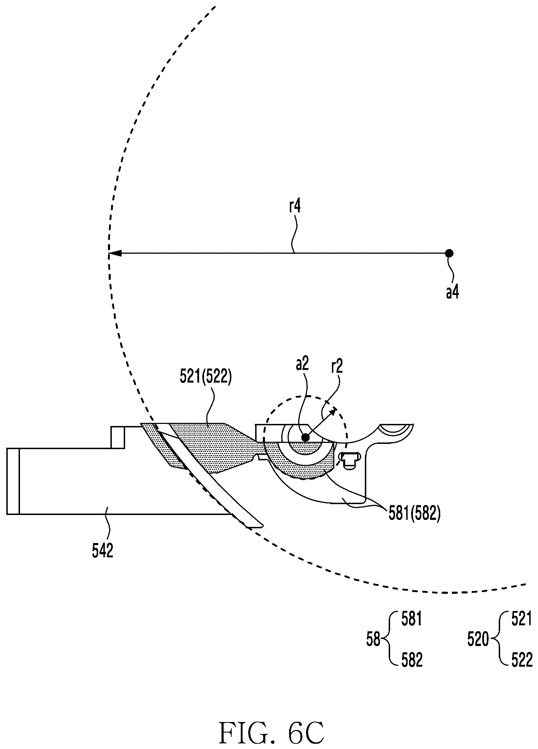

FIG. 6C illustrates rotation axes of a first spiral arm and a second link of a hinge module. FIG. 6C may correspond to, for example, line B-B' of FIG. 4A.

Referring to FIG. 6C, the first spiral arm 520 may rotate centered on the second axis a2 with respect to the base assembly 58. For example, the first spiral arm 520 may rotate with a second rotation radius r2 centered on the second axis a2 with respect to the base assembly 58. For example, the first part 521 of the first spiral arm 520 may rotate centered on the second axis a2 with respect to the first base 581, and the second part 522 of the first spiral arm 520 may rotate centered on the second axis a2 with respect to the second base 582.

In addition, the first spiral arm 520 may rotate centered on a fourth axis a4 with respect to a second link 542. For example, the first spiral arm 520 may rotate with a fourth rotation radius r4 centered on the fourth axis a4 with respect to the second link 542. For example, the first part 521 and the second part 522 of the first spiral arm 520 may rotate centered on the fourth axis a4 with respect to the second link 542. As a non-limiting example, the second axis a2 may be positioned in the first base 581 and the second base 582. For example, the second axis a2 may pass through the first base 581 and the second base 582. As a non-limiting example, the fourth axis a4 may be positioned outside the first spiral arm 520 and the second link 542. As a non-limiting example, the second rotation radius r2 may be smaller than the fourth rotation radius r4.

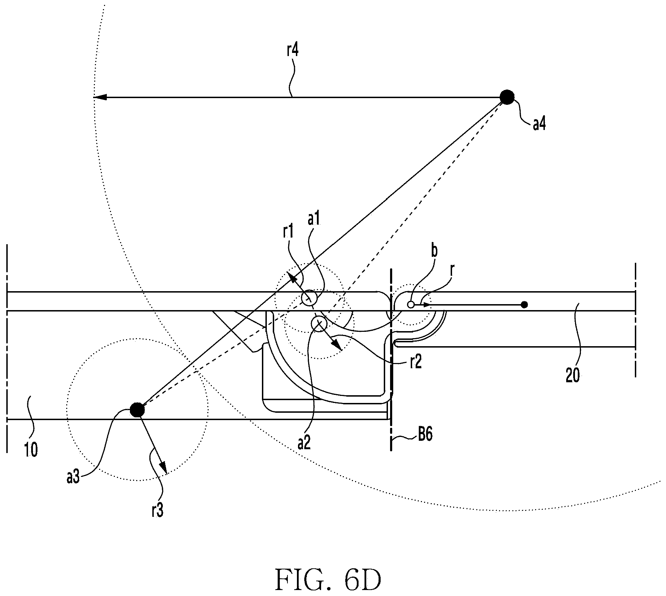

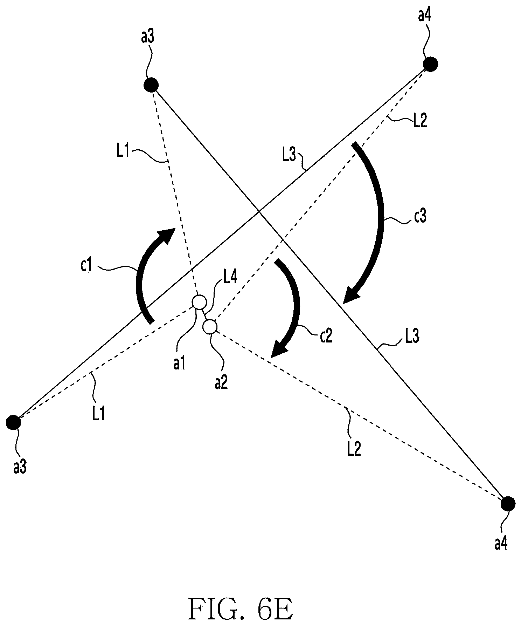

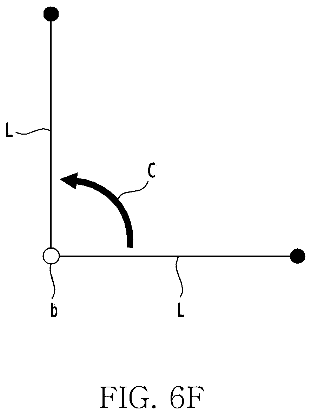

FIG. 6D illustrates rotation axes of a hinge module. FIG. 6E is a conceptual diagram illustrating a multi-link mechanism for a first housing part of a hinge module. FIG. 6F is a conceptual diagram illustrating a link mechanism for a second housing part of a hinge module.

Referring to FIG. 6D, a hinge module 50 may include a multi-bar link mechanism configured to rotate the first housing part 10. In addition, the hinge module 50 may include a single bar link mechanism configured to rotate the second housing part 20. An operation of the multi-bar link mechanism of the hinge module 50 and an operation of the single bar link mechanism may be linked to each other (e.g., through a spiral slider 550). As described above, the hinge module 50 having different structures on both sides may be referred to as an asymmetric hinge module, an asymmetric hinge structure, or an asymmetric hinge assembly. The asymmetric hinge module enables both mechanisms, the multi-bar link mechanism, and the single-bar link mechanism, to work together despite their different configurations.

In an embodiment, the multi-bar link mechanism of the hinge module 50 may include the first axis a1, the second axis a2, the third axis a3, the fourth axis a4, and links connecting them. For example, referring to FIG. 6E, the multi-bar link mechanism of the hinge module 50 may include a first bar L1 connected between the first axis a1 and the third axis a3, a second bar L2 connected between the second axis a2 and the fourth axis a4, a third bar L3 connected between the third axis a3 and the fourth axis a2, and a fourth bar L4 connected between the first axis a1 and the second axis a2.

Referring to the above-described drawings together with FIG. 6E, the first bar L1 may include the first rotating arm 511 configured to rotate with respect to the first axis a1 and the third axis a3. The second bar L2 may include the first spiral arm 520 configured to rotate with respect to the second axis a2 and the fourth axis a4. The third bar L3 may include the first link 541 that provides the third axis a3 and the second link 542 that is fixedly coupled to the first link 541 and provides the fourth axis a4. In addition, the third bar L3 may include the first housing part 10 to which the first link 541 and the second link 542 are fixedly coupled. The fourth bar L4 may include the base assembly 58 that provides the first axis a1 and the second axis a2, which are two fixed axes.

In an embodiment, the first bar L1 may rotate clockwise by a first angle c1 centered on the first axis a1. For example, the second bar L2 connected to the first bar L1 through the third bar L3 may rotate clockwise by a second angle c2 centered on the second axis a2 while the first bar L1 rotates by the first angle c1. The third bar L3 may rotate clockwise by a third angle c3 while the first bar L1 rotates by the first angle c1 and the second bar L2 rotates by the second angle c2. For example, the first housing part 10 included in the third bar L3 may rotate by the third angle c3 with respect to the hinge module 50 according to rotation of the first rotating arm 511 included in the first bar L1 and rotation of the first spiral arm 520 included in the second bar L2. The third angle c3 may be, for example, 90 degrees. The first angle c1 may be, for example, greater than the third angle c3. For example, the first angle c1 may be, as a non-limiting example, 110 degrees. The second angle c2 may be, for example, smaller than the first angle c1 and the third angle c3. As a non-limiting example, the second angle c2 may be 80 degrees.

Referring to the above-described drawings together with FIG. 6F, the single bar link mechanism of the hinge module 50 may include a bar L connected to an axis b. The bar L may include the second rotating arm 512 rotatably coupled to the first base 581, and the second spiral arm 530 rotatably coupled to the first base 581 and the second base 582. The bar L may further include the second housing part 20 to which the second rotating arm 512 and the second spiral arm 530 that are included in the bar L are fixedly coupled.

In an embodiment, rotation of the bar L may be linked to the bars L1, L2, and L3 of the hinge module 50. For example, while the bars L1, L2, and L3 rotate clockwise, the bar L may rotate counterclockwise. For example, the bar L may rotate counterclockwise by an angle c centered on the axis b. For example, the second housing part 20 included in the bar L may rotate counterclockwise by the angle c while the first housing part 10 rotates by the third angle c3. The angle c may be, for example, 90 degrees.

As described above, the hinge module 50 may rotate the first housing part 10 clockwise by the third angle c3 and rotate the second housing part 20 counterclockwise by the angle c. Accordingly, the first housing part 10 and the second housing part 20 may be folded to each other. For example, a state of an electronic device 1 may be switched from the unfolded state to the single folded state. Conversely, as the first housing part 10 rotates counterclockwise by the third angle c3 and the second housing part 20 rotates clockwise by the angle c, through the hinge module 50, the state of the electronic device 1 may be switched from the single folded state to the unfolded state.

Referring back to FIG. 6D, as a non-limiting example, the first rotation radius r1 may be smaller than the second rotation radius r2. As a non-limiting example, the third rotation radius r3 may be smaller than the fourth rotation radius r4.

In an embodiment, in an unfolded state of the first housing part 10 and the second housing part 20, a boundary line (or boundary surface) B between the first housing part 10 and the second housing part 20 may be defined. The axis b for the second housing part 20 may be closer to the boundary line B than the first axis a1 for the first housing part 10. The axis b for the second housing part 20 may be closer to the boundary line B than the second axis a2 for the first housing part 10. As a non-limiting example, the second axis a2 for the second housing part 20 may be closer to the boundary line B than the first axis a1 for the second housing part 20.

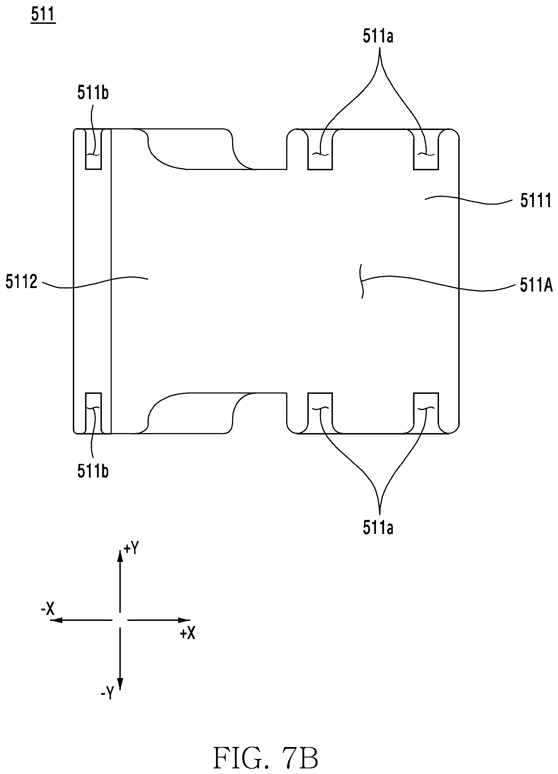

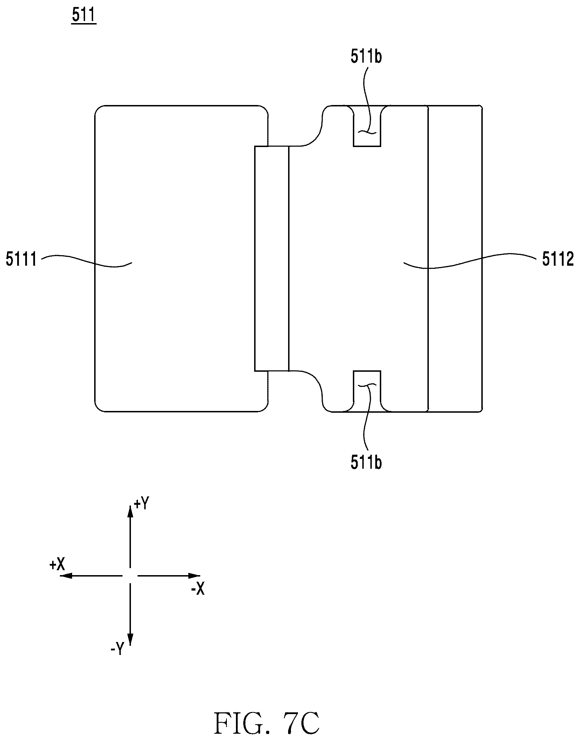

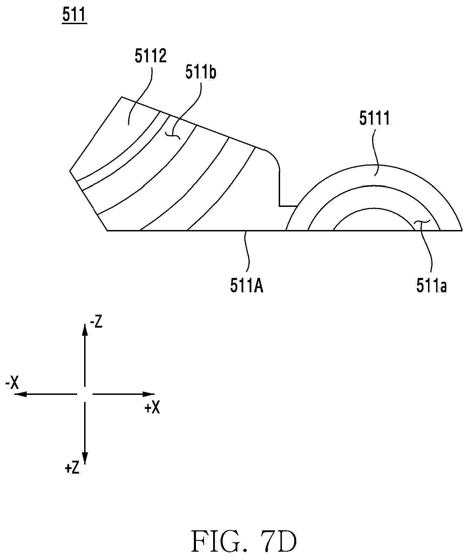

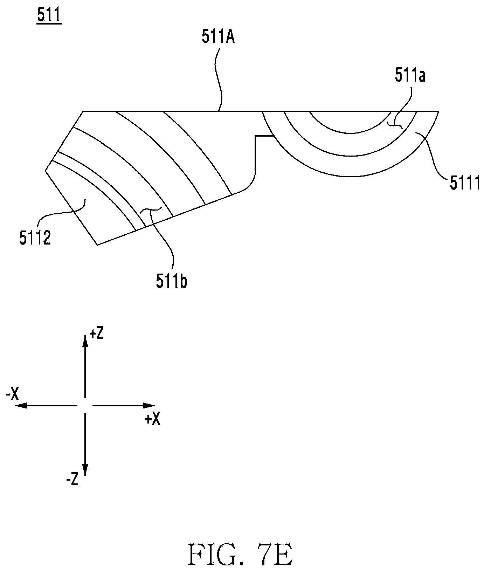

FIGS. 7A, 7B, 7C, 7D, and 7E illustrate a first rotating arm of a hinge module. FIG. 7B may be a diagram of a first rotating arm 511 illustrated in FIG. 7A viewed in a -Z direction. FIG. 7C may be a diagram of the first rotating arm 511 illustrated in FIG. 7A viewed in a +Z direction. FIG. 7D may be a diagram of the first rotating arm 511 illustrated in FIG. 7A viewed in a -Y direction. FIG. 7D may be a diagram of the first rotating arm 511 illustrated in FIG. 7A viewed in a +Y direction.

Referring to FIGS. 7A, 7B, 7C, 7D, and 7E, the first rotating arm 511 may include a first end portion 5111 and a second end portion 5112 opposite to the first end portion 5111. For example, the first end portion 5111 may face a direction (e.g., a +X direction) of a first base 581, and the second end portion 5112 may face a direction (e.g., a -X direction) of a first housing part 10.

A first guide rail 511a to guide rotation of the first rotating arm 511 with respect to the first base 581 may be formed on the first end portion 5111 of the first rotating arm 511. For example, the first end portion 5111 may be coupled to the first base 581 in a form in which the first guide rail 511a is engaged with a guide rail formed on the first side portion of the first base 581. For example, the first guide rail 511a may include a groove, and the guide rail of the first base 581 may include a protrusion accommodated in the first guide rail 511a.

The first guide rail 511a of the first rotating arm 511 may form a first axis a1. For example, as the first guide rail 511a moves along the guide rail of the first base 581, the first rotating arm 511 may rotate centered on the first axis a1 with respect to the first base 581.

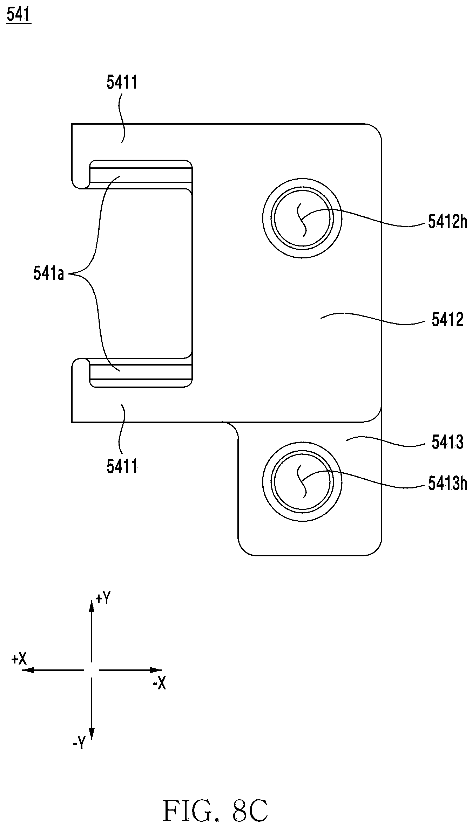

A second guide rail 511b to guide rotation of the first rotating arm 511 with respect to a first link 541 may be formed on the second end portion 5112 of the first rotating arm 511. For example, the second end portion 5112 may be coupled to the first link 541 in a form in which the second guide rail 511b is engaged with a guide rail (e.g., the guide rail 541a of FIG. 8C) of the first link 541. For example, the second guide rail 511b may include a groove, and the guide rail of the first link 541 may include a protrusion accommodated in the second guide rail 511b.

The second guide rail 511b of the first rotating arm 511 may form a third axis a3. For example, as the second guide rail 511b moves along the guide rail of the first link 541, the first rotating arm 511 may rotate centered on the third axis a3 with respect to the first link 541.

In an embodiment, the first rotating arm 511 may include a substantially flat supporting surface 511A. The supporting surface 511A may be formed by the first end portion 5111 and the second end portion 5112 of the first rotating arm 511.

The supporting surface 511A may support a portion (e.g., a fourth portion 64) of a display 60 in an unfolded state of the first housing part 10 and a second housing part 20.

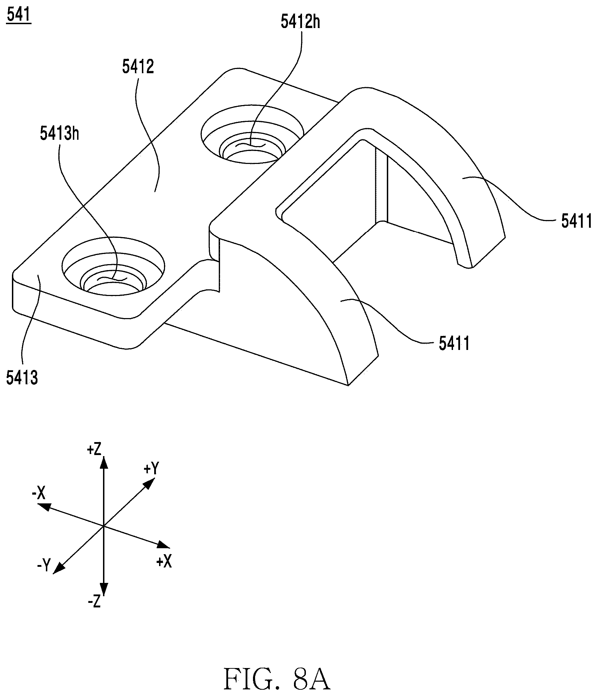

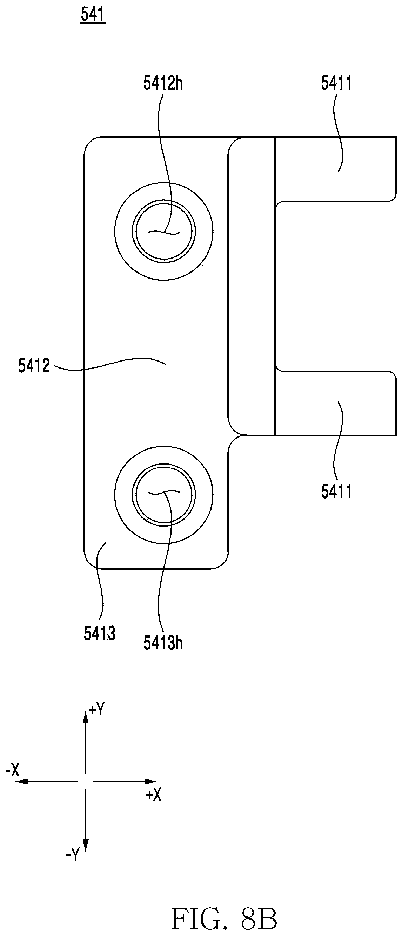

FIGS. 8A, 8B, and 8C illustrate a first link of a hinge module. FIG. 8B may be a diagram of a first link 541 illustrated in FIG. 8A viewed in a -Z direction. FIG. 8C may be a diagram of the first link 541 illustrated in FIG. 8A viewed in a +Z direction.

Referring to FIGS. 8A, 8B, and 8C, the first link 541 may include a first portion 5411, a second portion 5412 extending from the first portion 5411, and a third portion 5413 extending from the second portion 5412.

A second end portion 5112 of a first rotating arm 511 may be rotatably coupled to the first portion 5411. A first screw hole 5412h may be formed on the second portion 5412. The first link 541 may be fixedly coupled to a first housing part 10 through a screw fastened to the first screw hole 5412h.

A second screw hole 5413h may be formed on the third portion 5413. The third portion 5413 may have a thickness smaller than the second portion 5412. The third portion 5413 may protrude from the second portion 5412. For example, the third portion 5413 may protrude from the second portion 5412 in a direction (e.g., a -Y direction) of a second link 542. The third portion 5413 may be disposed on the second link 542, and the second screw hole 5413h of the third portion 5413 may be aligned with a screw hole (e.g., a screw hole 5423h) of the second link 542. The first link 541 may be fixedly coupled to the second link 542 and a second housing part 20 through a screw fastened to the second screw hole 5413h and the screw hole of the second link 542.

Referring to FIG. 8C, a guide rail 541a may be formed on the first portion 5411 of the first link 541 to guide rotation of the first rotating arm 511 with respect to the first link 541. A second guide rail 511b of the first rotating arm 511 may be movably coupled to the guide rail 541a of the first link 541. The guide rail 541a of the first link 541 may form a third axis a3 of a hinge module 50 together with the second guide rail 511b of the first rotating arm 511.

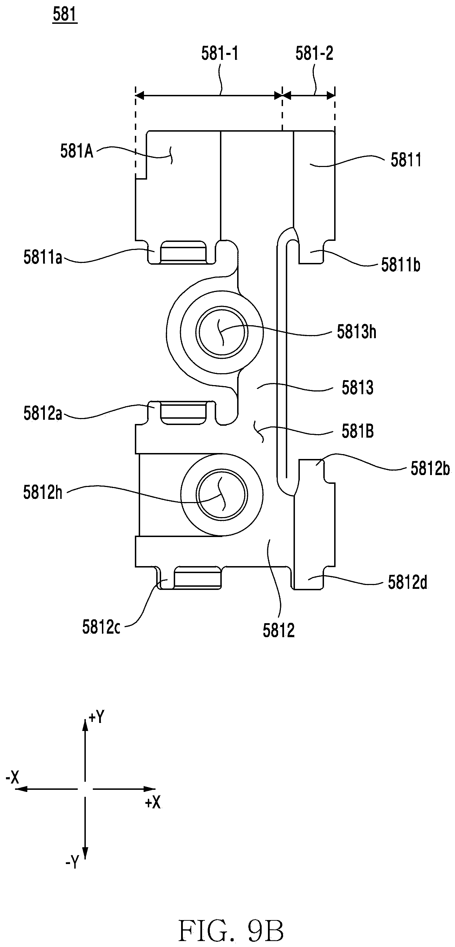

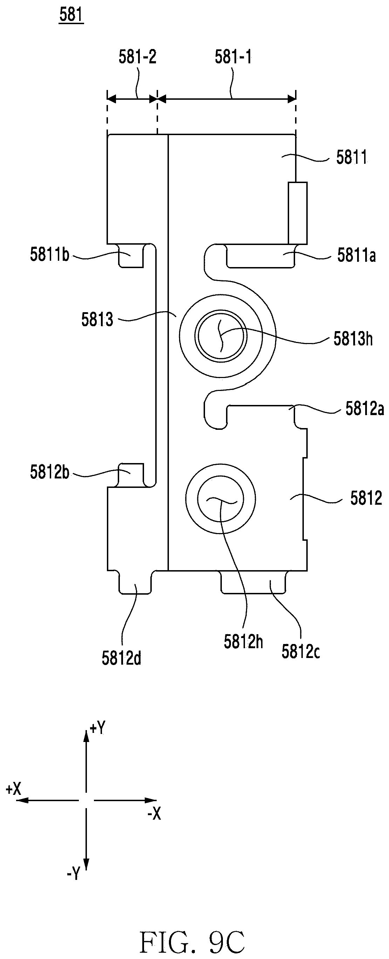

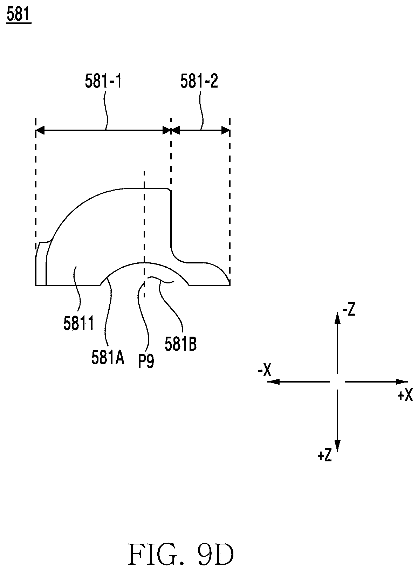

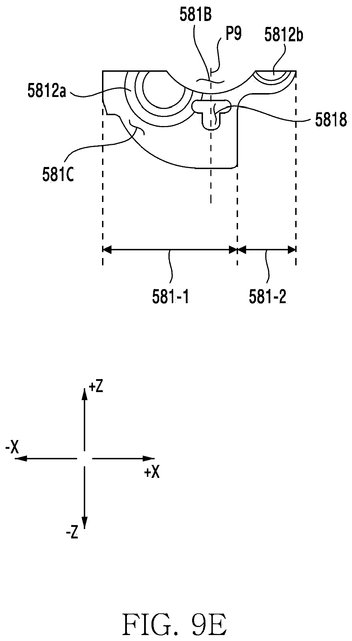

FIGS. 9A, 9B, 9C, 9D, and 9E illustrate a first base of a hinge module. FIG. 9B may be a diagram of a first base 581 of FIG. 9A viewed in a -Z direction. FIG. 9C may be a diagram of the first base 581 of FIG. 9A viewed in a +Z direction. FIG. 9D may be a diagram of the first base 581 of FIG. 9A viewed in a -Y direction. FIG. 9F may be a diagram of the first base 581 of FIG. 9A viewed in a +Y direction.

Referring to FIGS. 9A, 9B, 9C, 9D, and 9E, the first base 581 may include a first side portion 581-1 and a second side portion 581-2 opposite to the first side portion 581-1. For example, the first side portion 581-1 may face a direction (e.g., a -X direction) of a first housing part 10, and the second side portion 581-2 may face a direction (e.g., a +X direction) of a second housing part 20. For example, a width (e.g., a length along an X-axis) of the first side portion 581-1 may be greater than a width (e.g., a length along the X-axis) of the second side portion 581-2. Accordingly, referring to FIGS. 9D and 9E, a center P9 of a total width (e.g., a total length along the X-axis) of the first base 581 may be positioned in the first side portion 581-1 of the first side portion 581-1 and the second side portion 581-2. A thickness (e.g., a length along a Z-axis) of the first side portion 581-1 may be greater than a thickness of the second side portion 581-2.

Referring back to FIGS. 9A, 9B, 9C, 9D, and 9E, the first base 581 may include a first portion 5811, a second portion 5812 spaced apart from the first portion 5811, and a third portion 5813 extending from the first portion 5811 to the second portion 5812. The first side portion 581-1 may include a portion of the first portion 5811, a portion of the second portion 5812, and a portion of the third portion 5813, and the second side portion 581-2 may include a remaining portion of the first portion 5811, a remaining portion of the second portion 5812, and a remaining portion of the third portion 5813. Optionally or alternatively, the second side portion 581-2 may not include the third portion 5813.

In an embodiment, the first base 581 may include an upper surface 581A. The upper surface 581A may face, for example, a fourth portion 64 of a display 60 in an unfolded state of the first housing part 10 and the second housing part 20. For example, the upper surface 581A may include a substantially flat first area and a second area formed of a curved surface recessed from the first area. The substantially flat first area of the upper surface 581A may support the fourth portion 64 of the display 60 in the unfolded state of the first housing part 10 and the second housing part 20. The fourth portion 64 of the display 60 may be partially accommodated in a recess 581B formed by the second area of the upper surface 581A in a folded state of the first housing part 10 and the second housing part 20.

In an embodiment, the upper surface 581A of the first base 581 may be formed by the first side portion 581-1 and the second side portion 581-2. For example, an area of the upper surface 581A formed by the first side portion 581-1 may be larger than an area of the upper surface 581A formed by the second side portion 581-2. In addition, an area of the recess 581B formed by the first side portion 581-1 may be larger than an area of the recess 581B formed by the second side portion 581-2.

In an embodiment, the first portion 5811 may include a first protruding portion 5811a and a second protruding portion 5811b. The first protruding portion 5811a and the second protruding portion 5811b may protrude toward the second portion 5812 (e.g., in the -Y direction), respectively. The third portion 5813 may be partially positioned between the first protruding portion 5811a and the second protruding portion 5811b. The first portion 5811 may have a horizontal width (e.g., a length along the X-axis) larger than the third portion 5813 so that the protruding portions 5811a and 5811b positioned on both sides of the third portion 5813 may be formed. The first protruding portion 5811a may be included in the first side portion 581-1, and the second protruding portion 5811b may be included in the second side portion 581-2.

In an embodiment, the second portion 5812 may include a first protruding portion 5812a and a second protruding portion 5812b. The first protruding portion 5812a and the second protruding portion 5812b may protrude toward the first portion 5811 (e.g., in the +Y direction), respectively. The first protruding portion 5812a of the second portion 5812 may face the first protruding portion 5811a of the first portion 5811. The second protruding portion 5812b of the second portion 5812 may face the second protruding portion 5811b of the first portion 5811. The first protruding portion 5812a may be included in the first side portion 581-1, and the second protruding portion 5812b may be included in the second side portion 581-2.

The first protruding portion 5811a and the second protruding portion 5812b of the first portion 5811 may be substantially aligned along the X-axis. A distance between the first protruding portions 5811a and 5812a may be smaller than a distance between the second protruding portions 5811b and 5812b.

In an embodiment, the second portion 5812 may include a third protruding portion 5812c and a fourth protruding portion 5812d. The third protruding portion 5812c and the fourth protruding portion 5812d may protrude toward a second base 582 (e.g., in the -Y direction), respectively. The third protruding portion 5812c may be included in the first side portion 581-1, and the fourth protruding portion 5812d may be included in the second side portion 581-2.

In an embodiment, each of a first rotating arm 511 and a first part 521 of a first spiral arm 520 may be rotatably coupled to the first side portion 581-1. For example, the first rotating arm 511 may be rotatably coupled to the first protruding portions 5811a and 5812a. For example, the first protruding portions 5811a and 5812a may be movably coupled to a first guide rail 511a of the first rotating arm 511. As the first guide rail 511a of the first rotating arm 511 moves along the first protruding portions 5811a and 5812a of the first base 581, the first rotating arm 511 may rotate with respect to the first side portion 581-1. The first protruding portions 5811a and 5812a may form a first axis a1 of a hinge module 50.

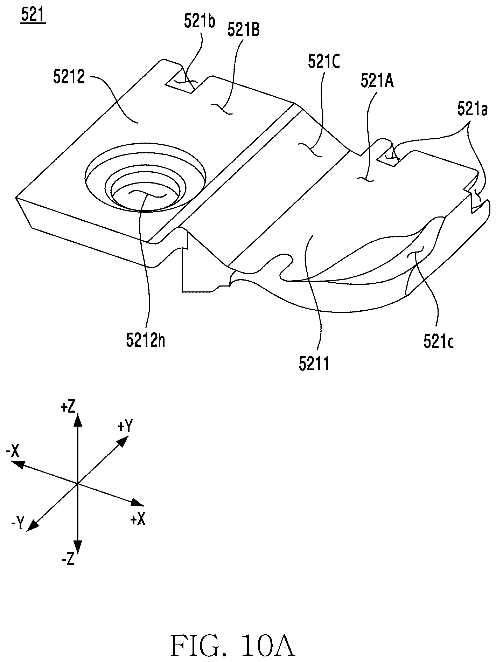

For example, the first part 521 of the first spiral arm 520 may be rotatably coupled to the third protruding portion 5812c corresponding to the first side portion 581-1. For example, a guide rail may be formed on the third protruding portion 5812c to guide rotation of the first spiral arm 520 with respect to the first side portion 581-1. For example, the third protruding portion 5812c may be movably coupled to a guide rail (e.g., a first guide rail 521a of FIG. 10A) formed on the first spiral arm 520. As the first spiral arm 520 moves along the third protruding portion 5812c of the first base 581, the first spiral arm 520 may rotate with respect to the first side portion 581-1. The third protruding portion 5812c may form a second axis a2 of the hinge module 50.

In an embodiment, each of a second rotating arm 512 and a first part 531 of a second spiral arm 530 may be rotatably coupled to the second side portion 581-2. For example, the second rotating arm 512 may be rotatably coupled to the second protruding portions 5811b and 5812b corresponding to the second side portion 581-2. For example, the second protruding portions 5811b and 5812b may form a guide rail to guide rotation of the second rotating arm 512. Additionally or optionally, the guide rail to guide the rotation of the second rotating arm 512 may be formed by the second protruding portions 5811b and 5812b and a hinge housing 15. In an embodiment, the guide rail for the second rotating arm 512 formed at least partially by the second protruding portions 5811b and 5812b may form an axis b of the hinge module 50.

For example, the first part 531 of the second spiral arm 530 may be rotatably coupled to the fourth protruding portion 5812d corresponding to the second side portion 581-2. For example, the fourth protruding portion 5812d may form a guide rail to guide rotation of the first part 531 of the second spiral arm 530. Additionally or optionally, the guide rail may be formed by the fourth protruding portion 5812d and the hinge housing 15 to guide the rotation of the first part 531 of the second spiral arm 530. In an embodiment, the guide rail for the first part 531 of the second spiral arm 530 formed at least partially by the fourth protruding portion 5812d may form the axis b of the hinge module 50.

In an embodiment, the first base 581 may include one or more screw holes for fixedly coupling the first base 581 to the hinge housing 15. For example, a first screw hole 5812h may be formed in the second portion 5812 and a second screw hole 5813h may be formed in the third portion 5813. For example, the screw holes 5812h and 5813h may be formed on the first side portion 581-1 of the first side portion 581-1 and the second side portion 581-2. The first base 581 may be fixed to the hinge housing 15 through screws fastened to the screw holes 5812h and 5813h.

In an embodiment, the first base 581 may include a first side surface 581C facing a direction (e.g., the -Y direction) of the second base 582. A groove 5818 may be formed on the first side surface 581C. A bar 583 of a base assembly 58 may be assembled in the groove 5818. The groove 5818 may have a shape corresponding to the end portion of the bar 583, but is not limited thereto. The groove 5818 may be formed on the first side portion 581-1 of the first side portion 581-1 and the second side portion 581-2.

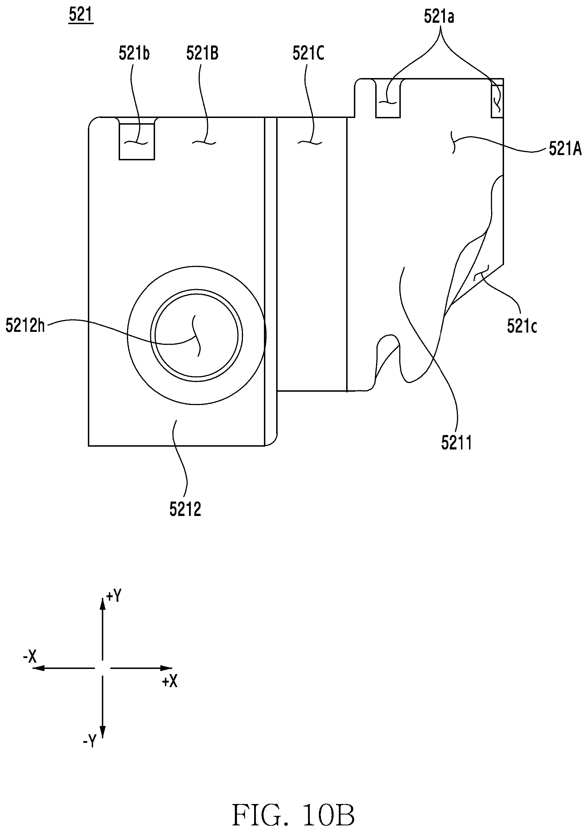

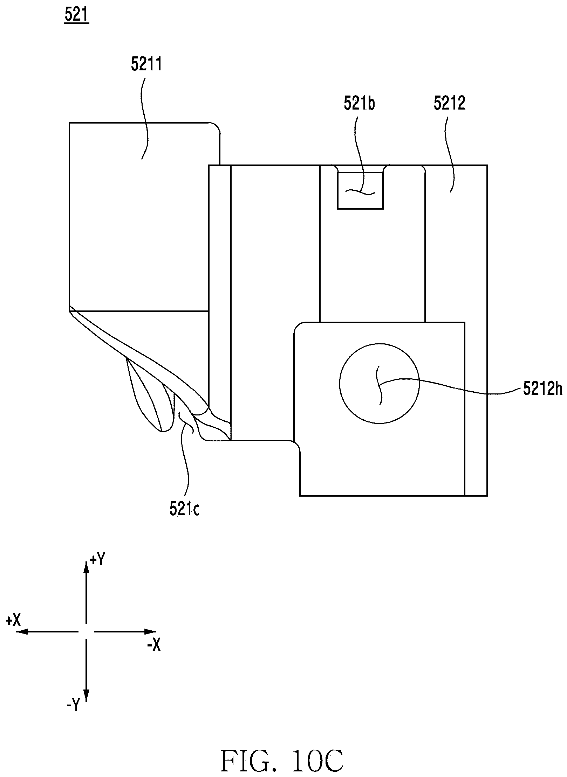

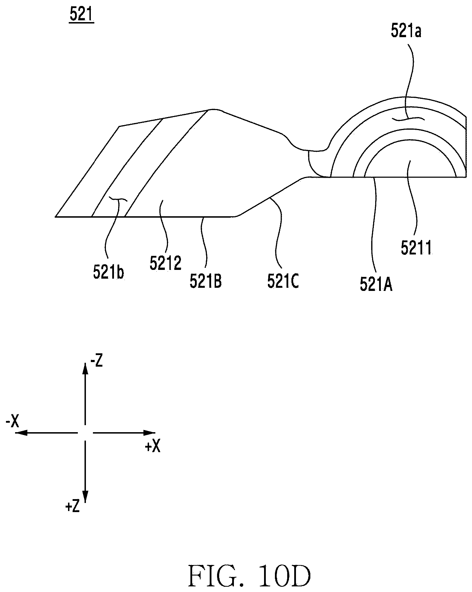

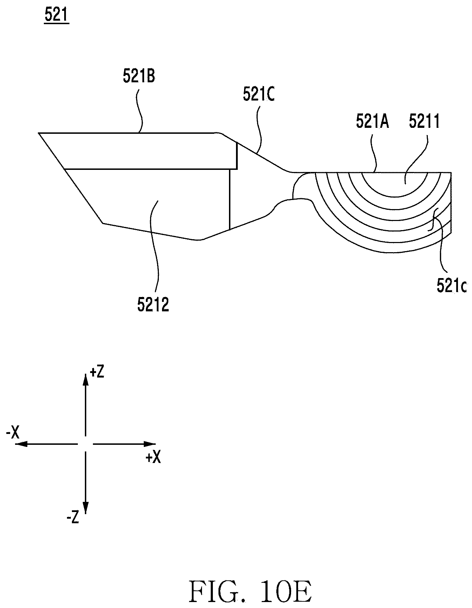

FIGS. 10A, 10B, 10C, 10D, and 10E illustrate a first part of a first spiral arm of a hinge module. FIG. 10B may be a diagram of a first part 521 of a first spiral arm 520 of FIG. 10A viewed in a -Z direction. FIG. 10C may be a diagram of the first part 521 of the first spiral arm 520 of FIG. 10A viewed in a +Z direction. FIG. 10D may be a diagram of the first part 521 of the first spiral arm 520 of FIG. 10A viewed in a -Y direction. FIG. 10E may be a diagram of the first part 521 of the first spiral arm 520 of FIG. 10A viewed in a +Y direction.

Referring to FIGS. 10A, 10B, 10C, 10D, and 10E, the first part 521 of the first spiral arm 520 may include a first end portion 5211 facing a direction (e.g., a +X direction) of a bar 583 of a base assembly 58 and a second end portion 5212 opposite to the first end portion 5211 and facing a direction (e.g., a -X direction) of a first housing part 10.

In an embodiment, the first part 521 may include a first surface 521A, a second surface 521B, and an inclined surface 521C extending from the first surface 521A to the second surface 521B. For example, the first surface 521A may be formed by the first end portion 5211. For example, the second surface 521B may be formed by the second end portion 5212. For example, the inclined surface 521C may be formed by the first end portion 5211 and/or the second end portion 5212.

In an embodiment, the first surface 521A and the second surface 521B may be substantially flat and parallel to each other. The first surface 521A may be positioned lower than the second surface 521B. For example, in an unfolded state of the first housing part 10 and a second housing part 20, a height of the first surface 521A with respect to a Z-axis direction may be lower than a height of the second surface 521B. The inclined surface 521C may be inclined to connect the first surface 521A and the second surface 521B having different heights.

A first guide rail 521a to guide rotation of the first part 521 with respect to a first base 581 may be formed on the first end portion 5211. For example, the first guide rail 521a may be formed on a side surface of the first end portion 5211 facing a direction (e.g., the +Y direction) of a first rotating arm 511. For example, the first guide rail 521a may be movably coupled to a guide rail formed on a third protruding portion 5812c of the first base 581. For example, the first guide rail 521a of the first end portion 5211 may include a groove corresponding to the third protruding portion 5812c. The first part 521 of the first spiral arm 520 may be rotatably coupled to a second portion 5812 of the first base 581 through the first guide rail 521a and the third protruding portion 5812c. The first guide rail 521a of the first part 521 and the third protruding portion 5812c of the first base 581 may form a second axis a2 of a hinge module 50. For example, as the first guide rail 521a of the first part 521 moves along the third protruding portion 5812c of the first base 581, the first part 521 may rotate centered on the second axis a2 with respect to the first base 581.

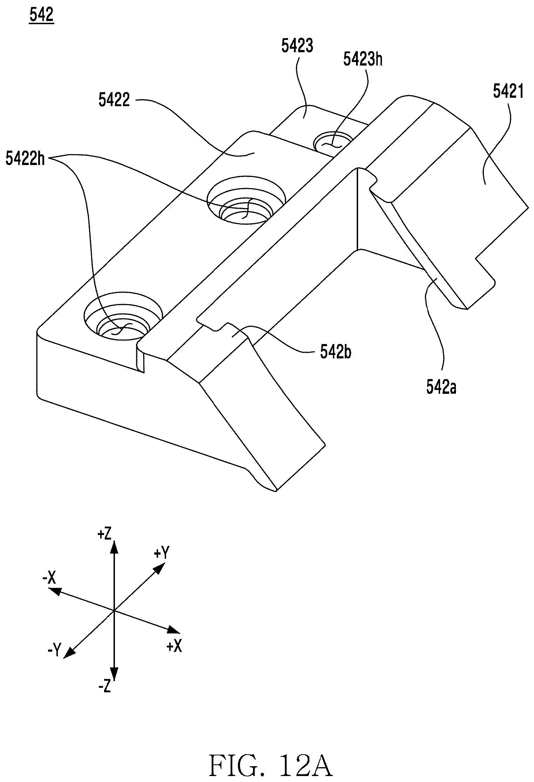

In an embodiment, a second guide rail 521b may be formed on the second end portion 5212 to guide rotation of the first part 521 with respect to a second link 542. For example, the second guide rail 521b may be formed on a side surface of the second end portion 5212 facing the direction (e.g., the +Y direction) of the first rotating arm 511. For example, the second guide rail 521b may be movably coupled to a first guide rail (e.g., a first guide rail 542a of FIG. 12A) formed on the second link 542. For example, the second guide rail 521b of the second end portion 5212 may include a groove, and the first guide rail of the second link 542 may include a protrusion corresponding to the groove of the second guide rail 521b. The first part 521 of the first spiral arm 520 may be rotatably coupled to the second link 542 through the second guide rail 521b. The second guide rail 521b of the first part 521 may form a fourth axis a4 of the hinge module 50. For example, as the second guide rail 521b of the first part 521 moves along the first guide rail of the second link 542, the first part 521 may rotate centered on the fourth axis a4 with respect to the second link 542.

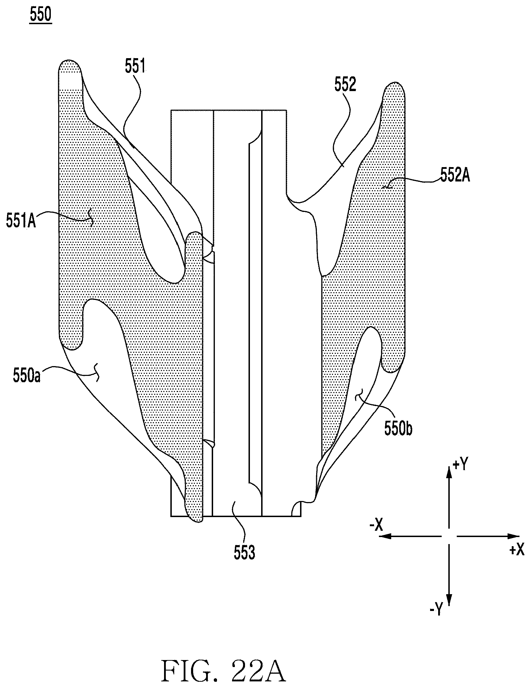

In an embodiment, a first spiral rail 521c may be formed on the first end portion 5211. For example, the first spiral rail 521c of the first end portion 5211 may be rotatably coupled to a first side portion (e.g., a first side portion 551 of FIG. 22A) of a spiral slider 550.

In an embodiment, a screw hole 5212h may be formed on the second end portion 5212. The screw hole 5212h of the second end portion 5212 may be aligned with a screw hole of a second part 522. The first part 521 may be fixedly coupled to the second part 522 through a screw fastened to the screw hole 5212h of the first part 521 and the screw hole of the second part 522.

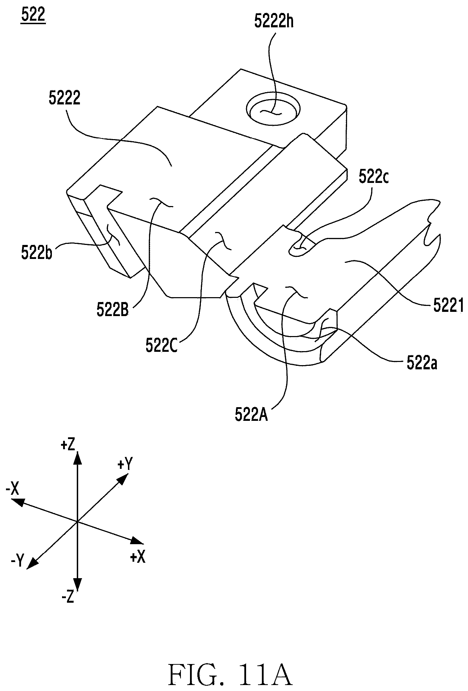

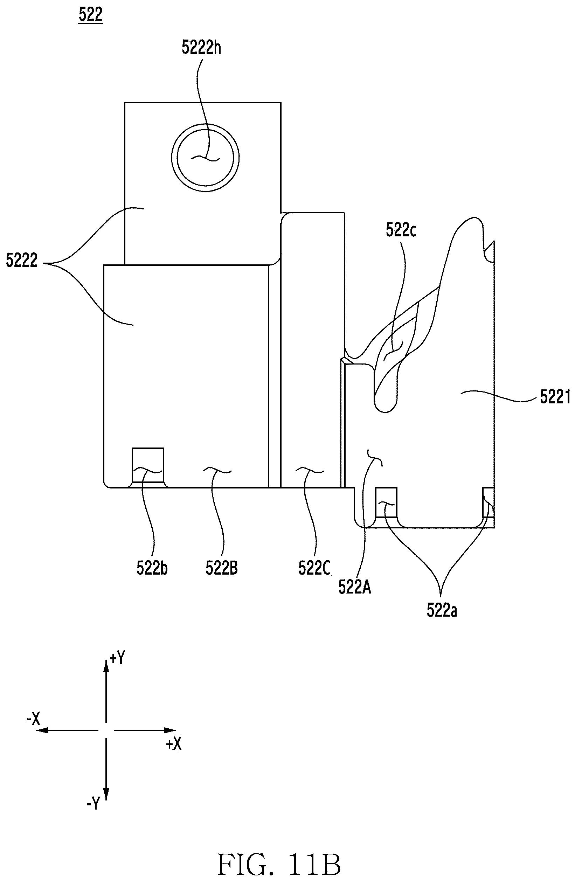

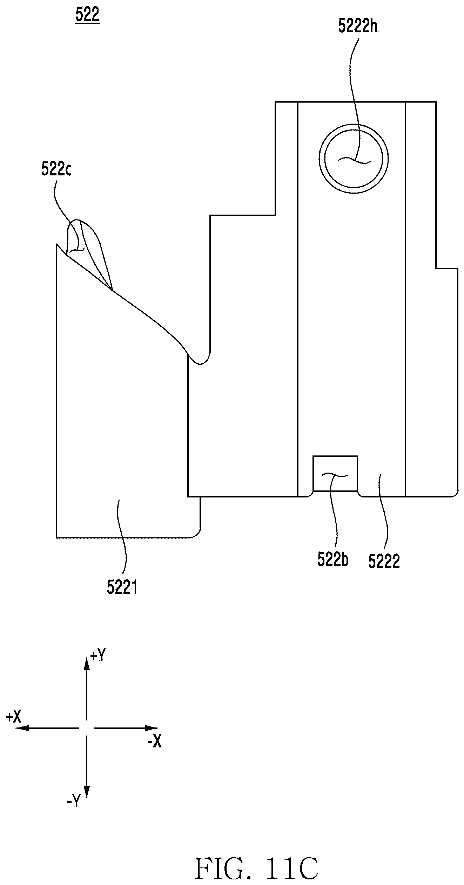

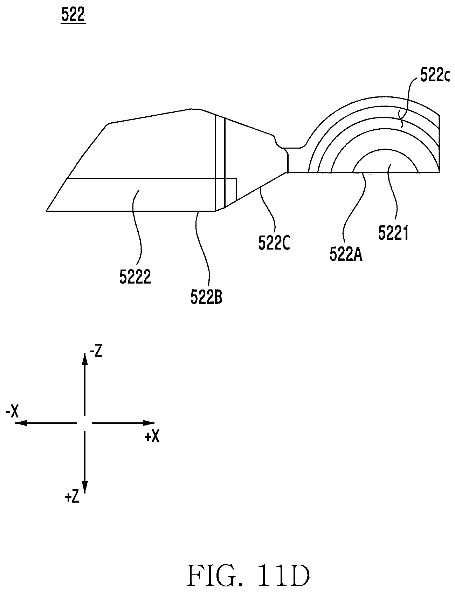

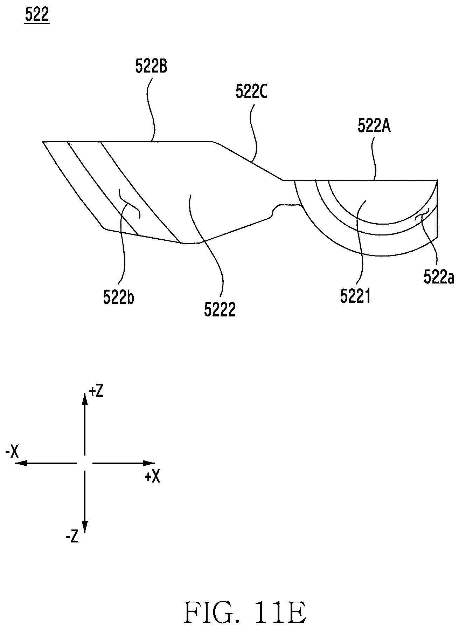

FIGS. 11A, 11B, 11C, 11D, and 11E illustrate a first part of a first spiral arm of a hinge module. FIG. 11B may be a diagram of a second part 522 of a first spiral arm 520 of FIG. 11A viewed in a -Z direction. FIG. 11C may be a diagram of the second part 522 of the first spiral arm 520 of FIG. 11A viewed in a +Z direction. FIG. 11D may be a diagram of the second part 522 of the first spiral arm 520 of FIG. 11A viewed in a -Y direction. FIG. 11E may be a diagram of the second part 522 of the first spiral arm 520 of FIG. 11A viewed in a +Y direction.

Referring to FIGS. 11A, 11B, 11C, 11D, and 11E, the second part 522 of the first spiral arm 520 may include a first end portion 5221 facing a direction (e.g., a +X direction) of a bar 583 of a base assembly 58 and a second end portion 5222 opposite to the first end portion 5221 and facing a direction (e.g., a -X direction) of a first housing part 10.

In an embodiment, the second part 522 may include a first surface 522A, a second surface 522B, and an inclined surface 522C extending from the first surface 522A to the second surface 522B. For example, the first surface 522A may be formed by the first end portion 5221. For example, the second surface 522B may be formed by the second end portion 5222. For example, the inclined surface 522C may be formed by the first end portion 5221 and/or the second end portion 5222.

In an embodiment, the first surface 522A and the second surface 522B may be substantially flat and parallel to each other. The first surface 522A may be positioned lower than the second surface 522B. For example, in an unfolded state of the first housing part 10 and a second housing part 20, a height of the first surface 522A with respect to a Z-axis direction may be lower than a height of the second surface 522B. The inclined surface 522C may be inclined to connect the first surface 522A and the second surface 522B having different heights.

In an embodiment, the first surface 522A of the second part 522 may form one surface extending substantially without a step from a first surface 521A of a first part 521 in a state in which the second part 522 is coupled to the first part 521. The one surface formed by the first surface 521A of the first part 521 and the first surface 522A of the second part 522 may be referred to as a first surface of the first spiral arm 520.

In an embodiment, the second surface 522B of the second part 522 may form one surface extending substantially without a step from a second surface 521B of the first part 521 in the state in which the second part 522 is coupled to the first part 521. The one surface formed by the second surface 521B of the first part 521 and the second surface 522B of the second part 522 may be referred to as a second surface of the first spiral arm 520.

In an embodiment, the inclined surface 522C of the second part 522 may form one surface extending substantially without a step from an inclined surface 521C of the first part 521 in the state in which the second part 522 is coupled to the first part 521. The one surface formed by the inclined surface 521C of the first part 521 and the inclined surface 522C of the second part 522 may be referred to as an inclined surface of the first spiral arm 520.

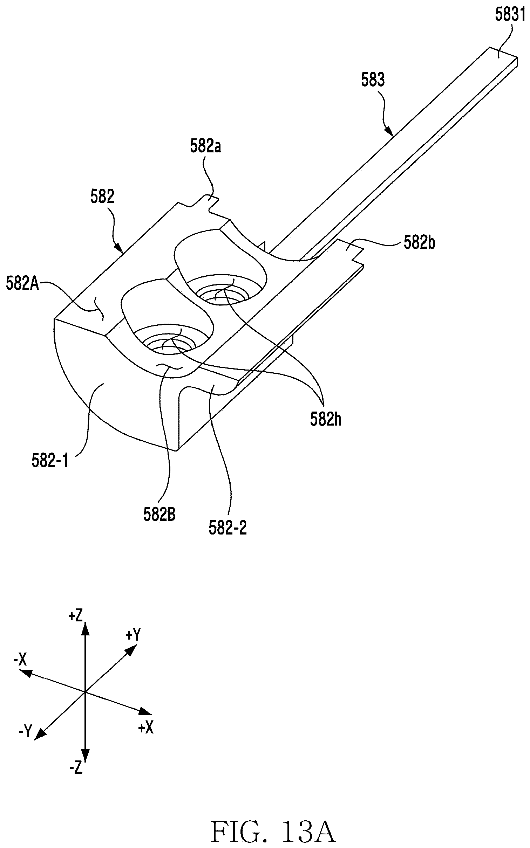

A first guide rail 522a to guide rotation of the second part 522 with respect to a second base 582 may be formed on the first end portion 5221. For example, the first guide rail 522a may be formed on a side surface of the first end portion 5221 (e.g., facing the -Y direction) opposite to the first part 521. For example, the first guide rail 522a may be movably coupled to a first guide rail (e.g., a first protruding portion 582a of FIG. 13A) formed on the second base 582. For example, the first guide rail 522a of the first end portion 5221 may include a groove, and the first guide rail of the second base 582 may include a protrusion corresponding to the groove of the first guide rail 522a. The second part 522 of the first spiral arm 520 may be rotatably coupled to the second base 582 through the first guide rail 522a and the first guide rail of the second base 582. The first guide rail 522a of the second part 522 and the first guide rail of the second base 582 may form a second axis a2 of a hinge module 50. For example, as the first guide rail 522a of the second part 522 moves along the first guide rail of the second base 582, the second part 522 may rotate centered on the second axis a2 with respect to the second base 582.

In an embodiment, a second guide rail 522b to guide rotation of the second part 522 with respect to a second link 542 may be formed on the second end portion 5222. For example, the second guide rail 522b may be formed on a side surface of the second end portion 5222 (e.g., facing the -Y direction) opposite to the first part 521. For example, the second guide rail 522b may be movably coupled to a second guide rail (e.g., a second guide rail 542b of FIG. 12A) formed on the second link 542. For example, the second guide rail 522b of the second end portion 5222 may include a groove, and the second guide rail of the second link 542 may include a protrusion corresponding to the groove of the second guide rail 522b. The second part 522 of the first spiral arm 520 may be rotatably coupled to the second link 542 through the second guide rail 522b. The second guide rail 522b of the second part 522 may form a fourth axis a4 of the hinge module 50. For example, as the second guide rail 522b of the second part 522 moves along the second guide rail of the second link 542, the second part 522 may rotate centered on the fourth axis a4 with respect to the second link 542.

In an embodiment, a second spiral rail 522c may be formed on the first end portion 5221. For example, the second spiral rail 522c of the first end portion 5221 may be rotatably coupled to a first side portion (e.g., a first side portion 551 of FIG. 22A) of a spiral slider 550.

In an embodiment, a screw hole 5222h may be formed on the second end portion 5222. The screw hole 5222h of the second end portion 5222 may be aligned with a screw hole 5212h of the first part 521. The second part 522 may be fixedly coupled to the first part 521 through a screw fastened to the screw hole 5222h of the second part 522 and the screw hole 5212h of the first part 521.

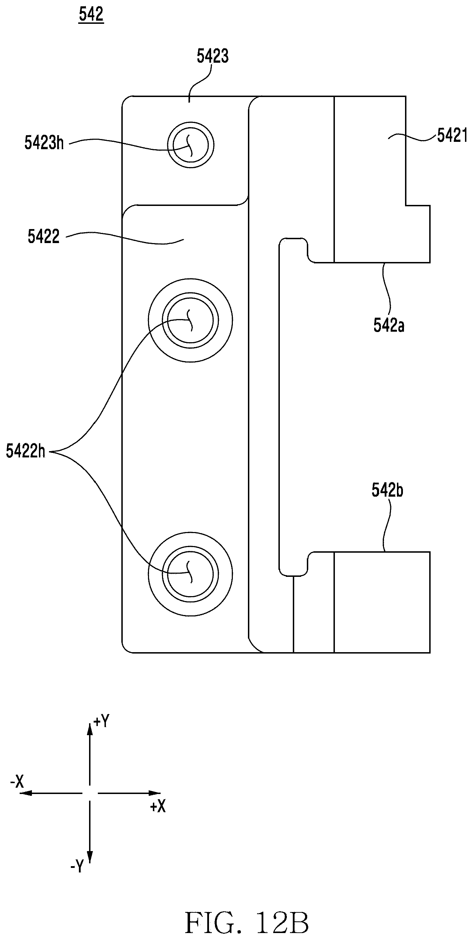

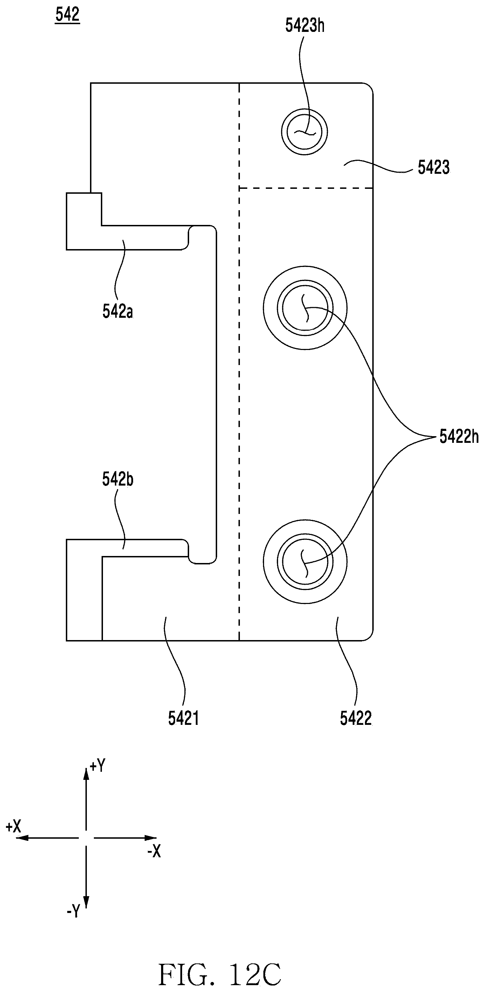

FIGS. 12A, 12B, and 12C illustrate a second link of a hinge module. FIG. 12B may be a diagram of a second link 542 illustrated in FIG. 12A viewed in a -Z direction. FIG. 12C may be a diagram of the second link 542 illustrated in FIG. 12A viewed in a +Z direction.

Referring to FIGS. 12A, 12B, and 12C, a second link 542 may include a first portion 5421, a second portion 5422, and a third portion 5423. The second portion 5422 may extend from a portion of the first portion 5421. The third portion 5423 may extend from another portion of the first portion 5421, and the second portion 5422.

The first portion 5421 of the second link 542 may be rotatably coupled to a first part 521 of a first spiral arm 520. For example, a first guide rail 542a to guide rotation of a second part 522 of the first spiral arm 520 with respect to the second link 542 may be formed on the first portion 521 of the second link 542. A second guide rail 521b of the first part 521 of the first spiral arm 520 may be movably coupled to the first guide rail 542a of the second link 542. The first guide rail 542a of the second link 542 may form a fourth axis a4 of a hinge module 50 together with the second guide rail 521b of the first part 521 of the first spiral arm 520. For example, the first part 521 of the first spiral arm 520 coupled to the second link 542 may rotate centered on the fourth axis a4 through the first guide rail 542a of the second link 542 and the second guide rail 521b of the first part 521.

The first portion 5421 of the second link 542 may be rotatably coupled to the second part 522 of the first spiral arm 520. For example, a second guide rail 522b facing the first guide rail 522a may be formed on the first portion 5421 of the second link 542. The second guide rail 522b may guide the rotation of the second part 522 of the first spiral arm 520 with respect to the second link 542. The second guide rail 522b of the second part 522 of the first spiral arm 520 may be movably coupled to a second guide rail 542b of the second link 542. The second guide rail 542b of the second link 542 may form the fourth axis a4 of the hinge module 50 together with the second guide rail 522b of the second part 522 of the first spiral arm 520. For example, the second part 522 of the first spiral arm 520 coupled to the second link 542 may rotate centered on the fourth axis a4 through the second guide rail 542b of the second link 542 and the second guide rail 522b of the second part 522.

First screw holes 5422h may be formed on the second portion 5422. The second link 542 may be fixedly coupled to a first housing part 10 through screws respectively fastened to the first screw holes 5422h.

A second screw hole 5423h may be formed on the third portion 5423. The third portion 5423 may have a thickness smaller than the second portion 5422. A third portion 5413 of a first link 541 may be disposed on the third portion 5423 of the second link 542. The third portion 5423 of the second link 542 and the third portion 5413 of the first link 541 may be positioned between the second portion 5422 of the second link 542 and the second portion 5412 of the first link 541. The second screw hole 5423h of the third portion 5423 of the second link 542 and a second screw hole 5413h of the third portion 5413 of the first link 541 may be aligned. The second link 542 may be fixedly coupled to the first link 541 and a second housing part 20 through a screw fastened to the second screw hole 5423h and the second screw hole 5413h of the first link 541.

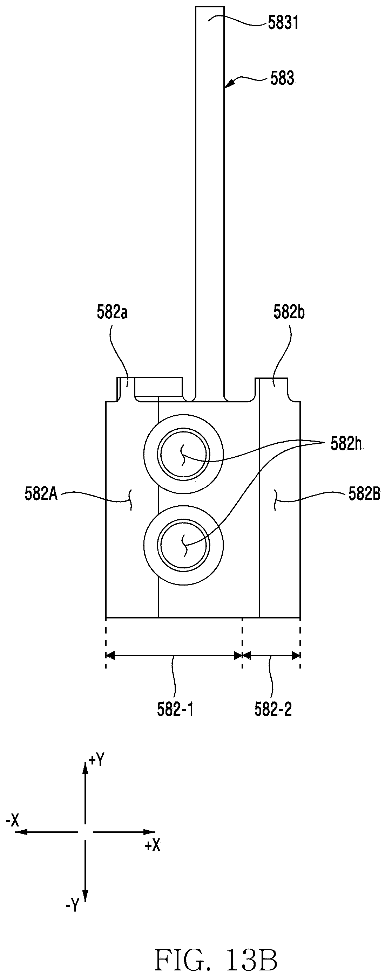

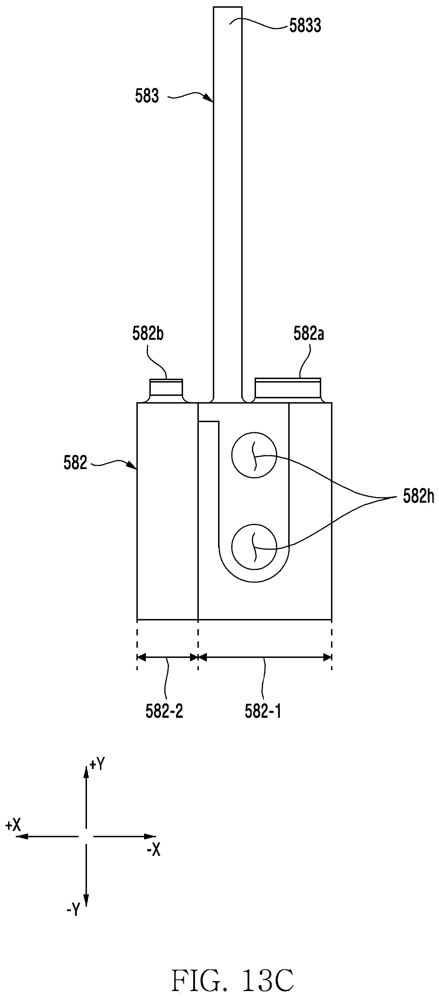

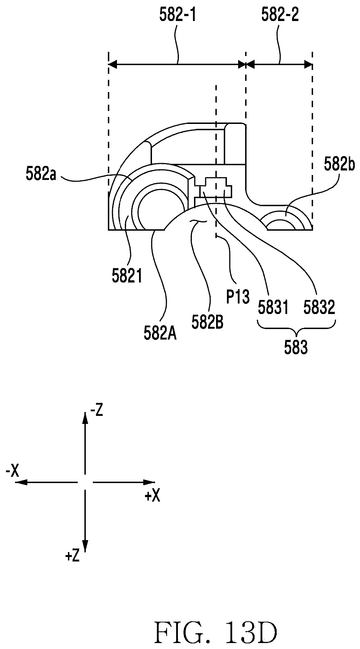

FIGS. 13A, 13B, 13C, and 13D illustrate a second base and a bar of a hinge module. FIG. 13B may be a diagram of a second base 582 of FIG. 13A viewed in a -Z direction. FIG. 13C may be a diagram of the second base 582 of FIG. 13A viewed in a +Z direction. FIG. 13D may be a diagram of the second base 582 of FIG. 13A viewed in a -Y direction.

Referring to FIGS. 13A, 13B, 13C, and 13D, the second base 582 may include a first side portion 582-1 and a second side portion 582-2 opposite to the first side portion 582-1. For example, the first side portion 582-1 may face a direction (e.g., a -X direction) of a first housing part 10, and the second side portion 582-2 may face a direction (e.g., a +X direction) of a second housing part 20. For example, a width (e.g., a length along an X-axis) of the first side portion 582-1 may be greater than a width (e.g., a length along the X-axis) of the second side portion 582-2. Accordingly, referring to FIG. 13D, a center P13 of a total width (e.g., a total length along the X-axis) of the second base 582 may be positioned in the first side portion 582-1 of the first side portion 582-1 and the second side portion 582-2. A thickness (e.g., a length along a Z-axis) of the first side portion 582-1 may be greater than a thickness of the second side portion 582-2.

In an embodiment, a bar 583 may have a symmetrical shape with respect to the center P13. In an embodiment, the center P13 may pass through the bar 583. As a non-limiting example, the center P13 of the second base 582 may substantially coincide with a center of the bar 583.

For example, the bar 583 may include two portions distinguished with respect to a virtual plane that includes the center P13 and is perpendicular to the X-axis. For example, the two portions of the bar 583 may include a first portion 5831 and a second portion 5832. For example, the first portion 5831 may face the direction (e.g., the -X direction) of the first housing part 10, and the second portion 5832 of the bar 583 may face the direction (e.g., the +X direction) of the second housing part 20. For example, a shape of the first portion 5831 of the bar 583 may be symmetrical to a shape of the second portion 5832 of the bar 583 with respect to the virtual plane (e.g., the center P13). Alternatively, the shape of the first portion 5831 of the bar 583 may be asymmetric with the shape of the second portion 5832 of the bar 583 with respect to the virtual plane (e.g., the center P13). For example, a rotational force of the first housing part 10 transmitted to the first portion 5831 of the bar 583 adjacent to the first housing part 10 may be greater than a rotational force of the second housing part 20. Conversely, a rotational force of the second housing part 20 transmitted to the second portion 5832 of the bar 583 adjacent to the second housing part 20 may be greater than a rotational force of the first housing part 10. However, since the first housing part 10 is thicker than the second housing part 20, the first portion 5831 of the bar 583 may have a structure capable of supporting a greater rotational force than the second portion 5832 of the bar 583. For example, a thickness (e.g., a length with respect to the Z-axis) of the first portion 5831 of the bar 583 may be thicker than a thickness (e.g., a length with respect to the Z-axis) of the second portion 5832 of the bar 583. For example, a horizontal length (e.g., a length with respect to the X-axis) of the first portion 5831 of the bar 583 may be longer than a horizontal length (e.g., a length with respect to the X-axis) of the second portion 5832 of the bar 583. For example, a cross-sectional area of the first portion 5831 of the bar 583 may be larger than a cross-sectional area of the second portion 5832 of the bar 583.

Referring back to FIGS. 13A, 13B, 13C, and 13D, the second base 582 may include an upper surface 582A. The upper surface 582A may face, for example, a fourth portion 64 of a display 60 in an unfolded state of the first housing part 10 and the second housing part 20. For example, the upper surface 582A may include a substantially flat first area and a second area formed of a curved surface recessed from the first area. The substantially flat first area of the upper surface 582A may support the fourth portion 64 of the display 60 in the unfolded state of the first housing part 10 and the second housing part 20. The fourth portion 64 of the display 60 may be partially accommodated in a recess 582B formed by the second area of the upper surface 582A in the unfolded state of the first housing part 10 and the second housing part 20.

In an embodiment, the upper surface 582A of the second base 582 may be formed by the first side portion 582-1 and the second side portion 582-2. For example, an area of the upper surface 582A formed by the first side portion 582-1 may be larger than an area of the upper surface 582-A formed by the second side portion 582-2. In addition, an area of the recess 582B formed by the first side portion 582-1 may be larger than an area of the recess 582B formed by the second side portion 582-2.

In an embodiment, the first side portion 582-1 may include a first protruding portion 582a protruding in a direction (e.g., a +Y direction) of a first side portion 581-1 of a first base 581, and the second side portion 582-2 may include a second protruding portion 582b protruding in a direction (e.g., the +Y direction) of a second side portion 581-2 of the first base 581. For example, the first protruding portion 582a of the second base 582 may face a third protruding portion 5812c of the first base 581. For example, the first protruding portion 582a of the second base 582 may be aligned with the third protruding portion 5812c of the first base 581 along a Y-axis direction. For example, the second protruding portion 582b of the second base 582 may face a fourth protruding portion 5812d of the first base 581. For example, the second protruding portion 582b of the second base 582 may be aligned with the fourth protruding portion 5812d of the first base 581 along the Y-axis direction.

When the second base 582 is viewed from above (e.g., FIG. 13B), the bar 583 may be positioned between the first protruding portion 582a and the second protruding portion 582b. A distance from the bar 583 (or the center P13) to the first protruding portion 582a may be smaller than a distance from the bar 583 (or the center P13) to the second protruding portion 582b. For example, a distance from the bar 583 (or the center P13) to a center (e.g., a second axis a2) of the first protruding portion 582a may be smaller than a distance from the bar 583 (or the center P13) to a center (e.g., an axis b) of the second protruding portion 582b.

In an embodiment, a second part 522 of a first spiral arm 520 may be rotatably coupled to the first side portion 582-1. For example, the second part 522 of the first spiral arm 520 may be rotatably coupled to the first protruding portion 582a of the first side portion 582-1. For example, the first protruding portion 582a may guide rotation of the second part 522 of the first spiral arm 520 with respect to the second base 582. A first guide rail 522a of the second part 522 of the first spiral arm 520 may be movably coupled to the first protruding portion 582a. As the first guide rail 522a of the second part 522 of the first spiral arm 520 moves along the first protruding portion 582a of the second base 582, the second part 522 of the first spiral arm 520 may rotate with respect to the second base 582. The first protruding portion 582a may form the second axis a2 of a hinge module 50 together with the first guide rail 522a of the second part 522 of the first spiral arm 520. For example, the second part 522 of the first spiral arm 520 may rotate centered on the second axis a2 through the first protruding portion 582a of the second base 582 and the first guide rail 522a of the first spiral arm 520.

In an embodiment, a second part 532 of a second spiral arm 530 may be rotatably coupled to the second side portion 582-2 of the second base 582. For example, the second part 532 of the second spiral arm 530 may be rotatably coupled to the second protruding portion 582b of the second side portion 582-2. For example, the second protrusion 582b may at least partially guide rotation of the second part 532 of the second spiral arm 530 with respect to the second base 582. For example, a guide rail of the second part 532 of the second spiral arm 530 may be movably coupled to a guide rail defined by the second protruding portion 582b and a hinge housing 15. As the guide rail of the second part 532 of the second spiral arm 530 moves along the guide rail at least partially defined by the second protruding portion 582b, the second part 532 of the second spiral arm 530 may rotate with respect to the second base 582. The second protruding portion 582b may form the axis b of the hinge module 50 together with the guide rail of the second part 532 of the second spiral arm 530. For example, the second part 532 of the second spiral arm 530 may rotate centered on the axis b through the guide rail provided by the second protruding portion 582b of the second base 582.

In an embodiment, the second base 582 may include one or more screw holes for fixedly coupling the second base 582 to the hinge housing 15. For example, the second base 582 may include screw holes 582h. The screw holes 582h may be positioned in the first side portion 582-1. The screw holes 582h may be aligned along a Y-axis. The screw holes 582h (e.g., a center of each of the screw holes 582h) may be positioned so as to be offset from the direction of the first housing part 10 among the direction (e.g., the -X direction) of the first housing part 10 and the direction (e.g., the +X direction) of the second housing part 20 with respect to a line segment passing through a center of the bar 583 and parallel to the Y-axis. The second base 582 may be fixedly coupled to the hinge housing 15 through a screw fastened to the hinge housing 15 through the screw holes 582h.

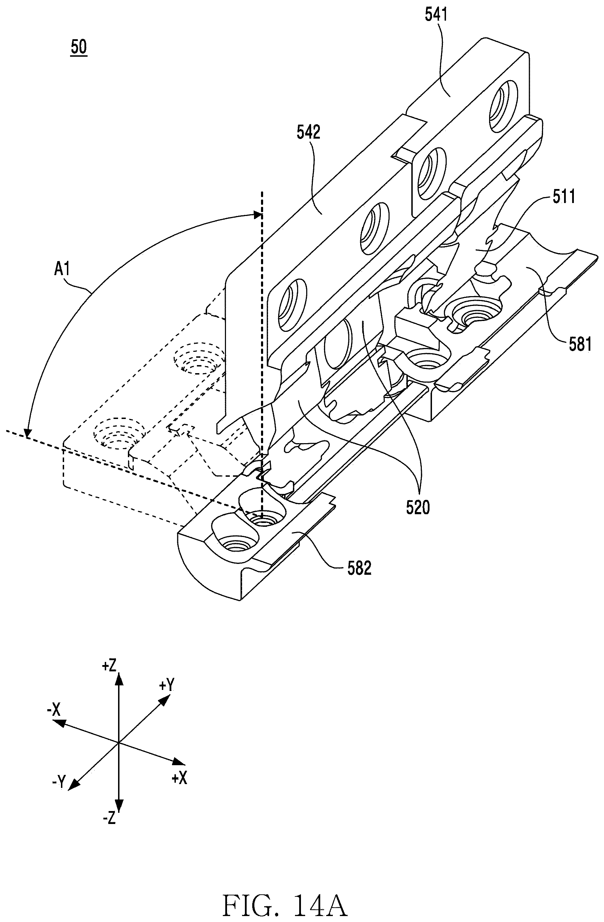

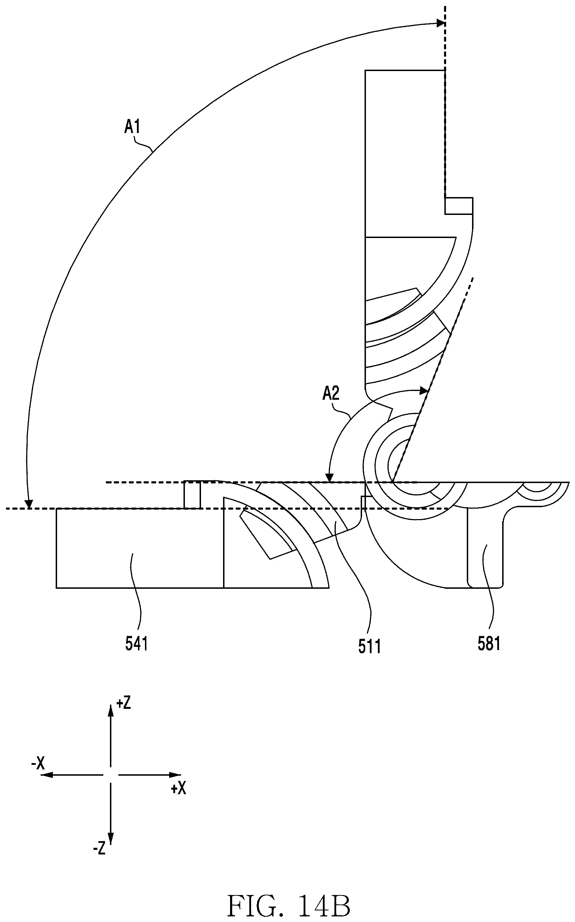

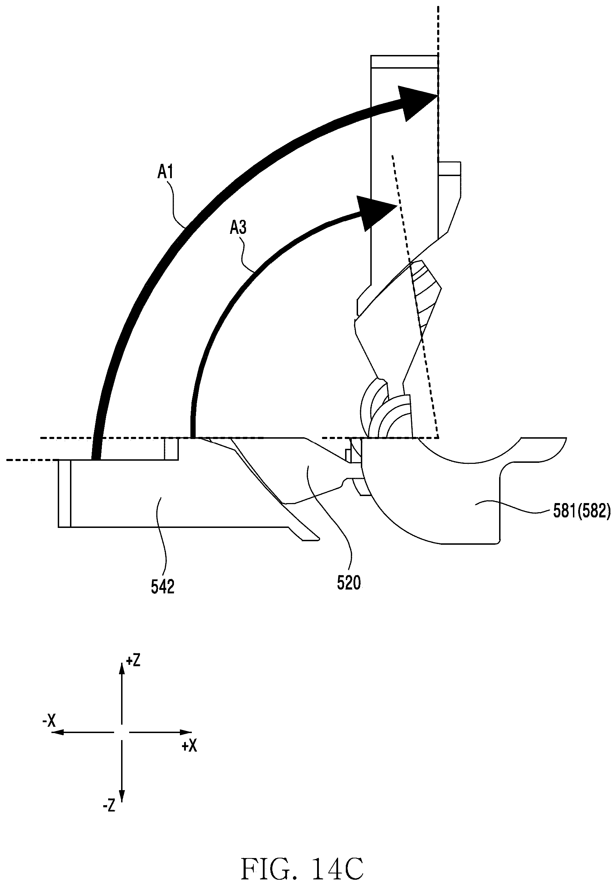

FIGS. 14A, 14B, and 14C are diagrams illustrating an operation of a left hinge of a hinge module. FIG. 14B may correspond to, for example, line A-A' of FIG. 4A, and FIG. 14C may correspond to, for example, line B-B' of FIG. 4A.

Referring to FIG. 14A, a first link 541 and a second link 542 of a hinge module 50 may be configured to be rotatable within a first angle range A1. The hinge module 50 may be configured to rotate a first housing part 10 fixedly coupled to the first link 541 and the second link 542 within the first angle range A1. Accordingly, the hinge module 50 may be configured to switch a state of an electronic device 1 between the unfolded state and the single folded state. The first angle range A1 may be, for example, approximately 0° to approximately 90°. A lower limit of the first angle range A1 may be defined in a direction substantially parallel to an X-axis or an X-Y plane.

Referring to FIG. 14B, a first rotating arm 511 of the hinge module 50 may be configured to rotate within a second angle range A2 (e.g., centered on a first axis a1) while the first link 541 (and/or the first housing part 10) rotates within the first angle range A1. For example, the second angle range A2 may be different from the first angle range A1. The second angle range A2 may be wider than the first angle range A1. For example, the second angle range A2 may be approximately 0° to approximately 110°. A lower limit of the second angle range A2 may be defined in the direction substantially parallel to the X-axis or the X-Y plane.

Referring to FIG. 14C, the first spiral arm 520 of the hinge module 50 may be configured to rotate within a third angle range A3 (e.g., centered on a second axis a2) while the second link 542 (and/or the first housing part 10) rotates within the first angle range A1. For example, the third angle range A3 may be different from the first angle range A1. For example, the third angle range A3 may be different from the second angle range A2. For example, the third angle range A3 may be narrower than the first angle range A1. For example, the third angle range A3 may be narrower than the second angle range A2. For example, the third angle range A3 may be approximately 0° to approximately 80°. A lower limit of the third angle range A3 may be defined in the direction substantially parallel to the X-axis or the X-Y plane.

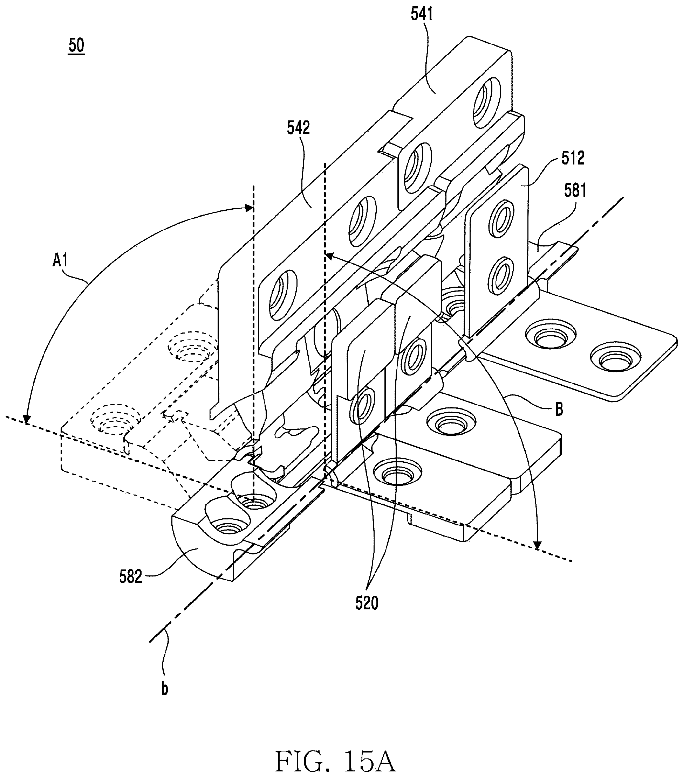

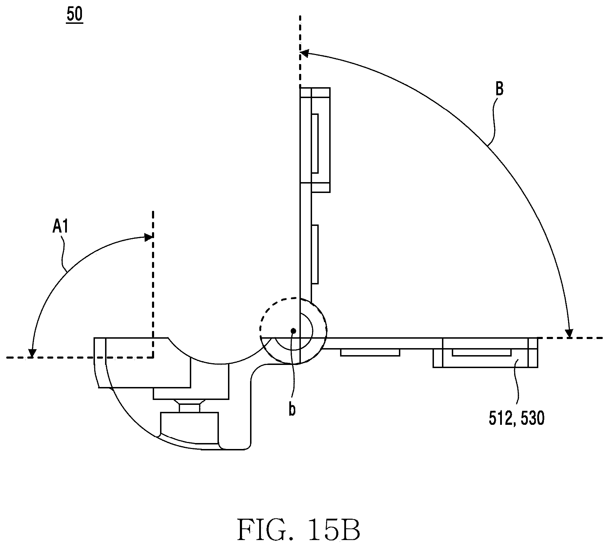

FIGS. 15A and 15B illustrate an operation of a hinge module.

Referring to FIGS. 15A and 15B, a second rotating arm 512 of a hinge module 50 may be configured to rotate within an angle range B while a first link 541 and a second link 542 rotate within a first angle range A1. The second rotating arm 512 of the hinge module 50 may be configured to rotate within the angle range B while a first housing part 10 rotates within the first angular range A1.

A second spiral arm 530 of the hinge module 50 may be configured to rotate within the angle range B while the first link 541 and the second link 542 rotate within the first angle range A1. The second spiral arm 530 of the hinge module 50 may be configured to rotate within the angle range B while the first housing part 10 rotates within the first angle range A1.

In an embodiment, the hinge module 50 may be configured to rotate a second housing part 20 fixedly coupled to the second rotating arm 512 and the second spiral arm 530 within the angle range B while the first housing part 10 rotates within the first angle range A1.

The angle range B may be different from a second angle range A2. For example, the angle range B may be different from a third angle range A3. For example, the angle range B may be substantially the same as the first angle range A1. For example, the angle range B may be approximately 0° to approximately 90°. A lower limit of the angle range B may be defined in a direction substantially parallel to an X-axis or an X-Y plane.

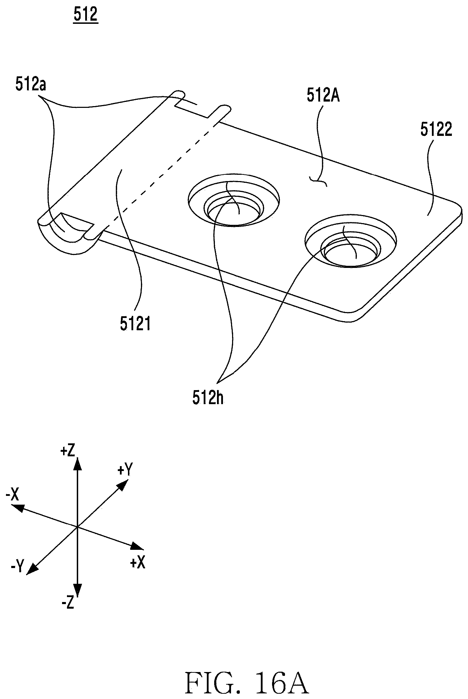

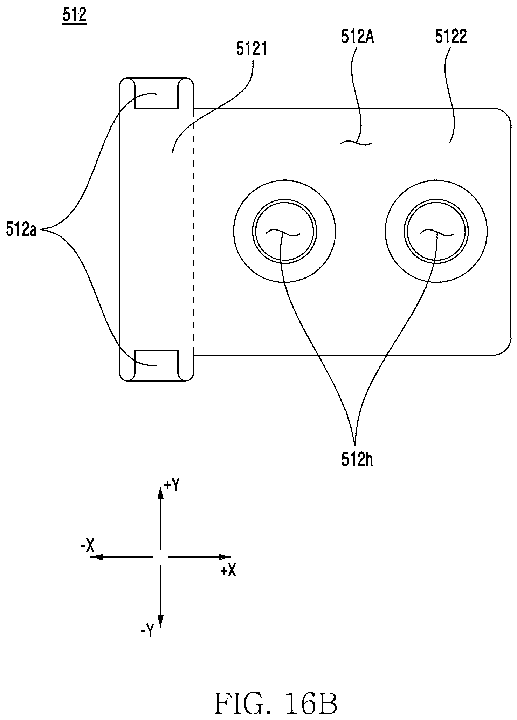

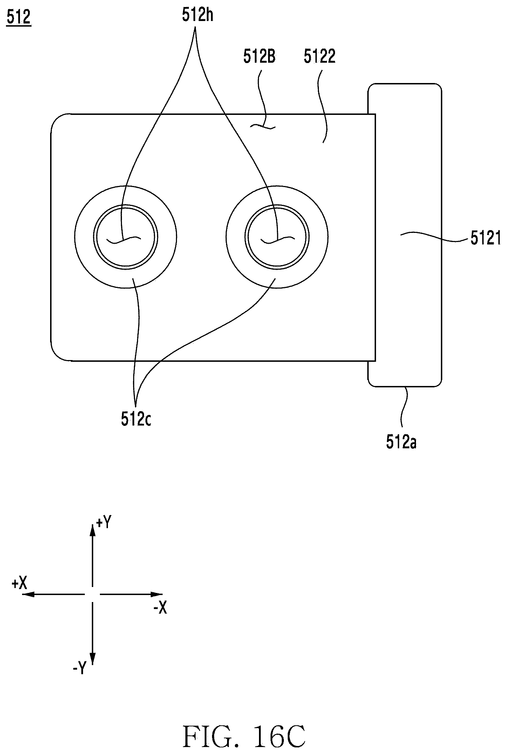

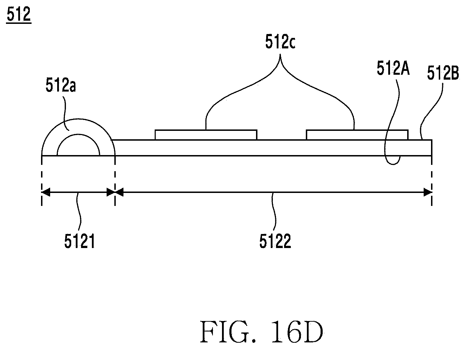

FIGS. 16A, 16B, 16C, and 16D illustrate a second rotating arm of a hinge module. FIG. 16B may be a diagram of a second rotating arm 512 of FIG. 16A viewed in a -Z direction. FIG. 16C may be a diagram of the second rotating arm 512 of FIG. 16A viewed in a +Z direction. FIG. 16D may be a diagram of the second rotating arm 512 of FIG. 16A viewed in a -Y direction.

Referring to FIGS. 16A, 16B, and 16C, the second rotating arm 512 may include a first end portion 5121 and a second end portion 5122 opposite to the first end portion 5121. For example, the first end portion 5121 may face a direction (e.g., a -X direction) of a first base 581, and the second end portion 5122 may face a direction (e.g., a +X direction) of a second housing part 20.

A guide rail 512a to guide rotation of the second rotating arm 512 with respect to the first base 581 may be formed on the first end portion 5121 of the second rotating arm 512. For example, the first end portion 5121 may be rotatably coupled to the first base 5811 in a form in which the guide rail 512a is assembled to second protruding portions 5811b and 5812b formed on a second side portion 581-2 of the first base 581. For example, the guide rail 512a may include a protrusion. For example, the guide rail 512a of the second rotating arm 512 may be accommodated in a space between the second protruding portion 5811b of the first base 581 and a hinge housing 15 and a space between the second protruding portion 5812b of the first base 581 and the hinge housing 15 and may move within the space. The guide rail 512a of the second rotating arm 512 may form an axis b. For example, the second rotating arm 512 may rotate centered on the axis b formed by the guide rail 512a.

The second end portion 5122 of the second rotating arm 512 may be fixedly coupled to the second housing part 20. For example, the second end portion 5122 of the second rotating arm 512 may be fixedly coupled to the second housing part 20 through screws fastened to the second housing part 20 through screw holes 512h formed on the second end portion 5122.

In an embodiment, the second rotating arm 512 may include a substantially flat supporting surface 512A. The supporting surface 512A may be formed by the first end portion 5121 and the second end portion 5122 of the second rotating arm 512. The supporting surface 512A may support a portion (e.g., a fourth portion 64) of a display 60 in an unfolded state of a first housing part 10 and the second housing part 20.

Referring to FIGS. 16C and 16D, the second rotating arm 512 may include screw bosses 512c protruding from a surface 512B opposite to the supporting surface 512A. The screw bosses 512c may define the screw holes 512h, respectively.

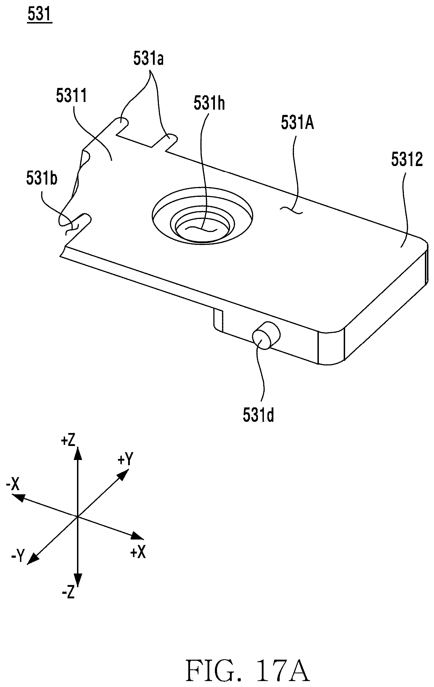

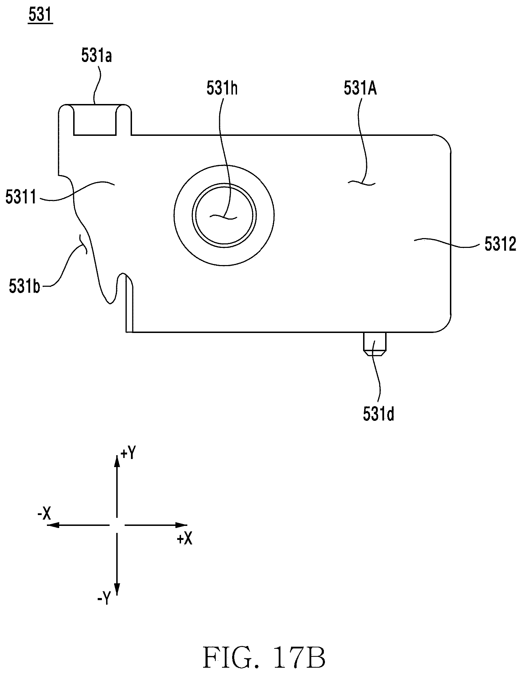

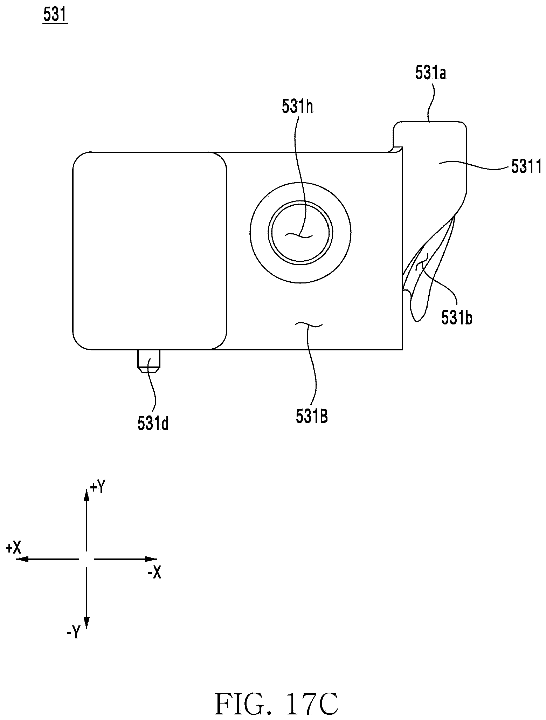

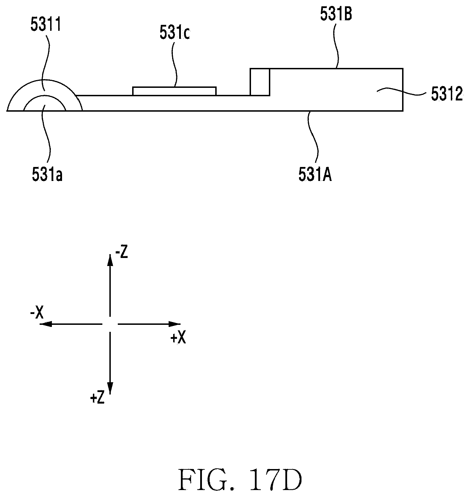

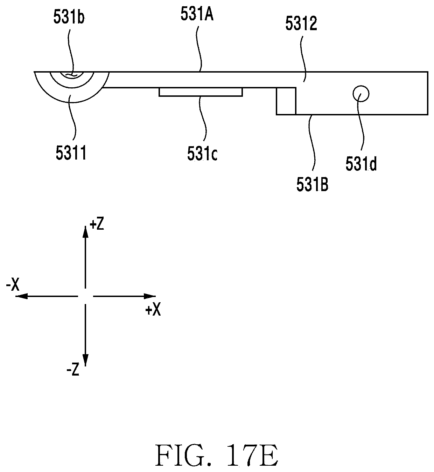

FIGS. 17A, 17B, 17C, 17D, and 17E illustrate a first part of a first spiral arm of a hinge module. FIG. 17B may be a diagram of a first part 531 of a second spiral arm 530 of FIG. 17A viewed in a -Z direction. FIG. 17C may be a diagram of the first part 531 of the second spiral arm 530 of FIG. 17A viewed in a +Z direction. FIG. 17D may be a diagram of the first part 531 of the second spiral arm 530 of FIG. 17A viewed in a -Y direction. FIG. 17E may be a diagram of the first part 531 of the second spiral arm 530 of FIG. 17A viewed in a +Y direction.

Referring to FIGS. 17A, 17B, 17C, 17D, and 17E, the first part 531 of the second spiral arm 530 may include a first end portion 5311 facing a direction (e.g., a -X direction) of a bar 583 of a base assembly 58 and a second end portion 5312 opposite to the first end portion 5311 and facing a direction (e.g., a +X direction)of a second housing part 20.

In an embodiment, the first part 531 may include a first supporting surface 531A. The first supporting surface 531A may be formed by the first end portion 5311 and the second end portion 5312. In an embodiment, the first supporting surface 531A may be substantially flat. The first supporting surface 531A may support a portion (e.g., a fourth portion 64) of a display 60 in an unfolded state of a first housing part 10 and the second housing part 20.

In an embodiment, a guide rail 531a to guide rotation of the first part 531 with respect to a first base 581 may be formed on the first end portion 5311. For example, the guide rail 531a may be formed on a side surface of the first end portion 5311 facing a direction (e.g., the +Y direction) of a second rotating arm 512. For example, the guide rail 531a may be rotatably coupled to a second side portion 581-2 of the first base 581. For example, the guide rail 531a may include a protrusion. For example, the guide rail 531a may be accommodated in a space between a fourth protruding portion 5812d of the first base 581 and a portion of a hinge housing 15, and may be movable within the space. In an embodiment, the guide rail 531a of the first part 531 may form an axis b. For example, the first part 531 of the second spiral arm 530 may rotate centered on the axis b formed by the guide rail 531a.

In an embodiment, a first spiral rail 531b may be formed on the first end portion 5311. For example, the first spiral rail 531b of the first end portion 5311 may be rotatably coupled to a second side portion 552 of a spiral slider 550.

The second end portion 5312 of the first part 531 may be fixedly coupled to the second housing part 20. For example, the first part 531 may be fixedly coupled to the second housing part 20 through screws fastened to the second housing part 20 through a screw hole 531h formed on the second end portion 5312.

The first part 531 may include a protrusion 531d formed on a side surface of the second end portion 5312 facing a direction (e.g., the -Y direction) of a second part 532 of the second spiral arm 530. The protrusion 531d of the first part 531 may be coupled to the second part 532.

Referring to FIGS. 17D and 17E, the first part 531 of the second spiral arm 530 may include a screw boss 531c protruding from a surface 531B opposite the supporting surface 531A. The screw boss 531c may define the screw hole 531h.

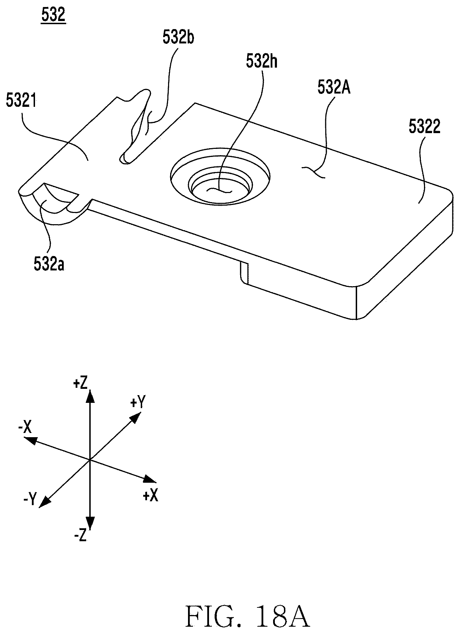

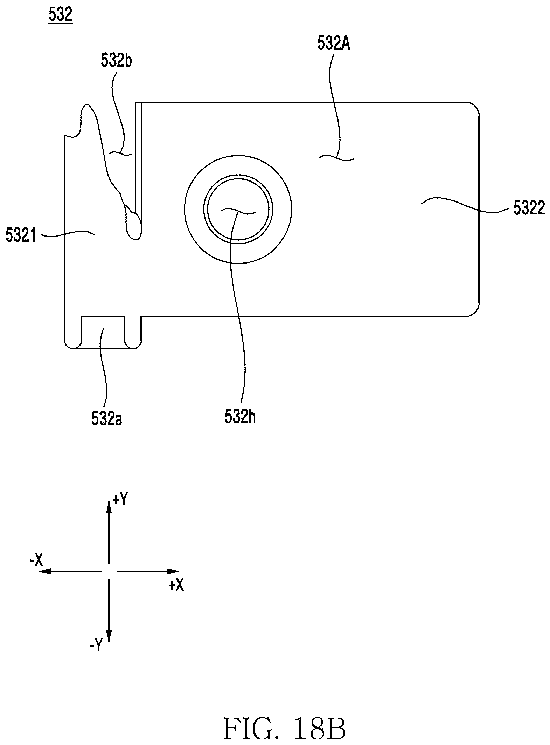

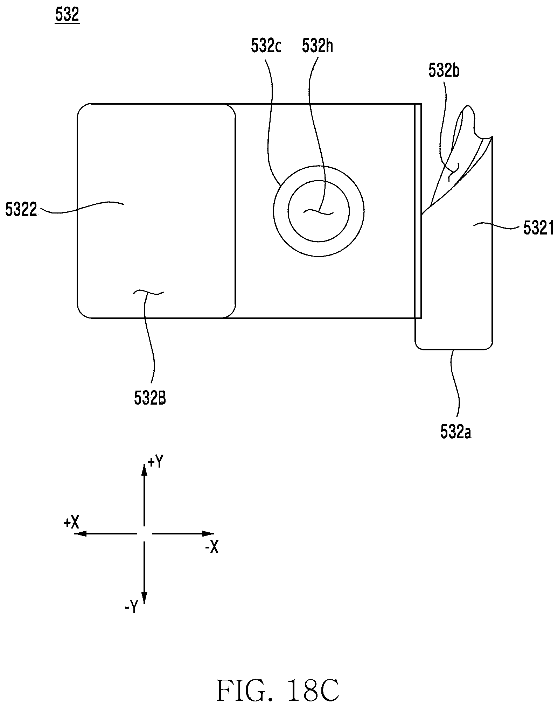

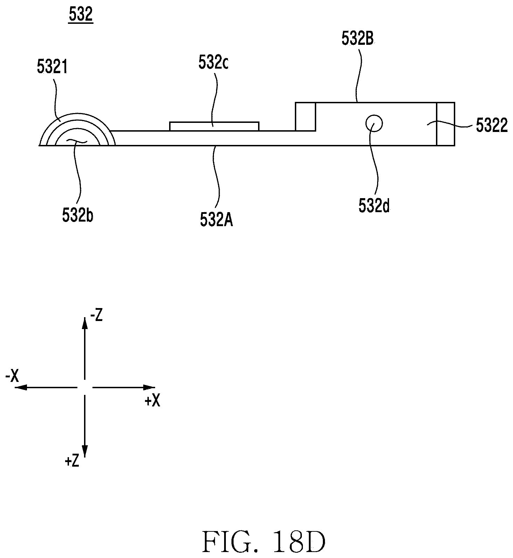

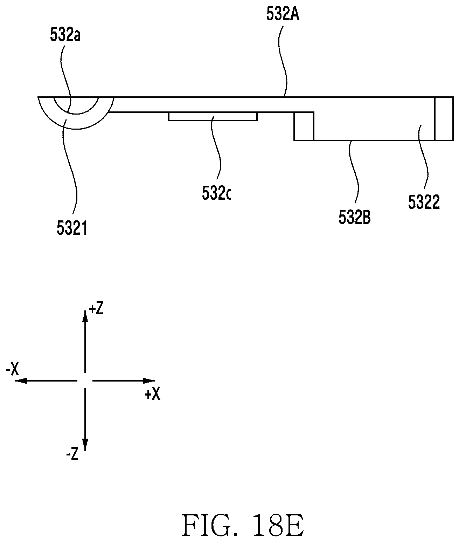

FIGS. 18A, 18B, 18C, 18D, and 18E illustrate a first part of a first spiral arm of a hinge module. FIG. 18B may be a diagram of a second part 532 of a second spiral arm 530 of FIG. 18A viewed in a -Z direction. FIG. 18C may be a diagram of the second part 532 of the second spiral arm 530 of FIG. 18A viewed in a +Z direction. FIG. 18D may be a diagram of the second part 532 of the second spiral arm 530 of FIG. 18A viewed in a -Y direction. FIG. 18E may be a diagram of the second part 532 of the second spiral arm 530 of FIG. 18A viewed in a +Y direction.

Referring to FIGS. 18A, 18B, 18C, 18D, and 18E, the second part 532 of the second spiral arm 530 may include a first end portion 5321 facing a direction (e.g., a -X direction) of a bar 583 of a base assembly 58 and a second end portion 5322 opposite to the first end portion 5321 and facing a direction (e.g., a +X direction)of a second housing part 20.

In an embodiment, the second part 532 may include a second supporting surface 532A. The second supporting surface 532A may be formed by the first end portion 5321 and the second end portion 5322. In an embodiment, the second supporting surface 532A may be substantially flat. The second supporting surface 532A may support a portion (e.g., a fourth portion 64) of a display 60 in an unfolded state of a first housing part 10 and the second housing part 20. In a state in which the second part 532 is coupled to a first part 531, the second supporting surface 532A of the second part 532 may extend substantially without a step from a first supporting surface 531A of the first part 531. The first supporting surface 531A of the first part 531 and the second supporting surface 532A of the second part 532 may be referred to as a supporting surface of the second spiral arm 530.

In an embodiment, a guide rail 532a to guide rotation of the second part 532 with respect to a second base 582 may be formed on the first end portion 5321. For example, the guide rail 532a may be formed on a side surface of the first end portion 5321 (e.g., facing the -Y direction) opposite the first part 531. For example, the guide rail 532a may be rotatably coupled to a second side portion 582-2 of the second base 582. For example, the guide rail 532a may include a protrusion. For example, the guide rail 532a may be accommodated in a space between a second protruding portion 582b of the second base 582 and a portion of a hinge housing 15, and may be movable within the space. In an embodiment, the guide rail 532a of the second part 532 may form an axis b. For example, the second part 532 of the second spiral arm 530 may rotate centered on the axis b formed by the guide rail 532a.

In an embodiment, a second spiral rail 532b may be formed on the first end portion 5321. For example, the second spiral rail 532b of the first end portion 5321 may be rotatably coupled to a second side portion 552 of a spiral slider 550.

The second end portion 5322 of the second part 532 may be fixedly coupled to the second housing part 20. For example, the second part 532 may be fixedly coupled to the second housing part 20 through screws fastened to the second housing part 20 through a screw hole 532h formed on the second end portion 5322.

A groove 532d in which a protrusion 531d of the first part 531 of the second spiral arm 530 is accommodated may be formed on the second end portion 5322 of the second part 532. By a coupling of the groove 532d and the protrusion 531d, rotation of the first part 531 and the second part 532 of the second spiral arm 530 may be linked.

Referring to FIGS. 18D and 18E, the second part 532 of the second spiral arm 530 may include a screw boss 532c protruding from a surface 532B opposite the supporting surface 532A. The screw boss 532c may define the screw hole 532h.

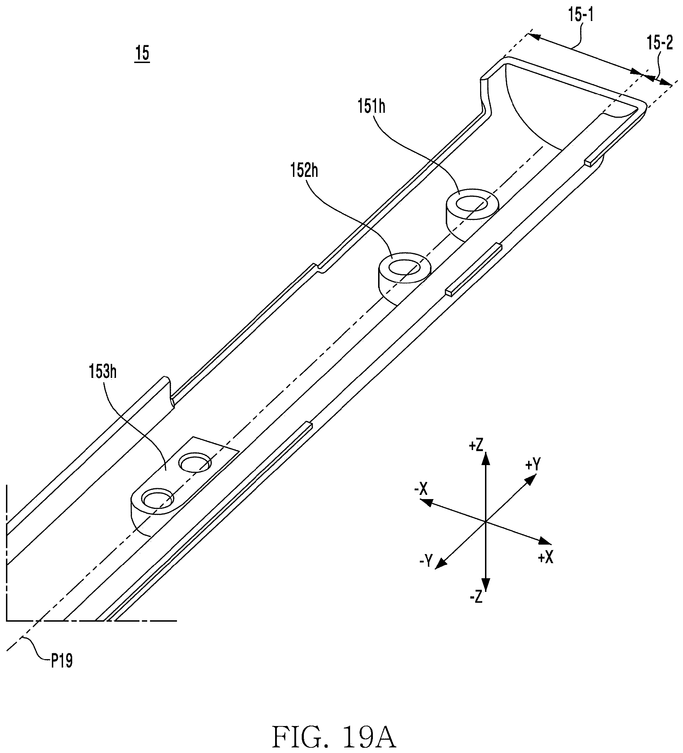

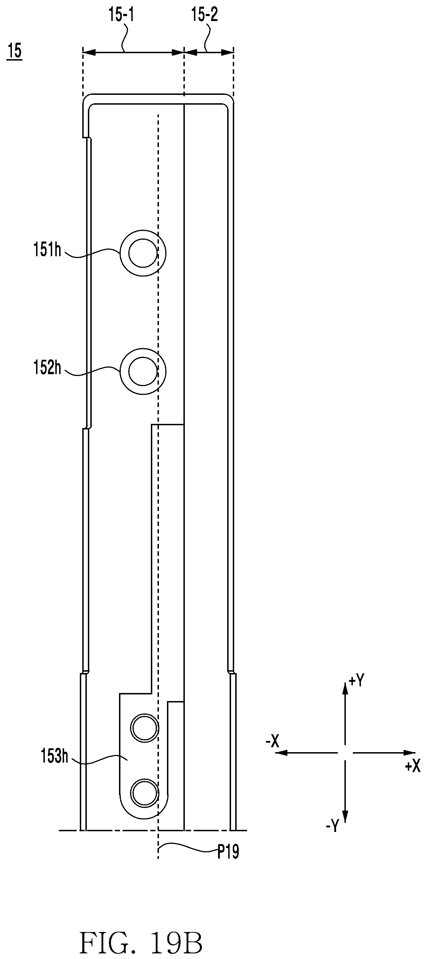

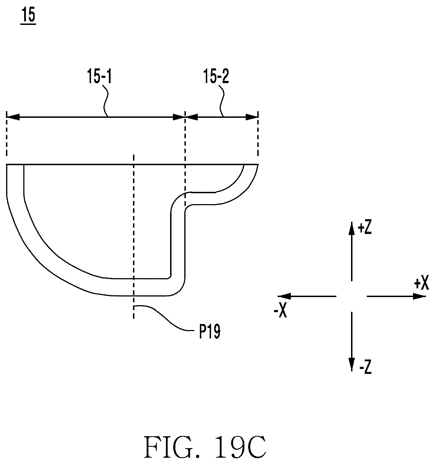

FIGS. 19A, 19B, and 19C illustrate a hinge housing of a hinge module. FIG. 19B may be a diagram of a hinge housing 15 of FIG. 19A viewed in a -Z direction. FIG. 19C may be a diagram of the hinge housing 15 of FIG. 19A viewed in a +Y direction or a -Y direction.

Referring to FIGS. 19A and 19B, the hinge housing 15 may include a first side portion 15-1 and a second side portion 15-2 opposite to the first side portion 15-1. The first side portion 15-1 may face a direction (e.g., a -X direction) of a first housing part 10, and the second side portion 15-2 may face a direction (e.g., a +X direction) of a second housing part 20.

In an embodiment, the hinge housing 15 may include screw bosses 151h, 152h, and 153h protruding from an inner surface of the first side portion 15-1. The screw bosses 151h, 152h, and 153h may be aligned along a Y-axis and may be positioned in sequence along the -Y direction.

In an embodiment, a first base 581 may be seated in the hinge housing 15. For example, a first side portion 581-1 of the first base 581 may be accommodated in the first side portion 15-1 of the hinge housing 15. A second side portion 581-2 of the first base 581 may be accommodated in the second side portion 15-2 of the hinge housing 15. Screw holes 5812h and 5813h positioned in the first side portion 581-1 of the first base 581 may be aligned with the screw bosses 152h and 151h positioned in the first side portion 15-1 of the hinge housing 15, respectively. As a first screw is fastened to the first screw boss 151h of the hinge housing 15 through the second screw hole 5813h of the first base 581, and a second screw is fastened to the second screw boss 152h of the hinge housing 15 through the first screw hole 5812h of the first base 581, the first base 581 may be fixedly coupled to the hinge housing 15.

In an embodiment, a second base 582 may be seated in the hinge housing 15. For example, a first side portion 582-1 of the second base 582 may be accommodated in the first side portion 15-1 of the hinge housing 15. A second side portion 582-2 of the second base 582 may be accommodated in the second side portion 15-2 of the hinge housing 15. Screw holes 582h positioned in the first side portion 582-1 of the second base 582 may be aligned with the third screw boss 153h positioned in the first side portion 15-1 of the hinge housing 15. As screws are respectively fastened to the third screw boss 153h of the hinge housing 15 through the screw holes 582h of the second base 582, the second base 582 may be fixedly coupled to the hinge housing 15.

Referring to FIG. 19C, in an embodiment, a center P19 of a total width (e.g., a total length along an X-axis) of the hinge housing 15 may be defined. In an embodiment, a width (e.g., a length along the X-axis) of the first side portion 15-1 may be greater than a width (e.g., a length along the X-axis) of the second side portion 15-2. Accordingly, the center P19 may be positioned in the first side portion 15-1 of the first side portion 15-1 and the second side portion 15-2 of the hinge housing 15. As a non-limiting example, the center P19 of the hinge housing 15 may substantially coincide with a center P9 of the first base 581 and the second base 582 described above. A thickness (e.g., a length along a Z-axis) of the first side portion 15-1 may be greater than a thickness of the second side portion 15-2.

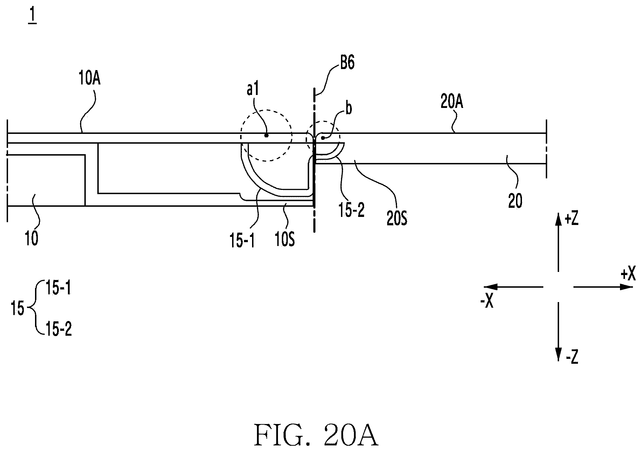

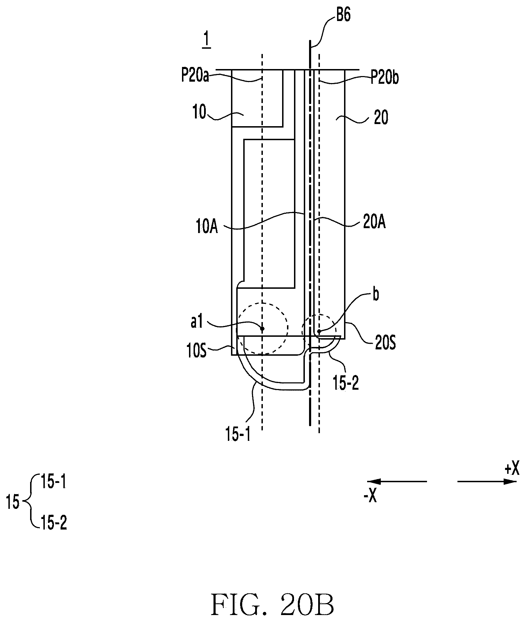

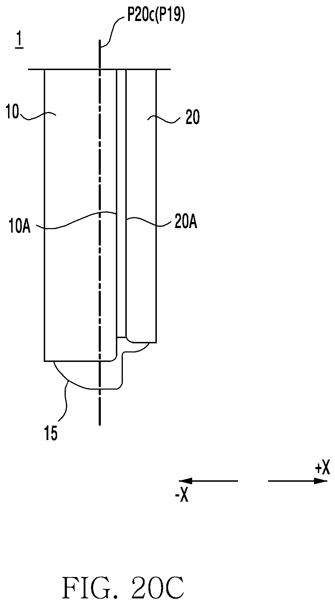

FIG. 20A illustrates an electronic device in an unfolded state. FIGS. 20B and 20C illustrate an electronic device in a single folded state or a multi-folded state.

Referring to FIG. 20A, in the unfolded state of an electronic device 1, a virtual line B6, which is a boundary line (or a boundary surface) between a first side portion 15-1 and a second side portion 15-2 of a hinge housing 15 and/or a boundary a boundary line (or a boundary surface) between a first housing part 10 and a second housing part 20, may be defined.

In an unfolded state of the first housing part 10 and the second housing part 20, an axis b for the second housing part 20 may be closer to the virtual line B6 than a first axis a1 for the first housing part 10. For example, a distance (e.g., a distance along an X-axis) between the axis b for the second housing part 20 and the first housing part 10 may be smaller than a distance (e.g., the distance along the X-axis) between the first axis a1 for the first housing part 10 and the second housing part 20.

In an embodiment, the first housing part 10 may include a side portion 10S facing a direction (e.g., a +X direction) of the second housing part 20. The second housing part 20 may include a side portion 20S facing a direction (e.g., a -X direction) of the first housing part 10. The side portion 10S of the first housing part 10 may be configured to cover at least a portion of the first side portion 15-1 of the hinge housing 15 or to expose it to the outside according to a change in a state of the electronic device 1. In addition, the side portion 20S of the second housing part 20 may be configured to cover at least a portion of the second side portion 15-2 of the hinge housing 15 or expose it to the outside according to a change in a state of the electronic device 1. For example, referring to FIG. 20A, in the unfolded state of the first housing part 10 and the second housing part 20, the at least a portion of the first side portion 15-1 of the hinge housing 15 may be covered by the side portion 10S of the first housing part 10, and the at least a portion of the second side portion 15-2 of the hinge housing 15 may be covered by the side portion 20S of the second housing part 20. Accordingly, in the unfolded state of the first housing part 10 and the second housing part 20, the at least a portion of the first side portion 15-1 of the hinge housing 15 may not be exposed to the outside of the electronic device 1, and the at least a portion of the second side portion 15-2 of the hinge housing 15 may not be exposed to the outside of the electronic device 1. Conversely, referring to FIG. 20B, in a folded state of the first housing part 10 and the second housing part 20, the at least a portion of the first side portion 15-1 of the hinge housing 15 may be exposed to the outside of the electronic device 1 without being covered by the first housing part 10, and the at least a portion of the second side portion 15-2 of the hinge housing 15 may be exposed to the outside of the electronic device 1 without being covered by the second housing part 20.

Referring to FIG. 20B, in the folded state of the first housing part 10 and the second housing part 20, a first virtual plane P20a including a first axis a1 and substantially parallel to a first seating surface 10A of the first housing part 10 may be defined. In addition, in the folded state of the first housing part 10 and the second housing part 20, a second virtual plane P20b including an axis b and substantially parallel to a second seating surface 20A of the second housing part 20 may be defined.

In an embodiment, a first distance (e.g., a distance along the X-axis) between the first virtual plane P20a and the first seating surface 10A of the first housing part 10 may be greater than a second distance (e.g., a distance along the X-axis) between the second virtual plane P20b and the second seating surface 20A of the second housing part 20.

In an embodiment, the first distance may be greater than a distance (e.g., a distance along the X-axis) between the second virtual plane P20b and the first seating surface 10A of the first housing part 10.

Referring to FIG. 20C, in the folded state of the first housing part 10 and the second housing part 20, a third virtual plane P20c extending parallel to the first seating surface 10A of the first housing part 10 and/or the second seating surface 20A of the second housing part 20 from a center (e.g., a center P19) of the hinge housing 15 may be defined.

The first seating surface 10A of the first housing part 10 may be positioned between the third virtual plane P20c and the second seating surface 20A of the second housing part 20. For example, the first seating surface 10A of the first housing part 10 may be positioned offset from the third virtual plane P20c in the direction (e.g., the +X direction) of the second housing part 20.

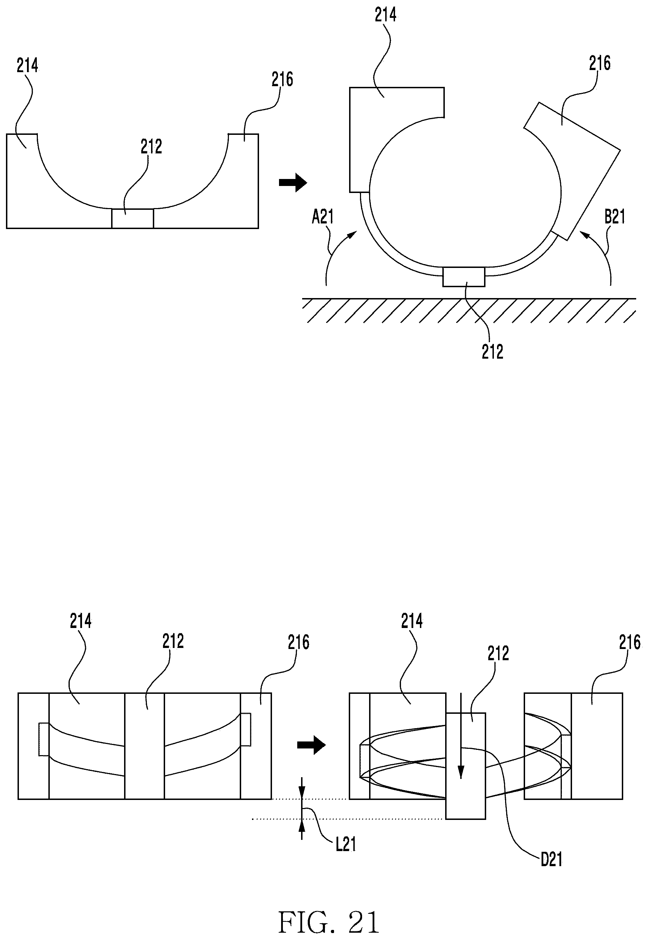

FIG. 21 is a diagram illustrating an asymmetric spiral linkage structure.

Referring to FIG. 21, the asymmetric spiral linkage structure may include a spiral slider 212, a first spiral arm 214 rotatably coupled to a side of the spiral slider 212, and a second spiral arm 216 rotatably coupled to another side of the spiral slider 212.

In a case that movement of the first spiral arm 214 and the second spiral arm 216 in a vertical direction (e.g., a direction D21) is limited, the spiral slider 212 may move in the direction D21 as the first spiral arm 214 and the second spiral arm 216 rotate with respect to the spiral slider 212.

A first spiral rail of the side of the spiral slider 212 to which the first spiral arm 214 is coupled may be configured such that the spiral slider 212 moves by a length L21 in the direction D21 when the first spiral arm 214 rotates at a first angle A21. A second spiral rail of the other side of the spiral slider 212 to which the second spiral arm 216 is coupled may be configured such that the spiral slider 212 moves by the length L21 in the direction D21 when the second spiral arm 216 rotates at a second angle B21.

By forming the first spiral rail and the second spiral rail of the spiral slider 212 to correspond to the first angle A21 and the second angle B21, respectively, the spiral slider 212 may move by the length L21 even when the first angle A21 and the second angle B21 are different.

The description of the spiral slider 212, the first spiral arm 214, and the second spiral arm 216 described above may be applied substantially identically, similarly, or in a corresponding manner to a spiral slider 550, a first spiral arm 520, and a second spiral arm 530 of a hinge module 50.

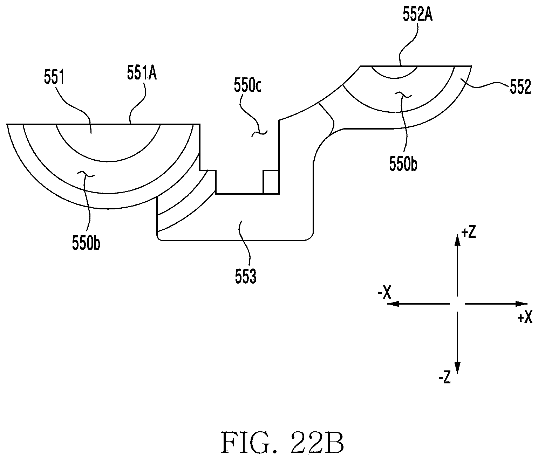

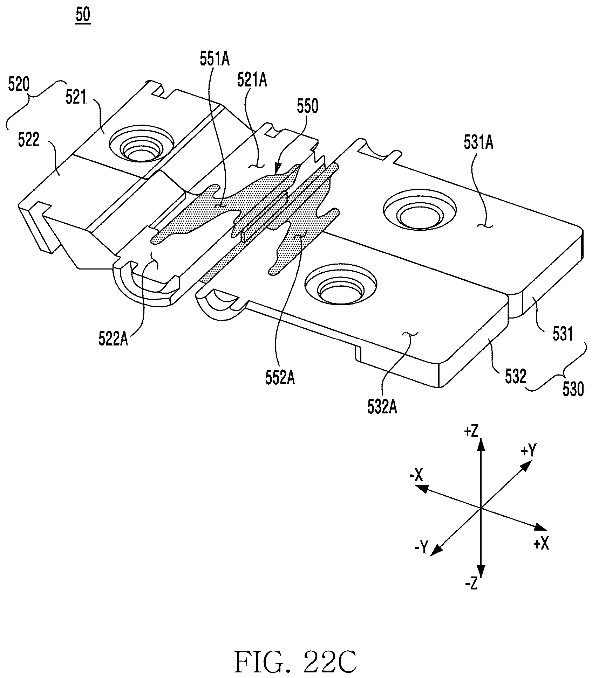

FIGS. 22A and 22B illustrate a spiral slider of a hinge module . FIG. 22C illustrates a hinge module. FIG. 22B is a diagram of a spiral slider 550 of FIG. 22A viewed in a -Y direction.

Referring to FIGS. 22A and 22B, the spiral slider 550 may include a first side portion 551, a second side portion 552, and a guide portion 553 between the first side portion 551 and the second side portion 552. A first spiral rail 550a may be formed on the first side portion 551, and a second spiral rail 550b may be formed on the second side portion 552. A spiral rail (e.g., spiral rails 521c and 522c) of a first spiral arm 520 may be movably coupled to the first spiral rail 550a of the first side portion 551. A spiral rail (e.g., spiral rails 531b and 532b) of a second spiral arm 530 may be movably coupled to the second spiral rail 550b of the second side portion 552.

A length and a shape of the first spiral rail 550a of the first side portion 551 of the spiral slider 550 may be determined based on a position of a second axis a2 of the first spiral arm 520, a second rotation radius r2, and a third angle range A3 in which the first spiral arm 520 rotates. A length and a shape of the second spiral rail 550b of the second side portion 552 of the spiral slider 550 may be determined based on a position of an axis b of the second spiral arm 530, a rotation radius of the second spiral arm 530 with respect to the axis b, and an angle range B in which the second spiral arm 530 rotates. For example, the length and/or the shape of the first spiral rail 550a may be different from the length and/or the shape of the second spiral rail 550b.

In an embodiment, the first side portion 551 of the spiral slider 550 may form a first upper surface 551A, and the second side portion 552 of the spiral slider 550 may form a second upper surface 552A. Each of the first upper surface 551A and the second upper surface 552A may be formed to be substantially flat.

Referring to FIG. 22B, the first upper surface 551A may be positioned at a lower position than the second upper surface 552A. For example, with respect to a Z-axis, the first upper surface 551A may be positioned in a -Z direction of the second upper surface 552A.

In an embodiment, a bar 583 of a base assembly 58 may be disposed on the guide portion 553 of the spiral slider 550. The guide portion 553 may form a guide groove 550c for accommodating the bar 583 together with the first side portion 551 and the second side portion 552.

Referring to FIG. 22C, in an open state (e.g., the unfolded state) of a hinge module 50, the first upper surface 551A of the spiral slider 550 may be extended substantially without a step from a first surface 521A of a first part 521 of the first spiral arm 520 and a first surface 522A of a second part 522 of the first spiral arm 520. In the open state (e.g., the unfolded state) of the hinge module 50, the second upper surface 552A of the spiral slider 550 may be extended substantially without a step from a first surface 531A of a first part 531 of the second spiral arm 530 and a first surface 532A of a second part 532 of the second spiral arm 530. In the unfolded state of an electronic device 1, the second upper surface 552A of the spiral slider 550 may support a portion (e.g., a fourth portion 64) of a display 60.

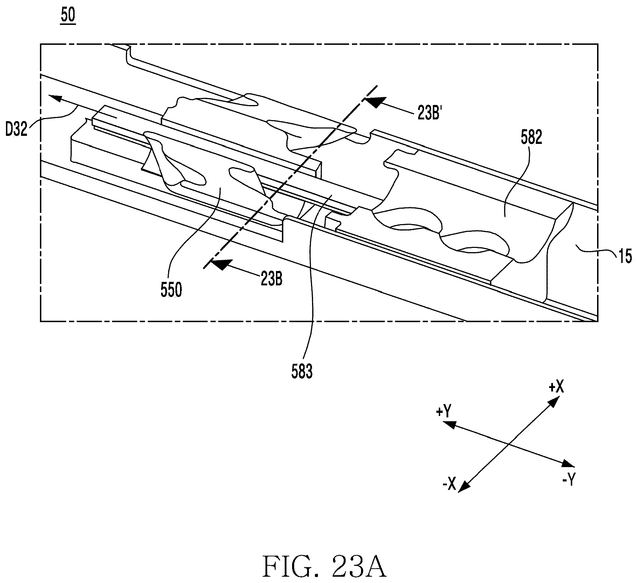

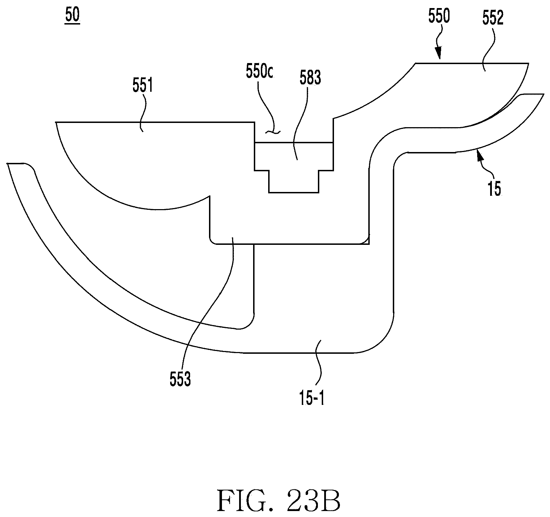

FIG. 23A illustrates a spiral slider accommodated in a hinge housing. FIG. 23B is a cross-sectional view cut along line 23B-23B' of FIG. 23A.

Referring to FIG. 23A, a spiral slider 550 may be slidably coupled to a bar 583. For example, a linearly moving path of the spiral slider 550 may be guided by the bar 583. For example, the spiral slider 550 may move in a direction D32 or a direction opposite to the direction D32 along the bar 583. The movement of the spiral slider 550 in the direction D32 or the direction opposite to the direction D32 may cause rotation of a first spiral arm 520 and a second spiral arm 530 coupled to the spiral slider 550. Conversely, the rotation of the first spiral arm 520 and the second spiral arm 530 may cause the movement of the spiral slider 550 in the direction D32 or the direction opposite to the direction D32.

Referring to FIG. 23B, the spiral slider 550 may be disposed in a hinge housing 15. For example, a guide portion 553 of the spiral slider 550 may be disposed on a first side portion 15-1 of the hinge housing 15. The bar 583 may be accommodated in a guide groove 550c of the spiral slider 550. The bar 583 may prevent the spiral slider 550 from being separated. The guide portion 553 of the spiral slider 550 may be positioned between the bar 583 and the first side portion 15-1 of the hinge housing 15.

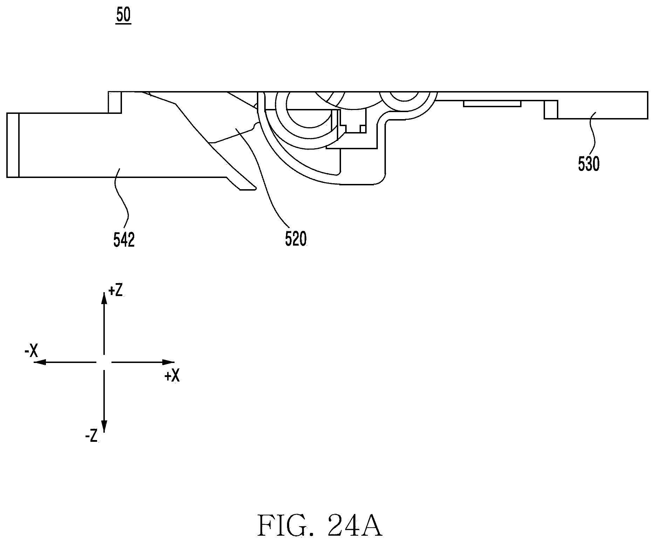

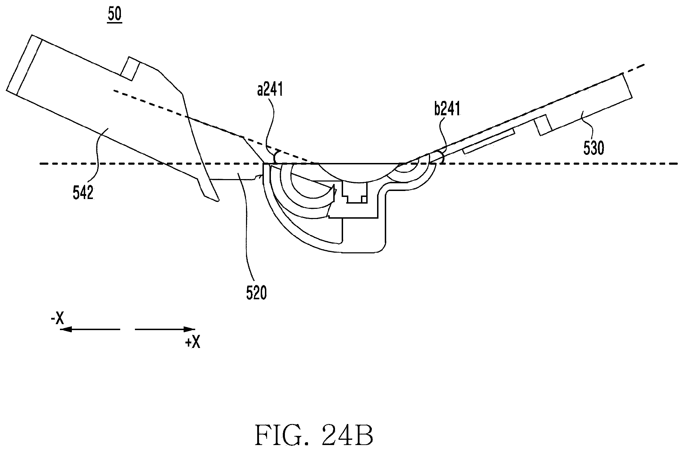

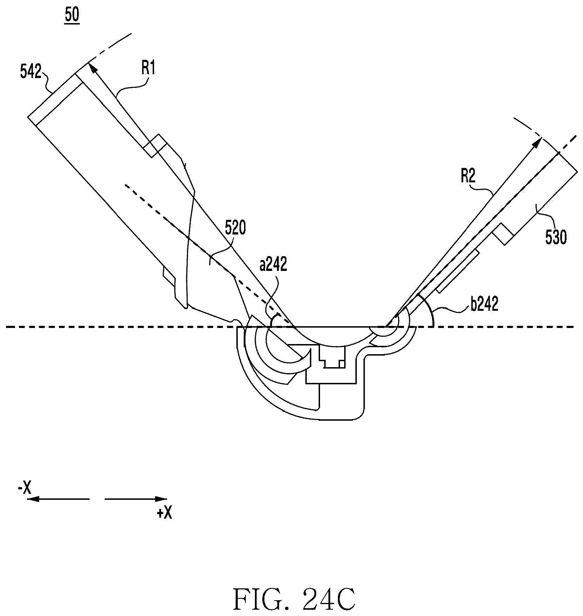

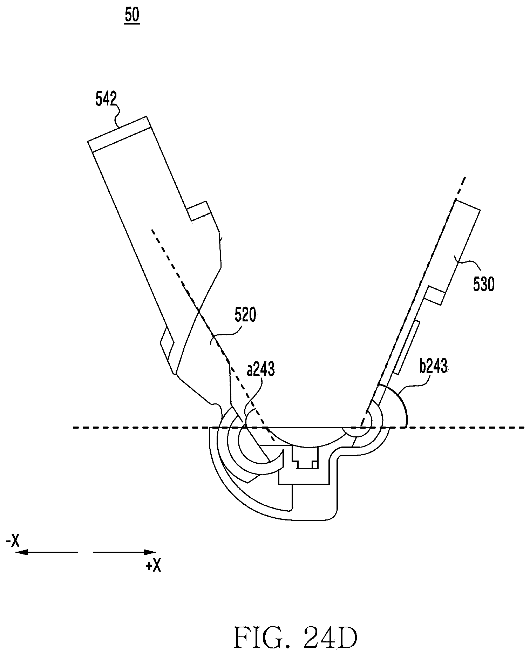

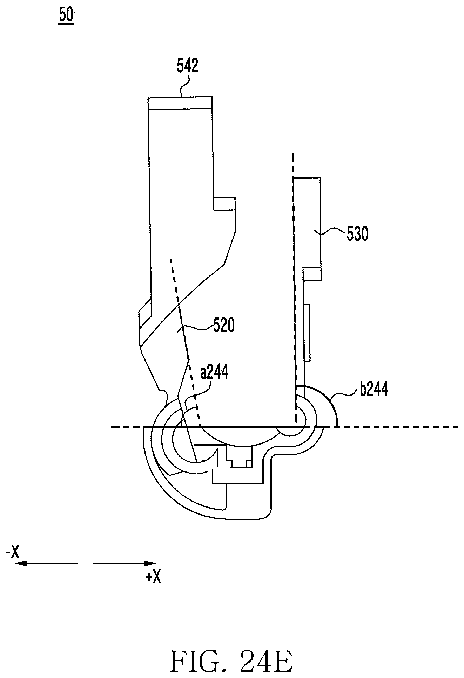

FIGS. 24A, 24B, 24C, 24D, and 24E are diagrams illustrating an operation of a hinge module. FIGS. 24A, 24B, 24C, 24D, and 24E may respectively correspond to line B-B' of FIG. 4A.

FIGS. 24A, 24B, 24C, 24D, and 24E indicate different positions of a hinge module 50.

For example, FIG. 24A indicates a first position of the hinge module 50 in an unfolded state of a first housing part 10 and a second housing part 20.

For example, FIG. 24B may indicate a second position of the hinge module 50. For example, referring to FIG. 23A, the second position may be a position in which a spiral slider 550 of the hinge module 50 is moved by a first distance (e.g., approximately 0.375 mm) in a direction D32 from a position of the spiral slider 550 of the first position. By the movement of the spiral slider 550, a first spiral arm 520 and a second spiral arm 530 may rotate, respectively.

Referring to FIG. 24B, when the hinge module 50 switches from the first position to the second position, the first spiral arm 520 may rotate by a first angle a241. For example, the first spiral arm 520 may rotate by the first angle a241 clockwise from a reference surface (e.g., a surface parallel to an X-axis).

When the hinge module 50 switches from the first position to the second position, the second spiral arm 530 may rotate by a first angle b241. For example, the second spiral arm 530 may rotate by the first angle b241 counterclockwise from the reference surface.

While the spiral slider 550 moves by the first distance, the first angle a241 at which the first spiral arm 520 rotates and the first angle b241 at which the second spiral arm 530 rotates may be different. For example, when switching from the first position to the second position, a rotation speed of the first spiral arm 520 and a rotation speed of the second spiral arm 530 may be different. For example, when switching from the first position to the second position, the rotation speed of the first spiral arm 520 may be slower than the rotation speed of the second spiral arm 530. For example, the first angle a241 may be approximately 20 degrees, and the first angle b241 may be approximately 22.5 degrees.

FIG. 24C may indicate a third position of the hinge module 50. For example, the third position may be a position in which the spiral slider 550 of the hinge module 50 is moved further by the first distance in the direction D32 from a position of the spiral slider 550 of the second position. For example, the third position may be a position in which the spiral slider 550 of the hinge module 50 is moved by a second distance (e.g., approximately 0.75 mm) corresponding to twice the first distance in the direction D32 from the position of the spiral slider 550 of the first position.

Referring to FIG. 24C, when the hinge module 50 switches from the first position to the third position, the first spiral arm 520 may rotate by a second angle a242. For example, the first spiral arm 520 may rotate by the second angle a242 clockwise from the reference surface.

When the hinge module 50 switches from the first position to the third position, the second spiral arm 530 may rotate by a second angle b242. For example, the second spiral arm 530 may rotate by the second angle b242 counterclockwise from the reference surface.

While the spiral slider 550 moves by the second distance, the second angle a242 at which the first spiral arm 520 rotates and the second angle b242 at which the second spiral arm 530 rotates may be different. For example, when switching from the first position to the third position, a rotation speed of the first spiral arm 520 and a rotation speed of the second spiral arm 530 may be different. For example, when switching from the first position to the third position, the rotation speed of the first spiral arm 520 may be slower than the rotation speed of the second spiral arm 530. For example, the second angle a242 may be approximately 40 degrees, and the second angle b242 may be approximately 45 degrees.

FIG. 24D may indicate a fourth position of the hinge module 50. For example, the fourth position may be a position in which the spiral slider 550 of the hinge module 50 is moved further by the first distance in the direction D32 from a position of the spiral slider 550 of the third position. For example, the fourth position may be a position in which the spiral slider 550 of the hinge module 50 is moved by a third distance (e.g., approximately 1.125mm) corresponding to three times the first distance in the direction D32 from the position of the spiral slider 550 of the first position.

Referring to FIG. 24D, when the hinge module 50 switches from the first position to the fourth position, the first spiral arm 520 may rotate by a third angle a243. For example, the first spiral arm 520 may rotate by the third angle a243 clockwise from the reference surface.

When the hinge module 50 switches from the first position to the fourth position, the second spiral arm 530 may rotate by a third angle b243. For example, the second spiral arm 530 may rotate by the third angle b243 counterclockwise from the reference surface.

While the spiral slider 550 moves by the third distance, the third angle a243 at which the first spiral arm 520 rotates and the third angle b243 at which the second spiral arm 530 rotates may be different. For example, when switching from the first position to the fourth position, a rotation speed of the first spiral arm 520 and a rotation speed of the second spiral arm 530 may be different. For example, when switching from the first position to the fourth position, the rotation speed of the first spiral arm 520 may be slower than the rotation speed of the second spiral arm 530. For example, the third angle a243 may be approximately 60 degrees, and the third angle b243 may be approximately 67.5 degrees.

FIG. 24E may indicate a fifth position of the hinge module 50. For example, the fifth position may be a position of the hinge module 50 in a folded state of the first housing part 10 and the second housing part 20. For example, the fifth position may be a position in which the spiral slider 550 of the hinge module 50 is moved further by the first distance in the direction D32 from a position of the spiral slider 550 of the fourth position. For example, the fifth position may be a position in which the spiral slider 550 of the hinge module 50 is moved by a fourth distance (e.g., approximately 1.5 mm) corresponding to four times the first distance in the direction D32 from the position of the spiral slider 550 of the first position.

Referring to FIG. 24E, when the hinge module 50 switches from the first position to the fifth position, the first spiral arm 520 may rotate by a fourth angle a244. For example, the first spiral arm 520 may rotate by the fourth angle a244 clockwise from the reference surface.

When the hinge module 50 switches from the first position to the fifth position, the second spiral arm 530 may rotate by a fourth angle b244. For example, the second spiral arm 530 may rotate by the fourth angle b244 counterclockwise from the reference surface.

While the spiral slider 550 moves by the third distance, the fourth angle a244 at which the first spiral arm 520 rotates and the fourth angle b244 at which the second spiral arm 530 rotates may be different. For example, when switching from the first position to the fifth position, a rotation speed of the first spiral arm 520 and a rotation speed of the second spiral arm 530 may be different. For example, when switching from the first position to the fifth position, the rotation speed of the first spiral arm 520 may be slower than the rotation speed of the second spiral arm 530. For example, the fourth angle a244 may be approximately 80 degrees, and the fourth angle b244 may be approximately 90 degrees.

In an embodiment, the first hinge part and the second hinge part of the hinge module 50 may have an asymmetric structure. For example, a rotation radius of the first hinge part of the hinge module 50 may be different from a rotation radius of the second hinge part of the hinge module 50. For example, the rotation radius of the first hinge part of the hinge module 50 may be smaller than the rotation radius of the second hinge part of the hinge module 50. For example, referring to FIG. 24C, a rotation radius R1 of the first hinge part including the first spiral arm 520 and a second link 542 may be different from a rotation radius R2 of the second hinge part including the second spiral arm 530. For example, the rotation radius R1 of the first hinge part may be smaller than the rotation radius R2 of the second hinge part.

For example, the rotation radius R1 of the first hinge part may be a distance between a rotation axis (e.g., a first axis a1 and/or a second axis a2) of the first hinge part and a specific point (e.g., a specific point of a first link 541 furthest from the first axis a1 and/or a specific point of the second link 542 furthest from the second axis a2) of the first hinge part furthest from the rotation axis.

For example, the rotation radius R2 of the second hinge part may be a distance between a rotation axis (e.g., an axis b) of the second hinge part and a specific point (e.g., a specific point of a second rotating arm 512 furthest from an axis b2 and/or a specific point of the second spiral arm 530 furthest from the axis b2) of the second hinge part furthest from the rotation axis.

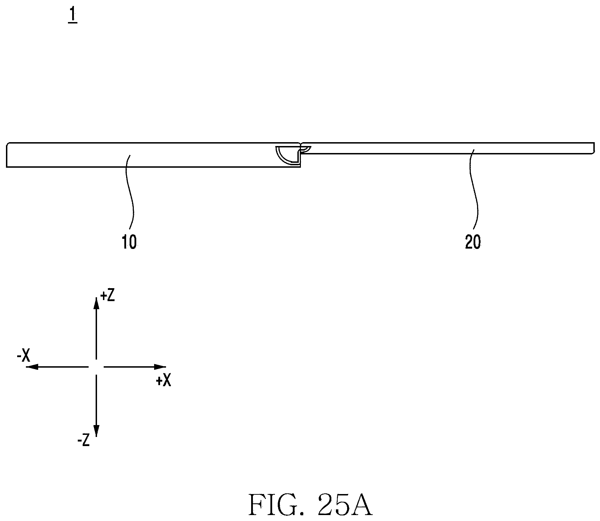

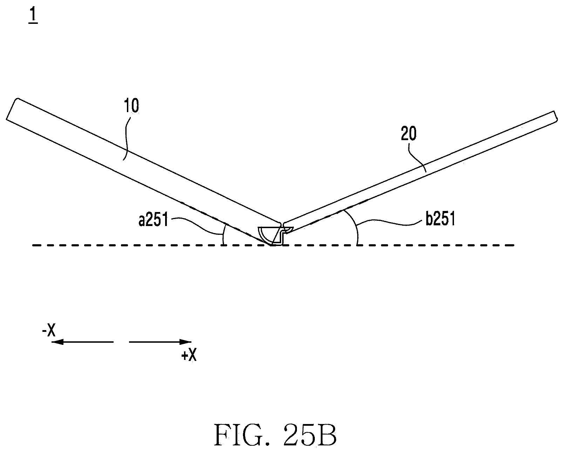

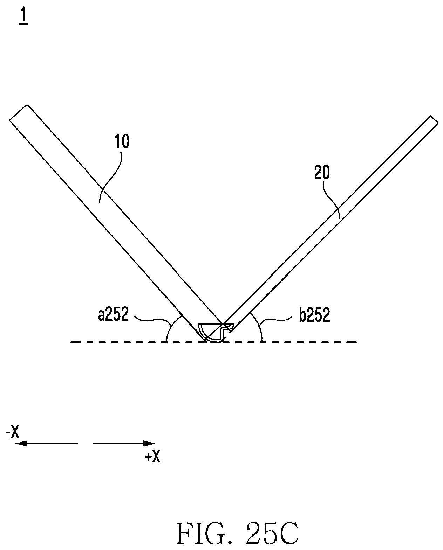

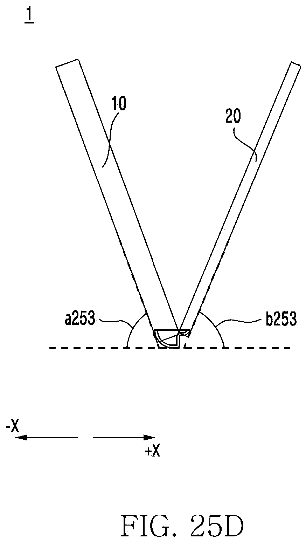

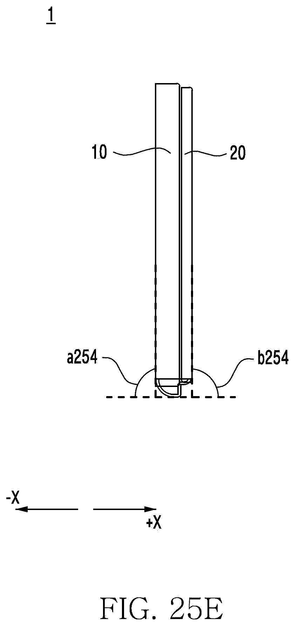

FIGS. 25A, 25B, 25C, 25D, and 25E illustrate states of an electronic device according to positions of a hinge module.

FIG. 25A indicates a first housing part 10 and a second housing part 20 when a hinge module 50 is in the first position. Referring to FIG. 25A, when the hinge module 50 is in the first position, the first housing part 10 and the second housing part 20 may be unfolded from each other. For example, the first housing part 10 and the second housing part 20 may be substantially parallel and placed on one plane (e.g., an X-Y plane).

FIG. 25B indicates the first housing part 10 and the second housing part 20 when the hinge module 50 is in the second position. Referring to FIG. 25B, when the hinge module 50 switches from the first position to the second position, the first housing part 10 may rotate clockwise by a first angle a251 from the reference surface. When the hinge module 50 switches from the first position to the second position, the second housing part 20 may rotate counterclockwise by a first angle b251 from the reference surface.

When the hinge module 50 switches from the first position to the second position, the first angle a251 at which the first housing part 10 is rotated and the first angle b251 at which the second housing part 20 is rotated may be different. For example, when the hinge module 50 switches from the first position to the second position, a rotation speed of the first housing part 10 and a rotation speed of the second housing part 20 may be different. For example, the first angle a251 may be approximately 25.39 degrees, and the second angle b252 may be approximately 22.5 degrees.

FIG. 25C indicates the first housing part 10 and the second housing part 20 when the hinge module 50 is in the third position. Referring to FIG. 25C, when the hinge module 50 switches from the first position to the third position, the first housing part 10 may rotate clockwise by a second angle a252 from the reference surface. When the hinge module 50 switches from the first position to the third position, the second housing part 20 may rotate counterclockwise by a second angle b252 from the reference surface.

When the hinge module 50 switches from the first position to the third position, the second angle a252 at which the first housing part 10 is rotated and the second angle b252 at which the second housing part 20 is rotated may be different. For example, when the hinge module 50 switches from the first position to the second position, a rotation speed of the first housing part 10 and a rotation speed of the second housing part 20 may be different. For example, the second angle a252 may be approximately 48.31 degrees, and the second angle b252 may be approximately 45 degrees.

FIG. 25D indicates the first housing part 10 and the second housing part 20 when the hinge module 50 is in the fourth position. Referring to FIG. 25D, when the hinge module 50 switches from the first position to the fourth position, the first housing part 10 may rotate clockwise by a third angle a253 from the reference surface. When the hinge module 50 switches from the first position to the fourth position, the second housing part 20 may rotate counterclockwise by a third angle b253 from the reference surface.

When the hinge module 50 switches from the first position to the fourth position, the third angle a253 at which the first housing part 10 is rotated and the third angle b253 at which the second housing part 20 is rotated may be different. For example, when the hinge module 50 switches from the first position to the second position, a rotation speed of the first housing part 10 and a rotation speed of the second housing part 20 may be different. For example, the third angle a253 may be approximately 69.73 degrees, and the third angle b253 may be approximately 67.5 degrees.

FIG. 25E indicates the first housing part 10 and the second housing part 20 when the hinge module 50 is in the fifth position. Referring to FIG. 25E, when the hinge module 50 switches from the first position to the fifth position, the first housing part 10 may rotate clockwise by a fourth angle a254 from the reference surface. When the hinge module 50 switches from the first position to the fifth position, the second housing part 20 may rotate counterclockwise by a fourth angle b254 from the reference surface.

When the hinge module 50 switches from the first position to the fifth position, the fourth angle a254 at which the first housing part 10 is rotated and the fourth angle b254 at which the second housing part 20 is rotated may be substantially the same. For example, the fourth angle a254 may be approximately 90 degrees, and the fourth angle b254 may be approximately 90 degrees.

In an embodiment, while the hinge module 50 switches from the first position to the fifth position, a rotation speed of the second housing part 20 may be maintained substantially the same, and the first housing part 10 may have different speeds according to a section. For example, the second angle b252 of the second housing part 20 may correspond to twice the first angle b251, the third angle b253 may correspond to three times the first angle b251, and the fourth angle b254 may correspond to four times the first angle b251. In contrast, the first angle a251 of the first housing part 10, a difference value between the second angle a252 and the first angle a251, a difference value between the third angle a253 and the second angle a252, and a difference value between the fourth angle a254 and the third angle a253 may be different from each other. This may be because the left hinge of the hinge module 50 that rotates the first housing part 10 has a multi-bar link mechanism, and the right hinge of the hinge module 50 that rotates the second housing part 20 has a single bar link mechanism.

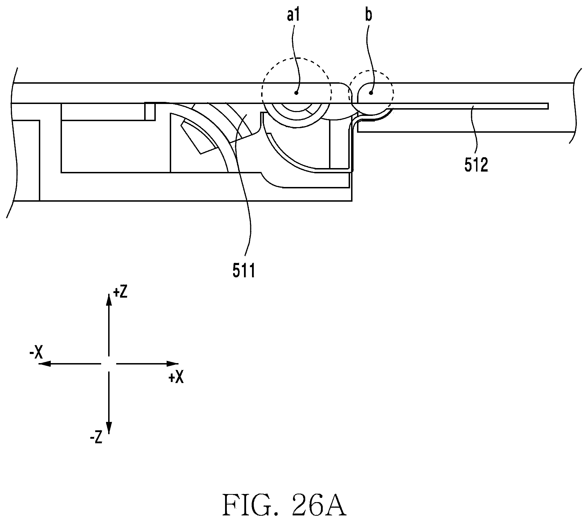

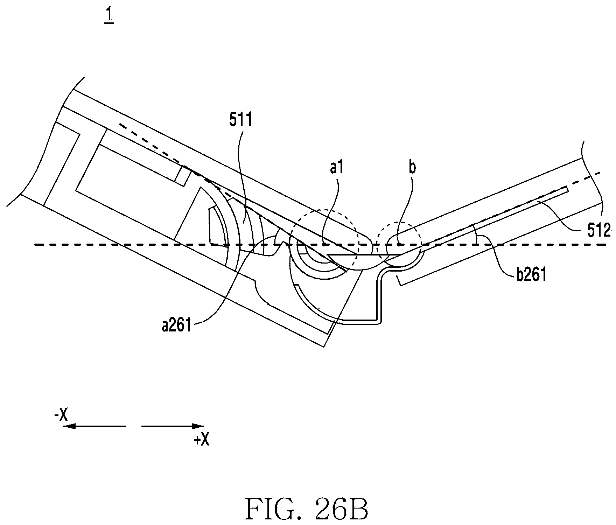

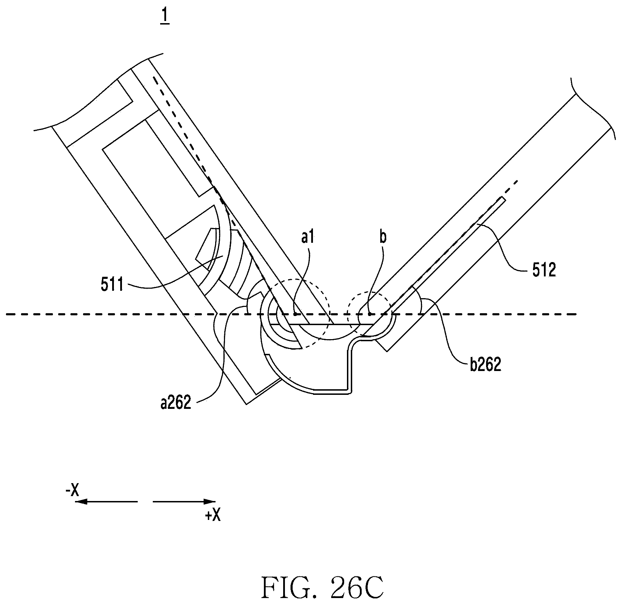

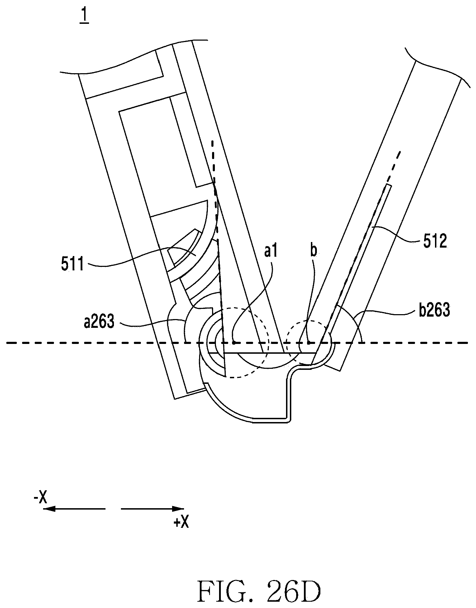

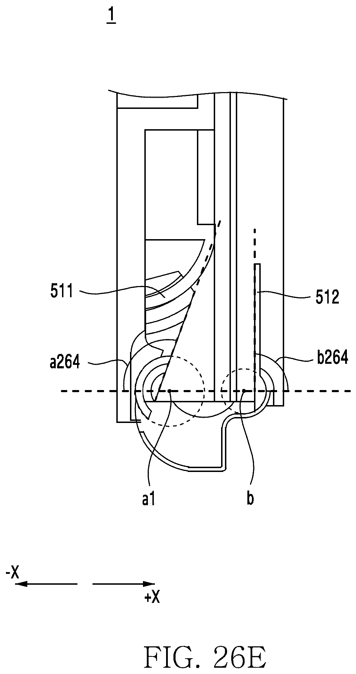

FIGS. 26A, 26B, 26C, 26D, and 26E are diagrams illustrating an operation of a hinge module. FIGS. 26A, 26B, 26C, 26D, and 26E may respectively correspond to line A-A' of FIG. 4A.

FIG. 26A indicates a hinge module 50 at the first position, FIG. 26B indicates the hinge module 50 at the second position, FIG. 26C indicates the hinge module 50 at the third position, FIG. 26D indicates the hinge module at the fourth position, and FIG. 26E indicates the hinge module 50 at the fifth position.

Referring to FIGS. 26A and 26B, when the hinge module 50 switches from the first position to the second position, a first rotating arm 511 may rotate by a first angle a261. For example, the first rotating arm 511 may rotate by the first angle a261 clockwise from the reference surface.

When the hinge module 50 switches from the first position to the second position, a second rotating arm 512 may rotate by a first angle b261. For example, the second rotating arm 512 may rotate by the first angle b261 counterclockwise from the reference surface.

In an embodiment, the first angle a261 at which the first rotating arm 511 rotates and the first angle b261 at which the second rotating arm 512 rotates may be different. For example, when switching from the first position to the second position, a rotation speed of the first rotating arm 511 and a rotation speed of the second rotating arm 512 may be different. For example, when switching from the first position to the second position, the rotation speed of the first rotating arm 511 may be faster than the rotation speed of the second rotating arm 512. For example, the first angle a261 may be approximately 33.1 degrees, and the first angle b261 may be approximately 22.5 degrees.

Referring to FIG. 26C, when the hinge module 50 switches from the first position to the third position, the first rotating arm 511 may rotate by a second angle a262. For example, the first rotating arm 511 may rotate by the second angle a262 clockwise from the reference surface.

When the hinge module 50 switches from the first position to the third position, the second rotating arm 512 may rotate by a second angle b262. For example, the second rotating arm 512 may rotate by the second angle b262 counterclockwise from the reference surface.

In an embodiment, the second angle a262 at which the first rotating arm 511 rotates and the second angle b262 at which the second rotating arm 512 rotates may be different. For example, when switching from the first position to the third position, a rotation speed of the first rotating arm 511 and a rotation speed of the second rotating arm 512 may be different. For example, when switching from the first position to the third position, the rotation speed of the first rotating arm 511 may be faster than the rotation speed of the second rotating arm 512. For example, the second angle a262 may be approximately 61.3 degrees, and the second angle b262 may be approximately 45 degrees.

Referring to FIG. 26D, when the hinge module 50 switches from the first position to the fourth position, the first rotating arm 511 may rotate by a third angle a263. For example, the first rotating arm 511 may rotate by the third angle a263 clockwise from the reference surface.

When the hinge module 50 switches from the first position to the fourth position, the second rotating arm 512 may rotate by a third angle b263. For example, the second rotating arm 512 may rotate by the third angle b263 counterclockwise from the reference surface.

The third angle a263 at which the first rotating arm 511 rotates and the third angle b263 at which the second rotating arm 512 rotates may be different. For example, when switching from the first position to the fourth position, a rotation speed of the first rotating arm 511 and a rotation speed of the second rotating arm 512 may be different. For example, when switching from the first position to the fourth position, the rotation speed of the first rotating arm 511 may be faster than the rotation speed of the second rotating arm 512. For example, the third angle a263 may be approximately 86.8 degrees, and the third angle b263 may be approximately 67.5 degrees.

Referring to FIG. 26E, when the hinge module 50 switches from the first position to the fifth position, the first rotating arm 511 may rotate by a fourth angle a264. For example, the first rotating arm 511 may rotate by the fourth angle a264 clockwise from the reference surface.

When the hinge module 50 switches from the first position to the fifth position, the second rotating arm 512 may rotate by a fourth angle b264. For example, the second rotating arm 512 may rotate by the fourth angle b264 counterclockwise from the reference surface.

The fourth angle a264 at which the first rotating arm 511 rotates and the fourth angle b264 at which the second rotating arm 512 rotates may be different. For example, when switching from the first position to the fifth position, a rotational speed of the first rotating arm 511 and a rotational speed of the second rotating arm 512 may be different. For example, when switching from the first position to the fifth position, the rotation speed of the first rotating arm 511 may be faster than the rotation speed of the second rotating arm 512. For example, the fourth angle a264 may be approximately 110 degrees, and the fourth angle b264 may be approximately 90 degrees.

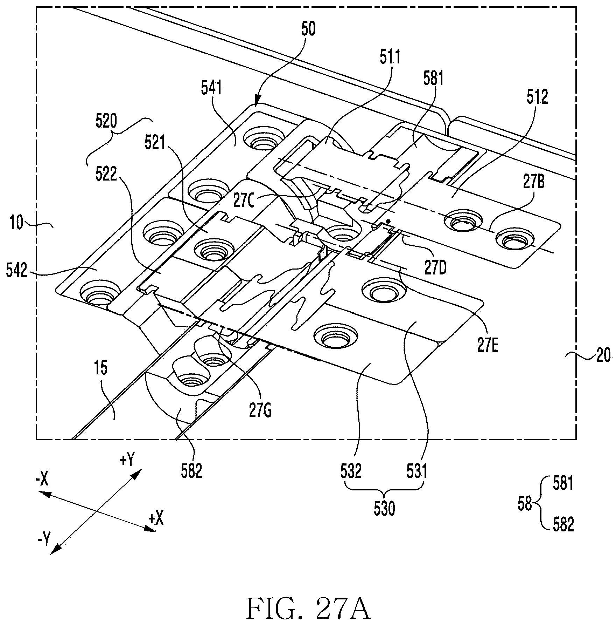

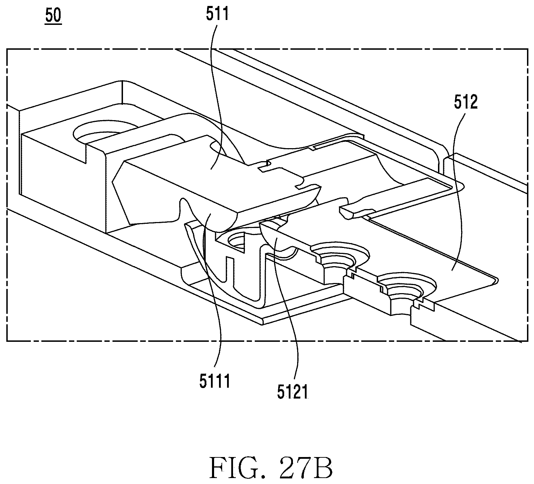

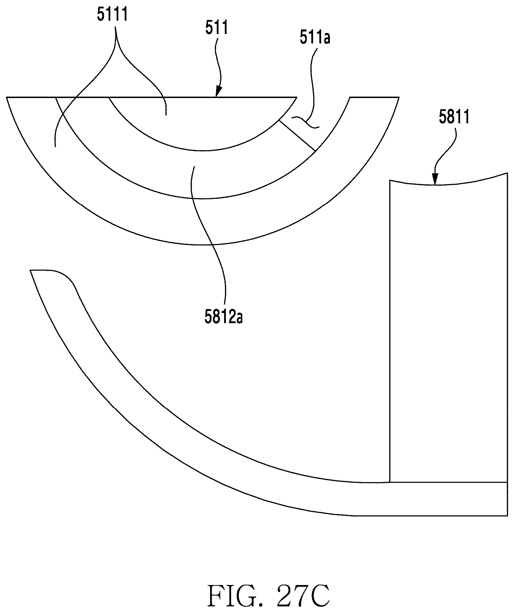

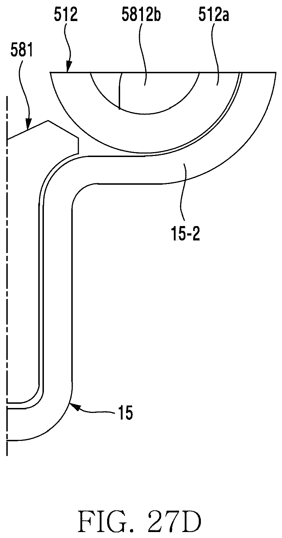

FIG. 27A is a perspective view illustrating a hinge module. FIGS. 27B, 27C, and 27D are cross-sectional views of a hinge module illustrating a first rotating arm and a second rotating arm. For example, FIG. 27B may be a cross-sectional view along line 27B of FIG. 27A. For example, FIG. 27C may be a cross-sectional view along line 27C of FIG. 27A. For example, FIG. 27D may be a cross-sectional view along line 27D of FIG. 27A.

Referring to FIGS. 27A and 27B, a first end portion 5121 of a second rotating arm 512 may be thinner than a first end portion 5111 of a first rotating arm 511. Referring to FIG. 27C, the first end portion 5111 of the first rotating arm 511 may form a first guide rail 511a. The first guide rail 511a may include a groove in which a first protruding portion 5812a of a first base 581 is accommodated.

Referring to FIGS. 27A and 27D, a first end portion 5121 of a second rotating arm 512 may form a first guide rail 512a. The first guide rail 512a may include a protrusion accommodated in a space between a second protruding portion 5812b of the first base 581 and a second side portion 15-2 of a hinge housing 15. As the first guide rail 512a moves in the space between the second protruding portion 5812b of the first base 581 and the second side portion 15-2 of the hinge housing 15, rotation of the second rotating arm 512 may be guided. Accordingly, the first end portion 5121 of the second rotating arm 512 may be rotatably disposed in the second side portion 15-2 of the hinge housing 15 that is relatively narrow.

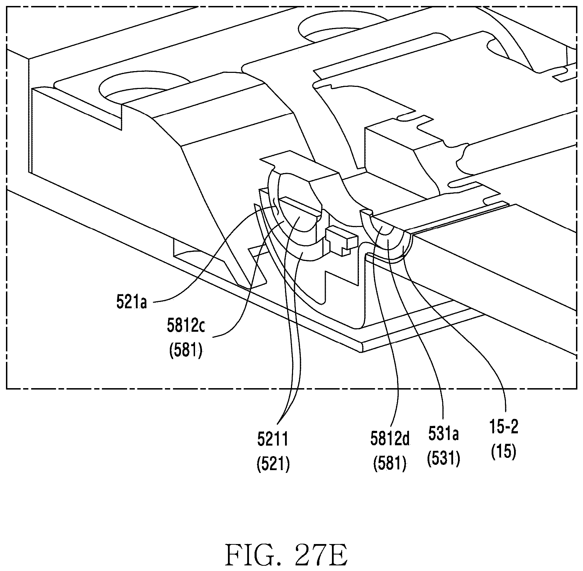

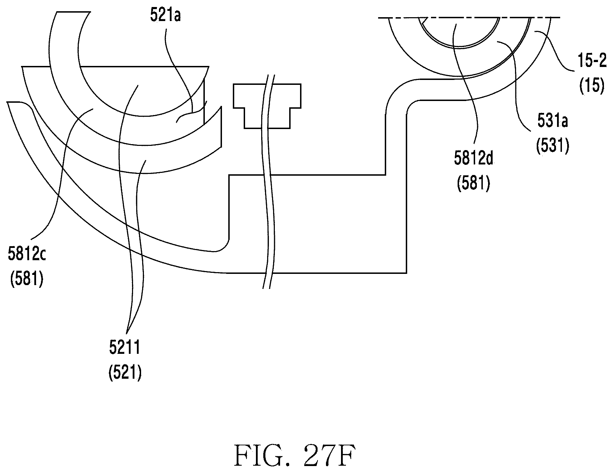

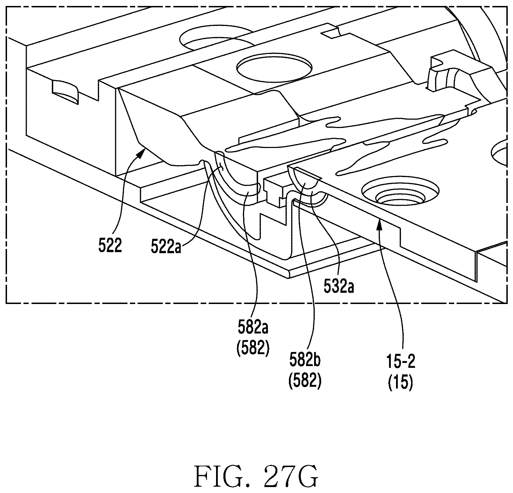

FIGS. 27E, 27F, and 27G are cross-sectional views of a hinge module illustrating a first spiral arm and a second spiral arm. For example, FIGS. 27E and 27F may be cross-sectional views along line 27E of FIG. 27A. For example, FIG. 27G may be a cross-sectional view along line 27G of FIG. 27A.

Referring to FIGS. 27E and 27F together with FIG. 27A, a first end portion 5211 of a first part 521 of a first spiral arm 520 may form a first guide rail 521a. The first guide rail 521a may include a groove in which a third protruding portion 5812c of the first base 581 is accommodated. In contrast, a first guide rail 531a of a second spiral arm 530 may include a protrusion accommodated in a space between a fourth protruding portion 5812d of the first base 581 and the second side portion 15-2 of the hinge housing 15. As the first guide rail 531a of the second spiral arm 530 moves in the space between the fourth protruding portion 5812d of the first base 581 and the second side portion 15-2 of the hinge housing 15, rotation of the second spiral arm 530 may be guided. Accordingly, the second spiral arm 530 may be rotatably disposed in the second side portion 15-2 of the hinge housing 15 that is relatively narrow.

The above description may be equally applied to a second part 522 of the first spiral arm 520 and a second part 532 of the second spiral arm 530 of FIG. 27G. For example, a first guide rail 522a of the second part 522 of the first spiral arm 520 may be a groove in which a first protruding portion 582a of a second base 582 is accommodated. In contrast, a first guide rail 532a of the second part 532 of the second spiral arm 530 may be a protrusion accommodated in a space between a second protruding portion 582b of the second base 582 and the second side portion 15-2 of the hinge housing 15.

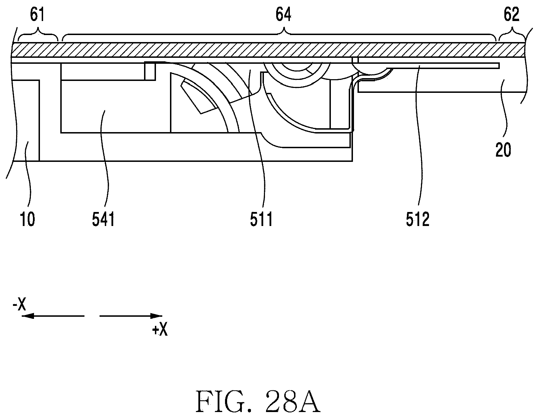

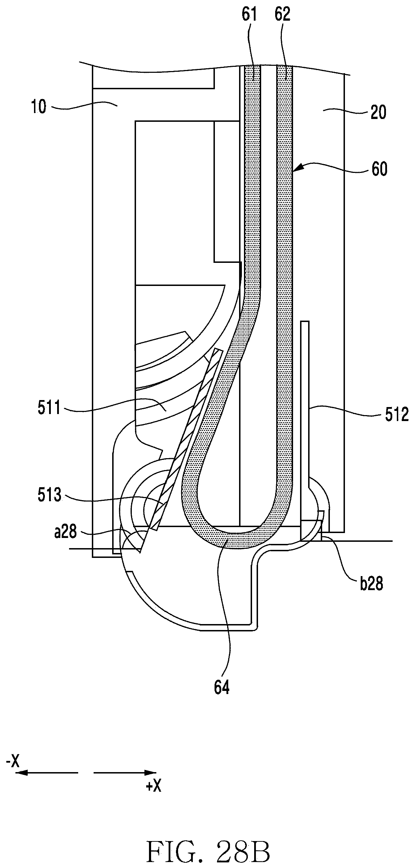

FIGS. 28A and 28B illustrate a shape of a display according to a state of an electronic device. FIGS. 28A and 28B may correspond to, for example, line A-A' of FIG. 4A.

Referring to FIG. 28A, in an unfolded state of a first housing part 10 and a second housing part 20, a first portion 61, a fourth portion 64, and a second portion 62 of a display 60 may be substantially flat. In the unfolded state of the first housing part 10 and the second housing part 20, the first portion 61 of the display 60 may be supported by the first housing part 10 (e.g., by a first seating surface 10A). In the unfolded state of the first housing part 10 and the second housing part 20, the second portion 62 of the display 60 may be supported by the second housing part 20 (e.g., by a second seating surface 20A). In the unfolded state of the first housing part 10 and the second housing part 20, the fourth portion 64 of the display 60 may be supported by a first rotating arm 511 and a second rotating arm 512 of a hinge module 50 (e.g., by supporting surfaces 511A and 512A).

Referring to FIG. 28B, in a folded state of the first housing part 10 and the second housing part 20, the first rotating arm 511 and the second rotating arm 512 may form a space for deformation of the fourth portion 64 of the display 60. In the folded state of the first housing part 10 and the second housing part 20, the fourth portion 64 of the display 60 may be deformed into a shape corresponding to a space formed by the first rotating arm 511 and the second rotating arm 512. For example, within the folded state of the first housing part (10) and the second housing part (20), the fourth portion (64) of the display (60) may have an asymmetrical shape. For example, within the folded state of the first housing part (10) and the second housing part (20), the fourth portion (64) of the display (60) may have an asymmetrical shape with respect to a plane that is substantially parallel to the first housing part (10) and the second housing part (20) and positioned between the first housing part (10) and the second housing part (20) (e.g., including the folding axis (f1)). For example, in the folded state of the first housing part 10 and the second housing part 20, the fourth portion 64 of the display 60 may have an asymmetrical droplet shape that is more convex in a direction (e.g., a -X direction) of the first rotating arm 511 than in a direction (e.g., a +X direction) of the second rotating arm 512. For example, as the first housing part 10 and the second housing part 20 are folded, the fourth portion 64 of the display 60 may be deformed from the flat shape to the asymmetrical droplet shape. The asymmetrical droplet shape of the fourth portion 64 may be because the second rotating arm 512 is aligned at an angle b28 (e.g., a fourth angle b264), and the first rotating arm 511 is aligned at an angle a28 (e.g., a fourth angle a264) greater than the angle b28, in the folded state of the first housing part 10 and the second housing part 20. The asymmetrical droplet shape distributes mechanical stress over the display to reduce wear and tear on the display.

Referring to FIG. 28B, an electronic device 1 (or the hinge module 50) may further include a plate 513 (or an auxiliary plate) for improving flatness of the display 60. The auxiliary plate 513 may be, for example, positioned between the display 60 and the first rotating arm 511. The plate 513 may be disposed on, for example, the first rotating arm 511 (or the supporting surface 511A of the first rotating arm 511). The plate 513 may be, for example, fixedly coupled to or movably (e.g., rotatably) coupled to the first rotating arm 511. Accordingly, the plate 513 may rotate together with the first rotating arm 511. The plate 513 may improve the flatness of the display 60, for example, by supporting the fourth portion 64 of the display 60in a state in which the electronic device 1 is unfolded.

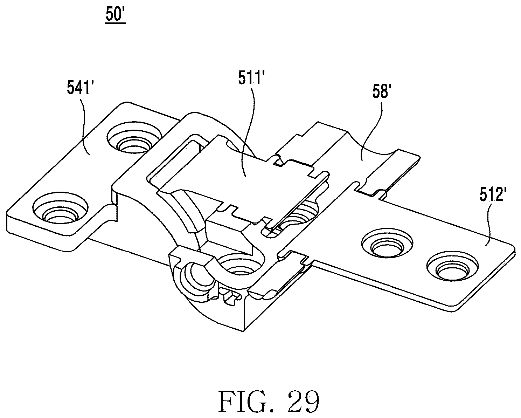

FIG. 29 illustrates a hinge module.

A hinge module 50' of FIG. 29 may be an example of the third hinge module 41-3 of FIGS. 4A and 4B. Referring to FIG. 29, the hinge module 50' may include a base assembly 58', a first rotating arm 511', a link 541', and a second rotating arm 512'.

For the base assembly 58', the first rotating arm 511', the link 541', and the second rotating arm 512', a description of a first base 581, a first rotating arm 511, a first link 541, and a second rotating arm 512 of a hinge module 50 may be applied in substantially the same, similar, or corresponding manner.

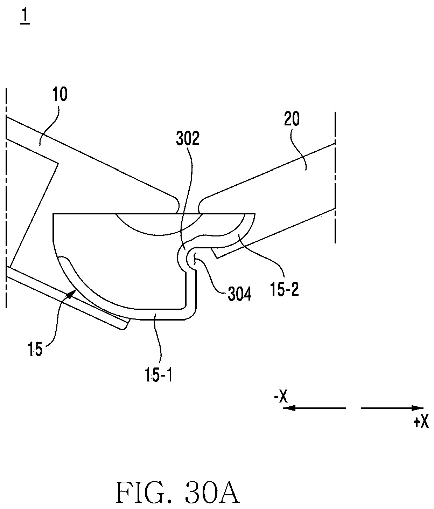

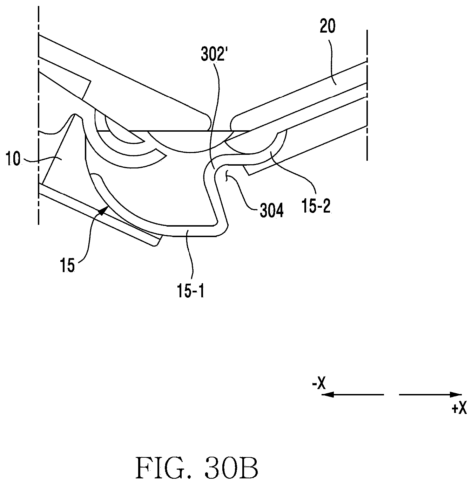

FIGS. 30A and 30B illustrate a hinge housing of an electronic device.

Referring to FIG. 30A, in an embodiment, a first side portion 15-1 of a hinge housing 15 may include a portion 302 defining a groove 304. The portion 302 of the first side portion 15-1 may be adjacent to a second side portion 15-2. The groove 304, for example, may be recessed in a -X direction.

A foreign matter such as dust accumulated on the second side portion 15-2 of the hinge housing 15 may be pushed by the first side portion 15-1 of the hinge housing 15 and may flow into a second housing part 20 when the second housing part 20 is folded. The groove 304 may reduce or prevent the foreign matter such as the dust from flowing into the second housing part 20, by providing a space in which the foreign matter such as the dust may escape without being pushed by the second housing part 20 and the hinge housing 15 even when the second housing part 20 is folded.

A shape of the groove 304 is not limited by the illustrated example, and various deformations may be possible. For example, referring to FIG. 30B, a groove 304' defined by a portion 302' of the hinge housing 15 may have a gentler shape than the groove 304 of FIG. 30A.

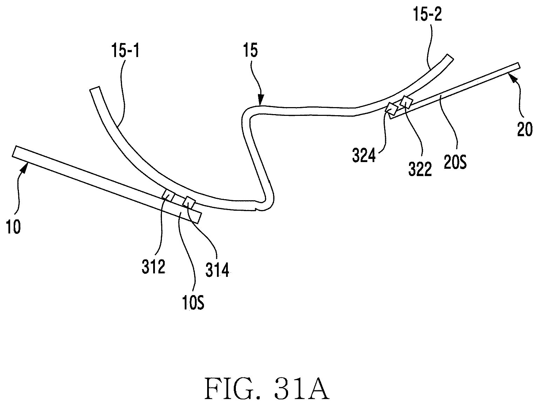

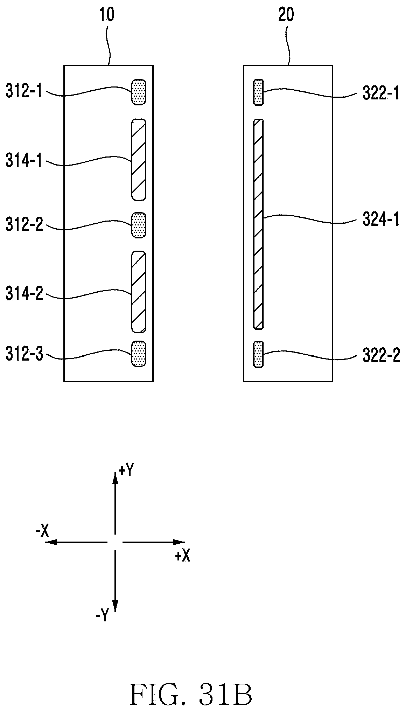

FIGS. 31A and 31B illustrate a supporting structure and a foreign matter prevention structure of a housing of an electronic device.

Referring to FIG. 31A, an electronic device 1 may include a first supporting structure 312, a first foreign matter prevention structure 314, a second supporting structure 322, and a second foreign matter prevention structure 324.

The first supporting structure 312 and the first foreign matter prevention structure 314 may be disposed between a side portion 10S of a first housing part 10 and a first side portion 15-1 of a hinge housing 15. The first foreign matter prevention structure 314 may be positioned closer to an outer periphery of the first housing part 10 than the first supporting structure 312.

The second supporting structure 322 and the second foreign matter prevention structure 324 may be disposed between a side portion 20S of a second housing part 20 and a second side portion 15-2 of the hinge housing 15. The second foreign matter prevention structure 324 may be positioned closer to an outer periphery of the second housing part 20 than the second supporting structure 322.

In an embodiment, the first supporting structure 312 may be different from the second supporting structure 322. For example, a width and/or a height of the first supporting structure 312 may be greater than a width and/or a height of the second supporting structure 322.

In an embodiment, the first foreign matter prevention structure 314 may be different from the second foreign matter prevention structure 324. For example, a width and/or a height of the first foreign matter prevention structure 314 may be greater than a width and/or a height of the second foreign matter prevention structure 324. Alternatively, as a foreign matter such as dust may flow more easily into the second housing part 20 than the first housing part 10, a width and/or a height of the second foreign matter prevention structure 324 may be greater than a width and/or a height of the first foreign matter prevention structure 314.

In an embodiment, a material of the first foreign material prevention structure 314 may be different from a material of the second foreign material prevention structure 324. For example, the first foreign matter prevention structure 314 and/or the second foreign matter prevention structure 324 may have a form of a brush such as a toothbrush or may include a fibrous material such as non-woven fabric.

Referring to FIG. 31B,, the first supporting structure 312 may include supporting structures 312-1, 312-2, and 312-3 disposed on the first housing part 10. The supporting structures 312-1, 312-2, and 312-3 may be spaced apart from each other.

The first foreign material prevention structure 314 may include foreign material prevention structures 314-1 and 314-2 disposed on the first housing part 10 and spaced apart from each other. The foreign matter prevention structure 314-1 may be disposed between the supporting structure 312-1 and the supporting structure 312-2. The foreign matter prevention structure 314-2 may be disposed between the supporting structure 312-2 and the supporting structure 312-3.

The second supporting structure 322 may include supporting structures 322-1 and 322-2 disposed on the second housing part 20 and spaced apart from each other.

The second foreign matter prevention structure 324 may include a foreign matter prevention structure 324-1 disposed on the second housing part 20 and positioned between the supporting structures 322-1 and 322-2.

The supporting structure 322-1 on the second housing part 20 may be aligned with the supporting structure 312-1 on the first housing part 10. The supporting structure 322-2 on the second housing part 20 may be aligned with the supporting structure 312-3 on the first housing part 10.

The foreign matter prevention structure 324-1 on the second housing part 20 may be aligned with the foreign matter prevention structures 314-1 and 314-2 and the supporting structure 312-2 on the first housing part 10.

The technical problems to be achieved in the present disclosure are not limited to those described above, and other technical problems not mentioned herein will be clearly understood by those having ordinary knowledge in the art to which the present disclosure belongs.

An electronic device 1 may include a first housing part 10, a second housing part 20 thinner than the first housing part 10, an asymmetric hinge structure 50 rotatably connecting the second housing part 20 to the first housing part 10, a display 60 disposed on the first housing part 10, the asymmetric hinge structure 50, and the second housing part 20. The asymmetric hinge structure 50 may include a base 581 or 582 including a first side portion 581-1 or 582-1 facing the first housing part 10, and a second side portion 581-2 or 582-2, opposite to the first side portion 581-1 and 582-1, facing the second housing part 20, a link 541 fixedly coupled to the first housing part 10, a first rotating arm 511 including a first end portion 5111 rotatably coupled to the first side portion 581-1 or 582-1 of the base 581 or 582 and a second end portion 5112 rotatably coupled to the link 541, a second rotating arm 512 including a first end 5121 rotatably coupled to the second side portion 581-2 or 582-2 of the base 581 or 582 and a second end 5122 fixedly coupled to the second housing part 20. The display 60 may include a portion 64 supported by the first rotating arm 511 and the second rotating arm 512 in an unfolded state of the first housing part 10 and the second housing part 20. In a folded state of the first housing part 10 and the second housing part 20, the second rotating arm 512 may be substantially parallel to the second housing part 20. In the folded state of the first housing part 10 and the second housing part 20, the first rotating arm 511 may be inclined such that the second end portion 5112 of the first rotating arm 511 is closer to the second rotating arm 511 than the first end portion 5111 of the first rotating arm 511. In the folded state of the first housing part 10 and the second housing part 20, the portion of the display 60 may have an asymmetrical droplet shape that is more convex in a direction of the first rotating arm 511 than a direction of the second rotating arm 512.

In an embodiment, the asymmetrical droplet shape may be a shape when the display 60 is viewed in a direction parallel to a folding axis f1 of the first housing part 10 and the second housing part 20.

In an embodiment, a hinge housing 15 that covers a portion of the asymmetric hinge structure 50 and in which the base 581 or 582 is fixedly disposed may be included. The hinge housing 15 may include a first portion 15-1 that accommodates the first side portion 581-1 or 582-1 of the base 581 or 582, and a second portion 15-2 that accommodates the second side portion 581-2 or 582-2 of the base 581 or 582. A thickness of the second portion 15-2 of the hinge housing 15 may be thinner than a thickness of the first portion 15-1 of the hinge housing 15.

In an embodiment, the thickness of the first portion 15-1 of the hinge housing 15 and the thickness of the second portion 15-2 of the hinge housing 15 may be lengths along a first direction substantially perpendicular to the display 60 in the unfolded state of the first housing part 10 and the second housing part 20.

In an embodiment, the first portion 15-1 of the hinge housing 15 may be covered by a portion of the first housing part 10 or exposed to the outside of the electronic device 1 according to rotation of the first housing part 10. The second portion 15-2 of the hinge housing 15 may be covered by a portion of the second housing part 20 or exposed to the outside of the electronic device 1 according to rotation of the second housing part 20. In the unfolded state of the first housing part 10 and the second housing part 20, the portion of the second housing part 20 that covers the second portion 15-2 of the hinge housing 15 may face the first portion 15-1 of the hinge housing 15.

In an embodiment, a width of the second portion 15-2 of the hinge housing 15 may be smaller than a width of the first portion 15-1 of the hinge housing 15, along a second direction perpendicular to the first direction and a folding axis f1 of the first housing part 10 and the second housing part 20.

In an embodiment, a center P19 of an overall width of the hinge housing 15 along the second direction may be positioned within the first portion 15-1 of the hinge housing 15.

In an embodiment, the first housing part 10 may include a seating surface 10A that partially supports the display 60. In the folded state of the first housing part 10 and the second housing part 20, a virtual plane that includes the center P19 of the hinge housing 15 and is parallel to the seating surface 10A of the first housing part 10 may be defined. In the folded state of the first housing part 10 and the second housing part 20, the seating surface 10A of the first housing part 10 may be positioned so as to be offset from the virtual plane in a direction of the second housing part 20.

In an embodiment, the first side portion 581-1 or 582-1 of the base 581 or 582 may define a first guide rail 511a to which a protrusion 5811a or 5812a formed on the first rotating arm 511 is movably coupled in order to guide rotation of the first rotating arm 511 relative to the first side portion 581-1 or 582-1 of the base 581 or 582. The second side portion 581-2 or 582-2 of the base 581 or 582 and the second portion of the hinge housing 15 may together define a second guide rail to which a protrusion 5812a formed on the second rotating arm 512 is movably coupled in order to guide rotation of the second rotating arm 512 relative to the second side portion 581-2 or 582-2 of the base 581 or 582.

In an embodiment, the asymmetric hinge structure 50 may include another link 542 fixedly coupled to the first housing part 10, a first spiral arm 520 including a first end portion 5211 or 5221 rotatably coupled to the first side portion 581-1 or 582-1 of the base 581 or 582 and a second end portion 5212 or 5222 rotatably coupled to the other link 542, and a second spiral arm 530, including a first end portion 5311 or 5321 rotatably coupled to the second side portion 581-2 or 582-2 of the base 581 or 582 and a second end portion 5312 or 5322 fixedly coupled to the second housing part 20, and opposite to the first spiral arm 520. The display 60 may include another portion supported by a first supporting surface 521B or 522B of the first spiral arm 520 and a second supporting surface 531A or 532A of the second spiral arm 530 in the unfolded state of the first housing part 10 and the second housing part 20. The first supporting surface 521B or 522B of the first spiral arm 520 may be inclined with respect to the first rotating arm 511 and the second supporting surface 531A or 532A of the second spiral arm 530 in the folded state of the first housing part 10 and the second housing part 20. The second supporting surface 531A or 532A of the second spiral arm 530 may be substantially parallel to the second housing part 20.

In an embodiment, the another portion of the display 60 may have an asymmetrical droplet shape that is more convex in a direction of the first spiral arm 520 than in a direction of the second spiral arm 530, in the folded state of the first housing part 10 and the second housing part 20.

In an embodiment, an area of the second supporting surface 531A or 532A may be wider than an area of the first supporting surface 521B or 522B.

In an embodiment, in the unfolded state of the first housing part 10 and the second housing part 20, a straight line connecting a rotation axis of the first end portion 5211 or 5221 of the first spiral arm 520 and a rotation axis of the first end portion 5311 or 5321 of the second spiral arm 530 may be not parallel to the display 60.

In an embodiment, the asymmetric hinge structure 50 may include a bar 583 extending parallel to a folding axis f1 of the first housing part 10 and the second housing part 20 and a spiral link 550 slidably coupled to the bar 583. The spiral link 550 may include a first side portion 551, in which a first spiral rail 551a is formed, and which faces a direction of the first housing part 10, a second side portion 552, in which a second spiral rail 550b is formed, opposite to the first side portion 551 of the spiral link 550, and facing a direction of the second housing part 20. A first portion of the first end portion 5211 or 5221 of the first spiral arm 520 may be rotatably coupled to the first side portion 581-1 or 582-1 of the base 581 or 582. A second portion of the first end portion 5211 or 5221 of the first spiral arm 520 may be rotatably coupled to the first side portion 551 of the spiral link 550 so as to be rotatable along the first spiral rail 550a. A first portion of the first end portion 5311 or 5321 of the second spiral arm 530 may be rotatably coupled to the second side portion 581-2 or 582-2 of the base 581 or 582. A second portion of the first end portion 5311 or 5321 of the second spiral arm 530 may be rotatably coupled to the second side portion 552 of the spiral link 550 so as to be rotatable along the second spiral rail 550b. The spiral link 550 may be configured to slide along the bar 583 while the first spiral arm 520 rotates with respect to the first side portion 551 of the spiral link 550 and the second spiral arm 530 rotates with respect to the second side portion 552 of the spiral link 550.

In an embodiment, the first side portion 551 of the spiral link 550 may include a first surface 551A that is substantially flat and faces the display 60, in the unfolded state of the first housing part 10 and the second housing part 20. The second side portion 552 of the spiral link 550 may include a second surface 552A that is substantially flat and faces the display 60, in the unfolded state of the first housing part 10 and the second housing part 20. The first surface 551A of the first side portion 551 of the spiral link 550 may be positioned farther from the display 60 than the second surface 552A of the second side portion 552 of the spiral link 550, in the unfolded state of the first housing part 10 and the second housing part 20.

In an embodiment, the first spiral arm 520 may include a surface 521A or 522A that extends substantially without a step from the first surface 551A of the first side portion 551 of the spiral link 550, in the unfolded state of the first housing part 10 and the second housing part 20, and an inclined surface 521C or 522C extending from the surface 521A or 522A of the first spiral arm 520 to the first supporting surface 521B or 522B of the first spiral arm 520. The second supporting surface 531A or 532A of the second spiral arm 530 may extend substantially without a step from the second surface 552A of the second side portion 552 of the spiral link 550 in the unfolded state of the first housing part 10 and the second housing part 20.

In an embodiment, the first housing part 10 may include a first seating surface 10A that supports a first portion 61 of the display 60. The second housing part 20 may include a second seating surface 10B that supports a second portion 62 of the display 60. The portion of the display 60 may be a third portion 63 that connects a portion of the first portion 61 of the display 60 and a portion of the second portion 62 of the display 60. The first rotating arm 511 may include a first supporting surface 521B or 522B that supports a first area of the third portion of the display 60, and is substantially parallel to the first seating surface 10A of the first housing part 10, in the unfolded state of the first housing part 10 and the second housing part 20. The second rotating arm 512 may include a second supporting surface 531A or 532A that supports a second area of the third portion of the display 60 and is substantially parallel to the second seating surface 10B of the second housing part 20, the unfolded state of the first housing part 10 and the second housing part 20. In the folded state of the housing part 10 and the second housing part 20, the first supporting surface 521B or 522B of the first rotating arm 511 may be inclined with respect to the first seating surface 10A of the first housing part 10. In the folded state of the first housing part 10 and the second housing part 20, the second supporting surface 531A or 532A of the second rotating arm 512 may be substantially parallel to the second seating surface 10B of the second housing part 20.

In an embodiment, a rotation of the first housing part 10 may be linked to a rotation of the second housing part 20 through the asymmetric hinge structure 50. When the second housing part 20 rotates at a first speed in a first section and a second section, the first housing part 10 may rotate at a second speed different from the first speed in the first section, and may rotate at a third speed different from the first speed and the second speed in the second section.

A foldable electronic device 1 may comprise a first housing part 10, a second housing part 20 having a thickness thinner than the first housing part 10, a hinge assembly 50 mutually rotatably connecting the first housing part 10 and the second housing part 20, a hinge housing 15 configured to cover at least a portion of the hinge assembly 50, and a flexible display 60 disposed on the first housing part 10 and the second housing part 20. The hinge assembly 50 may comprise a first base 581 fixed to at least a portion of the hinge housing 15, a first rotating arm 511, an end portion of which is rotatably coupled to a first portion of the first base 581 and another end portion of which is rotatably coupled to at least a portion of the first housing part 10, a second rotating arm 512 , an end portion of which is rotatably coupled to a second portion of the first base 581 and another end portion of which is fixedly coupled to at least a portion of the second housing part 20, a second base 582 fixed to at least another portion of the hinge housing 15, a first spiral arm 520, an end portion of which is rotatably coupled to a third portion of the second base 582 and another end portion of which is rotatably coupled to at least another portion of the first housing part 10, a second spiral arm 530, an end portion of which is rotatably coupled to a fourth portion of the second base 582 and another end portion of which is fixedly connected to at least another portion of the second housing part 20, and a spiral slider 550, at least partially coupled to the first spiral arm 520 and the second spiral arm 530, configured to move along a guide rail 583 included in the second base 582 while the foldable electronic device 1 is unfolded.

In an embodiment, a length of a portion of the first rotating arm 511 along a rotation axis direction of the portion of the first rotating arm 511 rotatably connected to the portion of the first base 581 may be shorter than a length of a portion of the second rotating arm 512 along a rotation axis direction of the portion in which the second rotating arm 512 is rotatably connected to the second portion of the first base 581.

In an embodiment, a vertical length of the second rotating arm 512 along the rotation axis direction of the second rotating arm 512 may be smaller than a horizontal length of the second rotating arm 512 along a direction perpendicular to the rotation axis of the second rotating arm 512.

In an embodiment, a radius of a portion where the first rotating arm 511 is rotatably coupled to the first portion of the first base 581 may be larger than a radius of a portion where the second rotating arm 512 is rotatably coupled to the second portion of the first base 581.

In an embodiment, a radius of a portion where the first spiral arm520 is rotatably coupled to the third portion of the second base 582 may be larger than a radius of a portion where the second spiral arm 530 is rotatably coupled to the fourth portion of the second base 582.

In an embodiment, the foldable electronic device 1 may further comprise a third spiral arm, at least a portion of an end portion of which is rotatably coupled to a fifth portion of the base 581 or 582 and another end portion of which is rotatably coupled to at least another portion of the first housing part 10 and a fourth spiral arm, at least a portion of an end portion of which is rotatably coupled to a sixth portion of the base 581 or 582 and another end portion of which is fixedly connected to at least another portion of the second housing part 20. The spiral slider may be at least partially coupled to the third spiral arm and the fourth spiral arm.

In an embodiment, a radius of a portion where the third spiral arm is rotatably coupled to the fifth portion of the first base 581 may be larger than a radius of a portion where the fourth spiral arm is rotatably coupled to the sixth portion of the first base 581.

In an embodiment, a radius of a portion where the spiral slider is rotatably coupled to the first spiral arm 520 may be larger than a radius of a portion where the spiral slider is rotatably coupled to the second spiral arm 530.

In an embodiment, a center of an area where the first base 581 and the second base 582 are fixed to the hinge housing 15 may be positioned offset from a center line of the hinge housing 15 in a direction of the first housing part 10.

In an embodiment, when the foldable electronic device is in a fully unfolded state, a virtual plane drawn from a rotation axis along which the first rotating arm 511 rotates with the first base 581 to a rotation axis along which the second rotating arm 512 rotates with the first base 581 may be not parallel to a surface of the flexible display 60.

An electronic device 1 may comprise a first housing part 10, a second housing part 20 having a thickness thinner than the first housing part 10, a hinge structure 50 rotatably connecting the first housing part 10 and the second housing part 20, and a display 60 disposed on the first housing part 10 and the second housing part 20. The hinge structure 50 may include a bracket 581 or 582 positioned at a center of the hinge structure 50, a first hinge part connected to a side of the bracket 581 or 582 and the first housing part 10, and a second hinge part connected to another side of the bracket 581 or 582 and the second housing part 20. The first hinge part and the second hinge part may have an asymmetrical structure with respect to each other. In a state in which the first housing part 10 and the second housing part 20 are folded, the display may have an asymmetrical shape in left and right sides with respect to the bracket 581 or 582.

In an embodiment, the first hinge part of the hinge structure 50 may include a link 541 fixedly coupled to the first housing part 10 and a first rotating arm 511 including a first end portion 5111 rotatably coupled to the side of the bracket 581 or 582 and a second end portion 5112 rotatably coupled to the link 541. The second hinge part of the hinge structure 50 may include a second rotating arm 512 including a first end portion 5121 rotatably coupled to the another side of the bracket 581 or 582 and a second end portion 5122 fixedly coupled to the second housing part 20. The display 60 may include a portion 64 supported by the first rotating arm 511 and the second rotating arm 512 in an unfolded state of the first housing part 10 and the second housing part 20. In a folded state of the first housing part 10 and the second housing part 20, the first rotating arm 511 may be inclined such that the second end portion 5112 of the first rotating arm 511 is closer to the second rotating arm 512 than the first end portion 5111 of the first rotating arm 511. In the folded state of the first housing part 10 and the second housing part 20, the portion of the display 60 may have an asymmetrical droplet shape that is more convex in a direction of the first rotating arm 511 than a direction of the second rotating arm 512.

In an embodiment, the asymmetrical droplet shape may be a shape when the display 60 is viewed in a direction parallel to a folding axis f1 of the first housing part 10 and the second housing part 20.

In an embodiment, the electronic device 1 may comprise a hinge housing 15 that covers a portion of the hinge structure 50 and in which the bracket 581 or 582 is fixedly disposed. The hinge housing 15 may include a first portion 15-1 that accommodates the side of the bracket 581 or 582, and a second portion 15- a second portion that accommodates the another side of the bracket 581 or 582. A thickness of the second portion 15-2 of the hinge housing 15 may be thinner than a thickness of the first portion 15-1 of the hinge housing 15. The thickness of the first portion 15-1 of the hinge housing 15 and the thickness of the second portion 15-2 of the hinge housing 15 may be lengths along a first direction substantially perpendicular to the display 60 in the unfolded state of the first housing part 10 and the second housing part 20.

In an embodiment, the first portion 15-1 of the hinge housing 15 may be covered by a portion of the first housing part 10 or exposed to the outside of the electronic device 1 according to rotation of the first housing part 10. The second portion 15-2 of the hinge housing 15 may be covered by a portion of the second housing part 20 or exposed to the outside of the electronic device 1 according to rotation of the second housing part 20. In the unfolded state of the first housing part 10 and the second housing part 20, the portion of the second housing part 20 that covers the second portion 15-2 of the hinge housing 15 may face the first portion 15-1 of the hinge housing 15.

In an embodiment, a width of the second portion 15-2 of the hinge housing 15 may be smaller than a width of the first portion 15-1 of the hinge housing 15, along a second direction perpendicular to the first direction and a folding axis f1 of the first housing part 10 and the second housing part 20.

In an embodiment, a center P19 of an overall width of the hinge housing 15 along the second direction may be positioned within the first portion 15-1 of the hinge housing 15.

In an embodiment, the first housing part 10 may include a seating surface 10A that partially supports the display 60. In the folded state of the first housing part 10 and the second housing part 20, a virtual plane that includes the center P19 of the hinge housing 15 and is parallel to the seating surface 10A of the first housing part 10 may be defined. In the folded state of the first housing part 10 and the second housing part 20, the seating surface 10A of the first housing part 10 may be positioned so as to be offset from the virtual plane in a direction of the second housing part 20.

In an embodiment, the side of the bracket 581 or 582 may define a first guide rail 511a to which a protrusion 5811a or 5812a formed on the first rotating arm 511 is movably coupled in order to guide rotation of the first rotating arm 511 relative to the first side portion 581-1 or 582-1 of the base 581 or 582. The another side of the bracket 581 or 582 and the second portion of the hinge housing 15 may together define a second guide rail to which a protrusion 512a formed on the second rotating arm 512 is movably coupled in order to guide rotation of the second rotating arm 512 relative to the second side portion 581-2 or 582-2 of the base 581 or 582.

In an embodiment, the first hinge part of the hinge structure 50 may include another link 542 fixedly coupled to the first housing part 10, a first spiral arm 520 including a first end portion 5211 or 5221 rotatably coupled to the side of the bracket 581 or 582 and a second end portion 5212 or 5222 rotatably coupled to the other link 542. The second hinge part of the hinge structure 50 may include a second spiral arm 530, including a first end portion 5311 or 5321 rotatably coupled to the another side of the bracket 581 or 582 and a second end portion 5312 or 5322 fixedly coupled to the second housing part 20, and opposite to the first spiral arm 520. The display 60 may include another portion supported by a first supporting surface 521B or 522B of the first spiral arm 520 and a second supporting surface 531A or 532A of the second spiral arm 530 in the unfolded state of the first housing part 10 and the second housing part 20. The first supporting surface 521B or 522B of the first spiral arm 520 may be inclined with respect to the first rotating arm 511 and the second supporting surface 531A or 532A of the second spiral arm 530 in the folded state of the first housing part 10 and the second housing part 20. The second supporting surface 531A or 532A of the second spiral arm 530 may be substantially parallel to the second housing part 20.

In an embodiment, the another portion of the display 60 may have an asymmetrical droplet shape that is more convex in a direction of the first spiral arm 520 than in a direction of the second spiral arm 530, in the folded state of the first housing part 10 and the second housing part 20.

In an embodiment, an area of the second supporting surface 531A or 532A may be wider than an area of the first supporting surface 521B or 522B.

In an embodiment, in the unfolded state of the first housing part 10 and the second housing part 20, a straight line connecting a rotation axis of the first end portion 5211 or 5221 of the first spiral arm 520 and a rotation axis of the first end portion 5311 or 5321 of the second spiral arm 530 may be not parallel to the display 60.

In an embodiment, the hinge structure 50 may include a bar 583 extending parallel to a folding axis f1 of the first housing part 10 and the second housing part 20 and a spiral link 550 slidably coupled to the bar 583. The spiral link 550 may include a first side portion 551, in which a first spiral rail 551a is formed, and which faces a direction of the first housing part 10, a second side portion 552, in which a second spiral rail 550b is formed, opposite to the first side portion 551 of the spiral link 550, and facing a direction of the second housing part 20. A first portion of the first end portion 5211 or 5221 of the first spiral arm 520 may be rotatably coupled to the side of the bracket 581 or 582. A second portion of the first end portion 5211 or 5221 of the first spiral arm 520 may be rotatably coupled to the first side portion 551 of the spiral link 550 so as to be rotatable along the first spiral rail 550a. A first portion of the first end portion 5311 or 5321 of the second spiral arm 530 may be rotatably coupled to the another side of the bracket 581 or 582. A second portion of the first end portion 5311 or 5321 of the second spiral arm 530 may be rotatably coupled to the second side portion 552 of the spiral link 550 so as to be rotatable along the second spiral rail 550b. The spiral link 550 may be configured to slide along the bar 583 while the first spiral arm 520 rotates with respect to the first side portion 551 of the spiral link 550 and the second spiral arm 530 rotates with respect to the second side portion 552 of the spiral link 550.

In an embodiment, the first side portion 551 of the spiral link 550 may include a first surface 551A that is substantially flat and faces the display 60, in the unfolded state of the first housing part 10 and the second housing part 20. The second side portion 552 of the spiral link 550 may include a second surface 552A that is substantially flat and faces the display 60, in the unfolded state of the first housing part 10 and the second housing part 20. The first surface 551A of the first side portion 551 of the spiral link 550 may be positioned farther from the display 60 than the second surface 552A of the second side portion 552 of the spiral link 550, in the unfolded state of the first housing part 10 and the second housing part 20.

In an embodiment, the first spiral arm 520 may include a surface 521A or 522A that extends substantially without a step from the first surface 551A of the first side portion 551 of the spiral link 550, in the unfolded state of the first housing part 10 and the second housing part 20, and an inclined surface 521C or 522C extending from the surface 521A or 522A of the first spiral arm 520 to the first supporting surface 521B or 522B of the first spiral arm 520. The second supporting surface 531A or 532A of the second spiral arm 530 may extend substantially without a step from the second surface 552A of the second side portion 552 of the spiral link 550 in the unfolded state of the first housing part 10 and the second housing part 20.

In an embodiment, the first housing part 10 may include a first seating surface 10A that supports a first portion 61 of the display 60. The second housing part 20 may include a second seating surface 10B that supports a second portion 62 of the display 60. The portion of the display 60 may be a third portion 63 that connects a portion of the first portion 61 of the display 60 and a portion of the second portion 62 of the display 60. The first rotating arm 511 may include a first supporting surface 521B or 522B that supports a first area of the third portion of the display 60, and is substantially parallel to the first seating surface 10A of the first housing part 10, in the unfolded state of the first housing part 10 and the second housing part 20. The second rotating arm 512 may include a second supporting surface 531A or 532A that supports a second area of the third portion of the display 60 and is substantially parallel to the second seating surface 10B of the second housing part 20, the unfolded state of the first housing part 10 and the second housing part 20. In the folded state of the housing part 10 and the second housing part 20, the first supporting surface 521B or 522B of the first rotating arm 511 may be inclined with respect to the first seating surface 10A of the first housing part 10. In the folded state of the first housing part 10 and the second housing part 20, the second supporting surface 531A or 532A of the second rotating arm 512 may be substantially parallel to the second seating surface 10B of the second housing part 20.

In an embodiment, a rotation of the first housing part 10 may be linked to a rotation of the second housing part 20 through the hinge structure 50. When the second housing part 20 rotates at a first speed in a first section and a second section, the first housing part 10 may rotate at a second speed different from the first speed in the first section, and may rotate at a third speed different from the first speed and the second speed in the second section.

The effects that may be obtained from the present disclosure are not limited to those described above, and any other effects not mentioned herein will be clearly understood by those having ordinary knowledge in the art to which the present disclosure belongs.

FIG. 32 is a block diagram illustrating an electronic device 3201 in a network environment 3200 according to various embodiments. Referring to FIG. 32, the electronic device 3201 in the network environment 3200 may communicate with an electronic device 3202 via a first network 3298 (e.g., a short-range wireless communication network), or at least one of an electronic device 3204 or a server 3208 via a second network 3299 (e.g., a long-range wireless communication network). The electronic device 3201 may communicate with the electronic device 3204 via the server 3208. The electronic device 3201 may include a processor 3220, memory 3230, an input module 3250, a sound output module 3255, a display module 3260, an audio module 3270, a sensor module 3276, an interface 3277, a connecting terminal 3278, a haptic module 3279, a camera module 3280, a power management module 3288, a battery 3289, a communication module 3290, a subscriber identification module(SIM) 3296, or an antenna module 3297. In some embodiments, at least one of the components (e.g., the connecting terminal 3278) may be omitted from the electronic device 3201, or one or more other components may be added in the electronic device 3201. In some embodiments, some of the components (e.g., the sensor module 3276, the camera module 3280, or the antenna module 3297) may be implemented as a single component (e.g., the display module 3260).

The processor 3220 may execute, for example, software (e.g., a program 3240) to control at least one other component (e.g., a hardware or software component) of the electronic device 3201 coupled with the processor 3220, and may perform various data processing or computation. As at least part of the data processing or computation, the processor 3220 may store a command or data received from another component (e.g., the sensor module 3276 or the communication module 3290) in volatile memory 3232, process the command or the data stored in the volatile memory 3232, and store resulting data in non-volatile memory 3234. The processor 3220 may include a main processor 3221 (e.g., a central processing unit (CPU) or an application processor (AP)), or an auxiliary processor 3223 (e.g., a graphics processing unit (GPU), a neural processing unit (NPU), an image signal processor (ISP), a sensor hub processor, or a communication processor (CP)) that is operable independently from, or in conjunction with, the main processor 3221. For example, when the electronic device 3201 includes the main processor 3221 and the auxiliary processor 3223, the auxiliary processor 3223 may be adapted to consume less power than the main processor 3221, or to be specific to a specified function. The auxiliary processor 3223 may be implemented as separate from, or as part of the main processor 3221.

The auxiliary processor 3223 may control at least some of functions or states related to at least one component (e.g., the display module 3260, the sensor module 3276, or the communication module 3290) among the components of the electronic device 3201, instead of the main processor 3221 while the main processor 3221 is in an inactive (e.g., sleep) state, or together with the main processor 3221 while the main processor 3221 is in an active state (e.g., executing an application). The auxiliary processor 3223 (e.g., an image signal processor or a communication processor) may be implemented as part of another component (e.g., the camera module 3280 or the communication module 3290) functionally related to the auxiliary processor 3223. The auxiliary processor 3223 (e.g., the neural processing unit) may include a hardware structure specified for artificial intelligence model processing. An artificial intelligence model may be generated by machine learning. Such learning may be performed, e.g., by the electronic device 3201 where the artificial intelligence is performed or via a separate server (e.g., the server 3208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 3230 may store various data used by at least one component (e.g., the processor 3220 or the sensor module 3276) of the electronic device 3201. The various data may include, for example, software (e.g., the program 3240) and input data or output data for a command related thereto. The memory 3230 may include the volatile memory 3232 or the non-volatile memory 3234.

The program 3240 may be stored in the memory 3230 as software, and may include, for example, an operating system (OS) 3242, middleware 3244, or an application 3246.

The input module 3250 may receive a command or data to be used by another component (e.g., the processor 3220) of the electronic device 3201, from the outside (e.g., a user) of the electronic device 3201. The input module 3250 may include, for example, a microphone, a mouse, a keyboard, a key (e.g., a button), or a digital pen (e.g., a stylus pen).

The sound output module 3255 may output sound signals to the outside of the electronic device 3201. The sound output module 3255 may include, for example, a speaker or a receiver. The speaker may be used for general purposes, such as playing multimedia or playing record. The receiver may be used for receiving incoming calls. The receiver may be implemented as separate from, or as part of the speaker.

The display module 3260 may visually provide information to the outside (e.g., a user) of the electronic device 3201. The display module 3260 may include, for example, a display, a hologram device, or a projector and control circuitry to control a corresponding one of the display, hologram device, and projector. , the display module 3260 may include a touch sensor adapted to detect a touch, or a pressure sensor adapted to measure the intensity of force incurred by the touch.

The audio module 3270 may convert a sound into an electrical signal and vice versa. The audio module 3270 may obtain the sound via the input module 3250, or output the sound via the sound output module 3255 or a headphone of an external electronic device (e.g., an electronic device 3202) directly (e.g., wiredly) or wirelessly coupled with the electronic device 3201.

The sensor module 3276 may detect an operational state (e.g., power or temperature) of the electronic device 3201 or an environmental state (e.g., a state of a user) external to the electronic device 3201, and then generate an electrical signal or data value corresponding to the detected state. The sensor module 3276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 3277 may support one or more specified protocols to be used for the electronic device 3201 to be coupled with the external electronic device (e.g., the electronic device 3202) directly (e.g., wiredly) or wirelessly. The interface 3277 may include, for example, a high definition multimedia interface (HDMI), a universal serial bus (USB) interface, a secure digital (SD) card interface, or an audio interface.

A connecting terminal 3278 may include a connector via which the electronic device 3201 may be physically connected with the external electronic device (e.g., the electronic device 3202). The connecting terminal 3278 may include, for example, an HDMI connector, a USB connector, an SD card connector, or an audio connector (e.g., a headphone connector).

The haptic module 3279 may convert an electrical signal into a mechanical stimulus (e.g., a vibration or a movement) or electrical stimulus which may be recognized by a user via his tactile sensation or kinesthetic sensation. The haptic module 3279 may include, for example, a motor, a piezoelectric element, or an electric stimulator.

The camera module 3280 may capture a still image or moving images. The camera module 3280 may include one or more lenses, image sensors, image signal processors, or flashes.

The power management module 3288 may manage power supplied to the electronic device 3201. The power management module 3288 may be implemented as at least part of, for example, a power management integrated circuit (PMIC).

The battery 3289 may supply power to at least one component of the electronic device 3201. The battery 3289 may include, for example, a primary cell which is not rechargeable, a secondary cell which is rechargeable, or a fuel cell.

The communication module 3290 may support establishing a direct (e.g., wired) communication channel or a wireless communication channel between the electronic device 3201 and the external electronic device (e.g., the electronic device 3202, the electronic device 3204, or the server 3208) and performing communication via the established communication channel. The communication module 3290 may include one or more communication processors that are operable independently from the processor 3220 (e.g., the application processor (AP)) and supports a direct (e.g., wired) communication or a wireless communication. The communication module 3290 may include a wireless communication module 3292 (e.g., a cellular communication module, a short-range wireless communication module, or a global navigation satellite system (GNSS) communication module) or a wired communication module 3294 (e.g., a local area network (LAN) communication module or a power line communication (PLC) module). A corresponding one of these communication modules may communicate with the external electronic device via the first network 3298 (e.g., a short-range communication network, such as Bluetooth^{™}, wireless-fidelity (Wi-Fi) direct, or infrared data association (IrDA)) or the second network 3299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 3292 may identify and authenticate the electronic device 3201 in a communication network, such as the first network 3298 or the second network 3299, using subscriber information (e.g., international mobile subscriber identity (IMSI)) stored in the subscriber identification module 3296.

The wireless communication module 3292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 3292 may support a high-frequency band (e.g., the mmWave band) to achieve, e.g., a high data transmission rate. The wireless communication module 3292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 3292 may support various requirements specified in the electronic device 3201, an external electronic device (e.g., the electronic device 3204), or a network system (e.g., the second network 3299). The wireless communication module 3292 may support a peak data rate (e.g., 20Gbps or more) for implementing eMBB, loss coverage (e.g., 3264dB or less) for implementing mMTC, or U-plane latency (e.g., 0.5ms or less for each of downlink (DL) and uplink (UL), or a round trip of 32ms or less) for implementing URLLC.

The antenna module 3297 may transmit or receive a signal or power to or from the outside (e.g., the external electronic device) of the electronic device 3201. The antenna module 3297 may include an antenna including a radiating element composed of a conductive material or a conductive pattern formed in or on a substrate (e.g., a printed circuit board (PCB)). The antenna module 3297 may include a plurality of antennas (e.g., array antennas). In such a case, at least one antenna appropriate for a communication scheme used in the communication network, such as the first network 3298 or the second network 3299, may be selected, for example, by the communication module 3290 (e.g., the wireless communication module 3292) from the plurality of antennas. The signal or the power may then be transmitted or received between the communication module 3290 and the external electronic device via the selected at least one antenna. Another component (e.g., a radio frequency integrated circuit (RFIC)) other than the radiating element may be additionally formed as part of the antenna module 3297.

According to various embodiments, the antenna module 3297 may form a mmWave antenna module. The mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 3201 and the external electronic device 3204 via the server 3208 coupled with the second network 3299. Each of the electronic devices 3202 or 3204 may be a device of a same type as, or a different type, from the electronic device 3201. All or some of operations to be executed at the electronic device 3201 may be executed at one or more of the external electronic devices 3202, 3204, or 3208. For example, if the electronic device 3201 should perform a function or a service automatically, or in response to a request from a user or another device, the electronic device 3201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performance to the electronic device 3201. The electronic device 3201 may provide the outcome, with or without further processing of the outcome, as at least part of a reply to the request. To that end, a cloud computing, distributed computing, mobile edge computing (MEC), or client-server computing technology may be used, for example. The electronic device 3201 may provide ultra low-latency services using, e.g., distributed computing or mobile edge computing. In another embodiment, the external electronic device 3204 may include an internet-of-things (IoT) device. The server 3208 may be an intelligent server using machine learning and/or a neural network. The external electronic device 3204 or the server 3208 may be included in the second network 3299. The electronic device 3201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be implemented in a form of an application-specific integrated circuit (ASIC).

Various embodiments as set forth herein may be implemented as software (e.g., the program 3240) including one or more instructions that are stored in a storage medium (e.g., internal memory 3236 or external memory 3238) that is readable by a machine (e.g., the electronic device 3201). For example, a processor (e.g., the processor 3220) of the machine (e.g., the electronic device 3201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing part;
a second housing part having a thickness thinner than the first housing part;
a hinge structure rotatably connecting the first housing part and the second housing part; and
a display disposed on the first housing part and the second housing part,
wherein the hinge structure includes:
a bracket positioned at a center of the hinge structure;
a first hinge part connected to a side of the bracket and the first housing part; and
a second hinge part connected to another side of the bracket and the second housing part,
wherein the first hinge part and the second hinge part have an asymmetrical structure with respect to each other,
wherein a rotation radius of the first hinge part is larger than a rotation radius of the second hinge part, and
wherein, in a folded state of the electronic device, the first housing part and the second housing part are folded along a folding axis and the display has an asymmetrical shape with respect to the bracket.

2. The electronic device of claim 1,
wherein the first hinge part of the hinge structure includes:
a link fixedly coupled to the first housing part; and
a first rotating arm including a first end portion rotatably coupled to the side of the bracket and a second end portion rotatably coupled to the link,
wherein the second hinge part of the hinge structure includes:
a second rotating arm including a first end portion rotatably coupled to the another side of the bracket and a second end portion fixedly coupled to the second housing part,
wherein the display includes a portion supported by the first rotating arm and the second rotating arm in an unfolded state of the first housing part and the second housing part,
wherein, in a folded state of the first housing part and the second housing part, the first rotating arm is inclined such that the second end portion of the first rotating arm is closer to the second rotating arm than the first end portion of the first rotating arm, and
wherein, in the folded state of the first housing part and the second housing part, the portion of the display has an asymmetrical droplet shape that is more convex in a direction of the first rotating arm than a direction of the second rotating arm.

3. The electronic device of claim 2,
wherein the asymmetrical droplet shape is a shape when the display is viewed in a direction parallel to a folding axis of the first housing part and the second housing part.

4. The electronic device of any one of claims 1 to 3, comprising:
a hinge housing that covers a portion of the hinge structure and in which the bracket is fixedly disposed,
wherein the hinge housing includes:
a first portion that accommodates the side of the bracket; and
a second portion that accommodates the another side of the bracket,
wherein a thickness of the second portion of the hinge housing is thinner than a thickness of the first portion of the hinge housing.

5. The electronic device of claim 4,
wherein the thickness of the first portion of the hinge housing and the thickness of the second portion of the hinge housing are lengths along a first direction substantially perpendicular to the display in the unfolded state of the first housing part and the second housing part.

6. The electronic device of claim 5, wherein:
the first portion of the hinge housing is covered by a portion of the first housing part or exposed to an outside of the electronic device according to rotation of the first housing part;
the second portion of the hinge housing is covered by a portion of the second housing part or exposed to the outside of the electronic device according to rotation of the second housing part;
in the unfolded state of the first housing part and the second housing part, the portion of the second housing part that covers the second portion of the hinge housing faces the first portion of the hinge housing.

7. The electronic device of claim 5,
wherein a width of the second portion of the hinge housing is smaller than a width of the first portion of the hinge housing, along a second direction perpendicular to the first direction and a folding axis of the first housing part and the second housing part.

8. The electronic device of claim 7,
wherein a center of an overall width of the hinge housing along the second direction is positioned within the first portion of the hinge housing.

9. The electronic device of claim 8, wherein:
the first housing part includes a seating surface that partially supports the display;
in the folded state of the first housing part and the second housing part, a virtual plane that includes the center of the hinge housing and is parallel to the seating surface of the first housing part is defined, and
in the folded state of the first housing part and the second housing part, the seating surface of the first housing part is positioned so as to be offset from the virtual plane in a direction of the second housing part.

10. The electronic device of any one of claims 4 to 9, wherein:
the side of the bracket defines a protrusion to which a first guide rail formed on the first rotating arm is movably coupled in order to guide rotation of the first rotating arm with respect to the side of the bracket; and
the another side of the bracket and the second portion of the hinge housing together define a second guide rail to which a protrusion formed on the second rotating arm is movably coupled in order to guide rotation of the second rotating arm with respect to the another side of the bracket.

11. The electronic device of any one of claims 1 to 10,
wherein the first hinge part of the hinge structure includes:
another link fixedly coupled to the first housing part; and
a first spiral arm including a first end portion rotatably coupled to the side of the bracket and a second end portion rotatably coupled to the other link,
wherein the second hinge part of the hinge structure includes:
a second spiral arm, including a first end portion rotatably coupled to the another side of the bracket and a second end portion fixedly coupled to the second housing part, and opposite to the first spiral arm,
wherein the display includes another portion supported by a first supporting surface of the first spiral arm and a second supporting surface of the second spiral arm in the unfolded state of the first housing part and the second housing part,
wherein the first supporting surface of the first spiral arm is inclined with respect to the first rotating arm and the second supporting surface of the second spiral arm in the folded state of the first housing part and the second housing part, and
wherein the second supporting surface of the second spiral arm is substantially parallel to the second housing part.

12. The electronic device of claim 11,
wherein the another portion of the display has an asymmetrical droplet shape that is more convex in a direction of the first spiral arm than in a direction of the second spiral arm, in the folded state of the first housing part and the second housing part.

13. The electronic device of claim 11 or claim 12,
wherein an area of the second supporting surface is wider than an area of the first supporting surface.

14. The electronic device of any one of claims 11 to 13,
wherein, in the unfolded state of the first housing part and the second housing part, a straight line connecting a rotation axis of the first end portion of the first spiral arm and a rotation axis of the first end portion of the second spiral arm is not parallel to the display.

15. The electronic device of any one of claims 11 to 14,
wherein the hinge structure includes:
a bar extending parallel to a folding axis of the first housing part and the second housing part; and
a spiral link slidably coupled to the bar,
wherein the spiral link includes:
a first side portion, in which a first spiral rail is formed, and which faces a direction of the first housing part; and
a second side portion, in which a second spiral rail is formed, opposite to the first side portion of the spiral link, and facing a direction of the second housing part,
wherein a first portion of the first end portion of the first spiral arm is rotatably coupled to the side of the bracket,
wherein a second portion of the first end portion of the first spiral arm is rotatably coupled to the first side portion of the spiral link so as to be rotatable along the first spiral rail,
wherein a first portion of the first end portion of the second spiral arm is rotatably coupled to the another side of the bracket,
wherein a second portion of the first end portion of the second spiral arm is rotatably coupled to the second side portion of the spiral link so as to be rotatable along the second spiral rail, and
wherein the spiral link is configured to slide along the bar while the first spiral arm rotates with respect to the first side portion of the spiral link and the second spiral arm rotates with respect to the second side portion of the spiral link.
